# EUROPÄISCHE PATENTSCHRIFT

(11) **EP 3 755 950 B1**
(45) Veröffentlichungstag und Bekanntmachung des Hinweises auf die Patenterteilung: **24.12.2025**
(21) Anmeldenummer: 19707746.4
(22) Anmeldetag: 20.02.2019
(51) Int. Cl.: F24D 13/02, H05B 3/06

(54) **HEIZMATTE FÜR EINE FLÄCHENHEIZUNG, FLÄCHENHEIZUNG ZUM HEIZEN EINES RAUMES EINES GEBÄUDES SOWIE VERFAHREN ZUR HERSTELLUNG EINER HEIZMATTE FÜR EINE FLÄCHENHEIZUNG**
HEATING MAT FOR A SURFACE HEATING SYSTEM, SURFACE HEATING SYSTEM FOR HEATING A ROOM OF A BUILDING AND METHOD FOR PRODUCING A HEATING MAT FOR A SURFACE HEATING SYSTEM
MAT CHAUFFANT POUR SYSTÈME DE CHAUFFAGE DE SURFACE, SYSTÈME DE CHAUFFAGE DE SURFACE POUR CHAUFFER UN ESPACE D'UN BÂTIMENT ET PROCÉDÉ DE FABRICATION D'UN MAT CHAUFFANT POUR UN SYSTÈME DE CHAUFFAGE DE SURFACE

(30) Priorität: 20.02.2018 DE 102018103789
(43) Veröffentlichungstag der Anmeldung: 30.12.2020
(73) Patentinhaber: ARDEX GmbH, 58453 Witten (DE)
(72) Erfinder: KOLLMANN, Philipp Karl, 8583 Edelschrott (AT); SCHREIBER, Emanuel, 58313 Herdecke (DE); SIEKSMEIER, Jörg, 45133 Essen (DE); SCHRÖDER, Marco, 59555 Lippstadt (DE)
(74) Vertreter: Bals & Vogel Patentanwälte PartGmbB
(86) Internationale Anmeldenummer: PCT/EP2019/054234
(87) Internationale Veröffentlichungsnummer: WO 2019/162335

(56) Entgegenhaltungen:
- EP-A1- 2 676 578
- EP-A2- 0 334 824
- EP-A2- 2 034 246
- WO-A1-00/62581
- DE-A1- 19 730 853
- DE-A1- 4 112 565
- DE-C1- 4 228 321
- DE-U1- 29 809 206

## Beschreibung

Die Erfindung betrifft eine Heizmatte für eine Flächenheizung, insbesondere zum Heizen eines Raumes eines Gebäudes, eine Flächenheizung zum Heizen eines Raumes eines Gebäudes sowie ein Verfahren zur Herstellung einer Heizmatte für eine Flächenheizung, insbesondere zum Heizen eines Raumes eines Gebäudes.

Heizungen für Gebäude sind aus dem Stand der Technik im Allgemeinen bekannt. Üblicherweise werden dabei Heizkörper an einer Wand eines Gebäudes angeordnet oder Rohrleitungen als Fußbodenheizung verlegt. Im Vergleich zu an der Wand angeordneten Heizkörpern haben Fußbodenheizungen beispielsweise den Vorteil, dass diese unterhalb eines Fußbodenbelages angeordnet werden können und somit außer Sicht für Personen sich befinden. Ferner kann bei der Verlegung der Fußbodenheizung der gesamte Raum oder im Wesentlichen der gesamte Raum über die Fläche beheizt werden, während einzelne Heizkörper an der Wand die Wärme in einem bestimmten Bereich konzentrieren.

Bei Fußbodenheizungen ist es ferner üblich, Rohre mäanderförmig innerhalb des Bodens zu verlegen, wobei beim Betrieb der Fußbodenheizung beispielsweise temperiertes Wasser durch die Rohre fließt, um die Wärme an den Raum abzugeben. Nachteilhaft bei derartigen wasserführenden Fußbodenheizungen ist es jedoch, dass die Montage der Fußbodenheizung im Boden aufwendig ist und eine Anpassung an bestimmte Geometrien des Raumes, wie z.B. Erker, komplexe Arbeitsschritte erfordert. Dabei müssen beispielsweise passend zugeschnittene Rohrstücke ausgewählt und jeweils miteinander fluiddicht verbunden werden.

Alternativ zu den wasserführenden Fußbodenheizungen ist es ferner bekannt, elektrische Fußbodenheizungen zu verwenden, wobei solche elektrischen Fußbodenheizungen bestromt werden und dadurch Abwärme produzieren, welche zum Heizen des Raumes genutzt wird. Dazu werden üblicherweise Kabel innerhalb des Raumes verlegt. Bei der Verlegung ist es jedoch häufig notwendig, dass der Monteur vor Ort die Kabel gleichmäßig verlegt, da es sonst beispielsweise zu Bereichen konzentrierter Wärmeabgabe und zu Bereichen mit geringerer Wärmeabgabe kommen kann. Somit ist ein hohes Maß an Geschick und Erfahrung für den Monteur notwendig, um ein derartiges Kabel im Raum anzuordnen. Insbesondere bei komplizierten Geometrien des Raumes können somit die Anforderungen an den Monteur steigen. Damit können gleichzeitig die Montagekosten für die Verlegung einer solchen Fußbodenheizung hoch sein.

Weiterhin sind Heizsysteme aus den Dokumenten DE 41 12 565 A1, DE 298 09 206 U1, DE 42 28 321 C1, EP 0 334 824 A2, DE 197 30 853 A1, EP 2 676 578 A1, WO 2000/62581 A1 und EP 2 034 246 A2 bekannt.

Es ist somit eine Aufgabe der vorliegenden Erfindung, voranstehende, aus dem Stand der Technik bekannte Nachteile zumindest teilweise zu beheben. Insbesondere ist es eine Aufgabe der vorliegenden Erfindung, in kostengünstiger Art und Weise eine Flächenheizung mit einfacher Montierbarkeit und vorzugsweise verbesserter Funktionalität bereitzustellen.

Voranstehende Aufgabe wird gelöst durch eine Heizmatte mit den Merkmalen des Anspruchs 1, eine Flächenheizung mit den Merkmalen des Anspruchs 24 sowie ein Verfahren zur Herstellung einer Heizmatte mit den Merkmalen des Anspruchs 25.

Weitere Merkmale und Details der Erfindung ergeben sich aus den Unteransprüchen, der Beschreibung und den Zeichnungen. Dabei gelten Merkmale und Details, die in Zusammenhang mit der erfindungsgemäßen Heizmatte beschrieben worden sind, selbstverständlich auch im Zusammenhang mit der erfindungsgemäßen Flächenheizung und/oder dem erfindungsgemäßen Verfahren und jeweils umgekehrt, so dass bezüglich der Offenbarung zu den einzelnen Erfindungsaspekten stets wechselseitig Bezug genommen wird bzw. werden kann.

Erfindungsgemäß weist die Heizmatte für eine Flächenheizung, insbesondere zum Heizen eines Raumes eines Gebäudes, eine flexible Basiseinheit auf. Die flexible Basiseinheit weist ferner ein erstes Trägerelement auf, welches eine flächige Erstreckung mit einer ersten Grundseite und einer zweiten Grundseite aufweist. Ferner weist die Basiseinheit zumindest ein elektrisches Heizmittel zur Abgabe von Wärme auf. Das elektrische Heizmittel ist dabei auf der ersten Grundseite des ersten Trägerelementes derart angeordnet, dass die Basiseinheit zur Ausgestaltung der Flächenheizung flächig verlegbar ist.

Vorzugsweise kann die Basiseinheit und/oder die Heizmatte plattenförmig ausgestaltet sein. Insbesondere kann die Heizmatte ferner vorteilhafterweise eine Grundfläche von kleiner 2m x 2m, vorzugsweise von kleiner 1,5m x 1,5m oder kleiner 1m x 1m, besonders bevorzugt von kleiner 1,1m x 0,8m oder kleiner 0,7m x 0,7m aufweisen. Vorzugsweise kann die Heizmatte in ein Begrenzungselement eines Raumes einbettbar sein. Die Flächenheizung kann insbesondere eine Fußbodenheizung für das Heizen des Raumes des Gebäudes umfassen. Zusätzlich oder alternativ kann vorgesehen sein, dass die Heizmatte teilweise oder vollständig in einer Wand des Raumes anordenbar ist, um die Wärme wandseitig abzugeben. Weiterhin ist es denkbar, dass die Basiseinheit eine quadratische Grundfläche aufweist. Dadurch kann die Handhabbarkeit verbessert und die Knickempfindlichkeit verringert sein.

Die Basiseinheit ist vorzugsweise als folienartiger, insbesondere feuchtigkeitsundurchlässiger, Verbund ausgebildet. Darunter, dass die Basiseinheit flexibel ist, kann verstanden werden, dass die Basiseinheit zumindest teilweise biegbar ist, ohne die Funktionalität der Heizmatte zu zerstören. Das erste Trägerelement kann vorzugsweise einen Grundkörper bilden, auf welchem das elektrische Heizmittel angeordnet wird. Dass das elektrische Heizmittel auf der ersten Grundseite des ersten Trägerelementes angeordnet ist, kann im Sinne der vorliegenden Erfindung derart verstanden werden, dass das Heizmittel direkt oder indirekt an dem ersten Trägerelement angeordnet, vorzugsweise befestigt, ist. Somit ist es beispielsweise denkbar, dass zwischen dem ersten Trägerelement und dem elektrischen Heizmittel weitere Komponenten der Heizmatte angeordnet sind und das elektrische Heizmittel lediglich mittelbar auf der ersten Grundseite vorgesehen ist. Die Bezeichnung 'auf der ersten Grundseite' bezieht sich somit insbesondere auf die Orientierung in Bezug auf das erste Trägerelement. Vorzugsweise kann das elektrische Heizmittel jedoch direkt an einer Oberfläche der ersten Grundseite des ersten Trägerelementes angeordnet sein. Insbesondere kann das erste Trägerelement eine Platine für das elektrische Heizmittel und/oder weitere Komponenten der Heizmatte bilden.

Dass die Basiseinheit zur Ausgestaltung der Flächenheizung flächig verlegbar ist, kann insbesondere im Sinne der vorliegenden Erfindung dahin gehend verstanden werden, dass zumindest das erste Trägerelement und das elektrische Heizmittel eine Montageeinheit bilden, welche insbesondere vor Montage auf der Baustelle, vormontiert sein kann. Somit können insbesondere das erste Trägerelement und das elektrische Heizmittel zusammen flächig verlegt werden. Unter der flächigen Verlegung kann insbesondere verstanden werden, dass die Basiseinheit auf einem Bauelement des Gebäudes und/oder des Raumes angeordnet werden kann, insbesondere so, dass die flächige Erstreckung des ersten Trägerelementes parallel oder im Wesentlichen parallel zu dem Bauelement des Raumes und/oder des Gebäudes sich erstreckt. Vorzugsweise können mehrere Heizmatten nebeneinander verlegt auf dem Bauelement des Gebäudes werden, um die Flächenheizung zu bilden.

Vorzugsweise kann die Heizleistung des elektrischen Heizmittels bis zu 1 kW/m², vorzugsweise bis zu 300 W/m² oder bis zu 500 W/m², besonders bevorzugt zwischen 150 und 300 W/m² oder 120 bis 200 W/m², liegen. Insbesondere um die Flexibilität und einfache Verlegbarkeit der flexiblen Basiseinheit zu begünstigen, kann das erste Trägerelement eine Dicke von bis zu 2 mm, vorzugsweise von bis zu 1 mm, besonders bevorzugt von ungefähr 0,5 mm, aufweisen. Unter der Angabe 'ungefähr' kann im Sinne der vorliegenden Erfindung eine Abweichung im Rahmen der üblichen Toleranzen verstanden werden. Weiterhin ist es denkbar, dass die Basiseinheit ein erstes und ein zweites Trägerelement aufweist, wobei jedes der Trägerelemente vorzugsweise eine Dicke von kleiner oder gleich 1 mm, vorzugsweise von kleiner oder gleich 0,5 mm, besonders bevorzugt von kleiner oder gleich 0,1 mm aufweisen.

Somit kann durch die erfindungsgemäße Heizmatte in einfacher Art und Weise zumindest ein Teil einer Flächenheizung ausgebildet werden. Dazu kann die Basiseinheit als Montageeinheit flächig verlegt werden, wobei insbesondere das erste Trägerelement und das elektrische Heizmittel vormontiert sein können. Dadurch vereinfacht sich die Montage der Flächenheizung deutlich, da beispielsweise besonders vorteilhafte Strukturen des Heizmittels bereits mitsamt der Basiseinheit vorgegeben sein können und der Monteur die Basiseinheit lediglich an die Gegebenheiten des Raumes bzw. des Gebäudes anpassen kann. Darüber hinaus kann die Heizmatte in einer separaten Produktionsumgebung vorgefertigt werden, so dass die Heizmatte als Ganzes zur jeweiligen Baustelle des Gebäudes angeliefert werden kann. Dadurch ergeben sich geringere Montagezeiten vor Ort, so dass die Kosten für die Flächenheizung bzw. der Installation der Flächenheizung sinken können. Insbesondere kann die Heizmatte in einer Serienfertigung herstellbar sein.

Im Rahmen der Erfindung ist ferner denkbar, dass das elektrische Heizmittel stoffschlüssig mit dem ersten Trägerelement verbunden ist. Insbesondere kann dabei das elektrische Heizmittel direkt oder indirekt auf das erste Trägerelement, vorzugsweise durch einen Siebdruck, aufgedruckt sein. Dadurch kann sich insbesondere eine Serienfertigung der Heizmatte weiter vereinfachen. Die stoffschlüssige Verbindung des elektrischen Heizmittels kann mittelbar oder unmittelbar mit dem ersten Trägerelement vorgesehen sein. Dazu kann das elektrische Heizmittel direkt mit dem ersten Trägerelement verbunden sein oder es können zwischenliegende Komponenten, insbesondere Schichte, vorgesehen sein, welche ebenfalls stoffschlüssig mit dem ersten Trägerelement verbunden sind. Durch eine stoffschlüssige Verbindung von elektrischem Heizmittel und Trägerelement kann ferner eine hohe Festigkeit der Basiseinheit erreicht werden, so dass das elektrische Heizmittel und das erste Trägerelement auch auf der Baustelle nicht ohne Weiteres getrennt werden können. Durch einen Druck des elektrischen Heizmittels auf das erste Trägerelement kann das elektrische Heizmittel ferner präzise auf dem ersten Trägerelement positioniert werden und auch die Geometrie des elektrischen Heizmittels kann präzise vorgegeben sein. Ein Siebdruck bietet hierzu eine günstige Möglichkeit, leitfähige Strukturen auf dem ersten Trägerelement vorzusehen. Insbesondere kann das elektrische Heizmittel somit ein druckfähiges Material aufweisen. Zusätzlich oder alternativ kann das elektrische Heizmittel form- und/oder kraftschlüssig mit dem ersten Trägerelement verbunden sein.

Es ist bei einer erfindungsgemäßen Heizmatte ferner denkbar, dass das elektrische Heizmittel zumindest ein Widerstandselement aufweist, welches sich auf der ersten Grundseite des ersten Trägerelementes erstreckt. Vorzugsweise kann dabei das Widerstandselement flächig, besonders bevorzugt plattenartig, ausgestaltet sein. Die Heizleistung des elektrischen Heizmittels kann somit durch das Widerstandselement bereitgestellt werden, wobei je nach elektrischem Widerstand des Widerstandselementes die Heizleistung variieren kann. Durch eine flächige, vorzugsweise plattenartige, Ausgestaltung des Widerstandselementes kann ferner eine konstante Heizleistung über einen großen Bereich der Heizmatte erreicht werden, wobei gleichzeitig eine Dicke des Widerstandselementes, d. h. insbesondere eine Erstreckung in senkrechter Richtung zur ersten Grundseite des ersten Trägerelementes, gering gehalten werden kann. Dies wiederum begünstigt die Anordnung der Heizmatte beispielsweise in einem Fußboden des Raumes, so dass der Fußboden aufgrund der Heizmatte nicht oder nur geringfügig erhöht sein kann. Insbesondere ist ferner begünstigt, dass das elektrische Heizmittel direkt auf dem ersten Trägerelement angeordnet sein kann. Dadurch kann die Herstellung der Heizmatte deutlich vereinfacht sein.

Bei einer erfindungsgemäßen Heizmatte ist es ferner denkbar, dass das Widerstandselement eine ausgehärtete Karbonpaste aufweist. Vorzugsweise kann dabei die Karbonpaste einen Kohlenstoff und/oder einen Füllstoff aufweisen. Das Verhältnis von Kohlenstoff zu Füllstoff kann vorzugsweise zwischen 25 und 75 Gew.-% der Karbonpaste betragen. Die Karbonpaste kann insbesondere einen gemahlenen Kohlenstoff in Pulverform aufweisen. Insbesondere ist die Karbonpaste in einfacher Art und Weise auf dem ersten Trägerelement aufdruckbar, so dass eine stoffschlüssige Verbindung, beispielsweise von dem elektrischem Heizmittel und dem ersten Trägerelement, einfach herzustellen ist. Insbesondere eignet sich eine derartige Karbonpaste auch gut für einen Siebdruck und zur Haftung auf Kunststoffen. Somit kann das erste Trägerelement aus einem günstigen Material hergestellt sein und gleichzeitig kann eine stoffschlüssige Verbindung mit dem Widerstandselement begünstigt sein. Der Füllstoff kann dabei dazu dienen, die Heizleistung der Karbonpaste bzw. des Widerstandselements einzustellen. Insbesondere kann es bei der Herstellung der Karbonpaste, z. B. in Abhängigkeit von einem Zulieferer bzw. einer Herstellung des Kohlenstoffs, dazu kommen, dass die Heizleistung des Kohlenstoffs variiert. Um dennoch eine vorgegebene Heizleistung innerhalb einer vorgegebenen Toleranz zu erreichen, kann der Füllstoff beigemischt werden, um die Leitfähigkeit der Karbonpaste zu senken oder zu erhöhen.

Vorteilhafterweise kann bei einer erfindungsgemäßen Heizmatte die Basiseinheit biegbar sein, insbesondere wobei ein erreichbarer Biegewinkel der Basiseinheit größer oder gleich 10°, vorzugsweise größer oder gleich 45°, besonders bevorzugt größer oder gleich 90°, ist. Unter dem erreichbaren Biegewinkel kann insbesondere ein zulässiger Biegewinkel verstanden werden, welcher die Funktion der Heizmatte nicht zerstört oder wesentlich beeinträchtigt. Dabei kann vorgesehen sein, dass die Basiseinheit bei der Biegung einen Biegeradius aufweist. Insbesondere ist somit ein erreichbarer Biegewinkel von einem Abknicken der Basiseinheit zu unterscheiden. Durch die hohe Flexibilität der Basiseinheit und durch die Biegbarkeit können somit eine einfache Montage und eine hohe Robustheit der Heizmatte während des Transports und der Montage gegeben sein. So kann es beispielsweise nicht notwendig sein, die Heizmatte mit besonderer Vorsicht mit mehreren Leuten zu tragen. Insbesondere kann beispielsweise auf der Baustelle ein Stapel aus Heizmatten angeliefert werden und eine Heizmatte von einer Person von dem Stapel entnommen werden.

Im Rahmen der Erfindung ist ferner vorgesehen, dass die Heizmatte ein Heizmodul bildet, welches zusammen mit weiteren Heizmodulen zur Ausgestaltung der Flächenheizung verbindbar ist. Unter einem Heizmodul kann somit eine Montageeinheit verstanden werden, welche mit weiteren Montageeinheiten die Flächenheizung bildet. Somit kann die Heizmatte lediglich einen Teil der Flächenheizung bilden, wobei mehrere Heizmatten, insbesondere in Kombination mit weiteren Komponenten, die Flächenheizung ausbilden können. So ist es beispielsweise denkbar, dass jedes Heizmodul eine manuell handhabbare Dimensionierung aufweist und somit auch auf der Baustelle komfortabel gehandhabt werden kann. Je nach Geometrie des Raumes bietet die Ausgestaltung als Heizmodul ferner den Vorteil, dass die Flächenheizung an eine Größe des Raumes durch eine Variation der Anzahl der verbauten Heizmodule gesteuert werden kann.

Im Rahmen der Erfindung ist ferner vorgesehen, dass ein Erfassungsmittel zur Detektion eines Ereignisses vorgesehen ist, wobei die Basiseinheit das Erfassungsmittel aufweist. Das Ereignis umfasst eine Aktivität einer Person. Somit kann zusätzlich zur Heizfunktionalität der Heizmatte die Funktionalität der Heizmatte dahin gehend erweitert sein, dass gleichzeitig eine Sensorfunktion zur Verfügung gestellt wird, durch welche das Ereignis erkennbar sein kann. So ist es beispielsweise denkbar, dass durch die Detektion einer Person eine Überwachungsfunktionalität der Heizmatte bereitgestellt wird, welche bestimmt, ob eine Person sich im Raum befindet und/oder sich im Raum, insbesondere auf eine bestimmte Art und Weise, bewegt.

Somit kann die Heizmatte beispielsweise dazu eingesetzt werden, einen Raum dahin gehend zu überwachen, ob dieser von einer Person betreten wird, wenn sich beispielsweise der Bewohner des Raumes in einem Urlaub befindet. Ferner ist es denkbar, dass beispielsweise die Heizmatte in einem Gesundheitsbereich, beispielsweise in einem Altenheim, eingesetzt wird, um zu detektieren, ob sich ein Bewohner des Raumes bewegt und um gegebenenfalls Gegenmaßnahmen einzuleiten, wenn sich der Bewohner über längere Zeit nicht bewegt.

Im Rahmen der Erfindung kann ferner vorgesehen sein, dass das Erfassungsmittel auf der zweiten Grundseite des ersten und/oder zweiten Trägerelementes derart angeordnet ist, dass die Basiseinheit zur Ausgestaltung einer Flächensensorik flächig verlegbar ist. Somit kann neben der Flächenheizung auch eine Flächensensorik durch die Heizmatte bereitstellbar sein und gemeinsam ausgebildet werden, wenn die Basiseinheit verlegt wird. Damit kann beispielsweise der Raum über eine größere, insbesondere über die gesamte Fläche zur Detektion des Ereignisses überwacht werden. Insbesondere kann die Heizmatte dazu ferner ein Sensormodul bilden, welches zusammen mit weiteren Sensormodulen die Flächensensorik bildet. Die Anordnung des Erfassungsmittels auf der zweiten Grundseite kann ferner mittelbar oder unmittelbar auf dem ersten und/oder zweiten Trägerelement vorgesehen sein. Insbesondere kann das Erfassungsmittel somit gemeinsam mit dem elektrischen Heizmittel und dem ersten und/oder zweiten Trägerelement flächig verlegbar sein. Damit kann das Erfassungsmittel die gleichen Vorteile aufweisen, wie sie bereits mit Bezug auf das elektrische Heizmittel bzw. die Basiseinheit hinsichtlich einer einfachen Montage erläutert worden sind, wobei gleichzeitig eine erhöhte Funktionalität der Heizmatte durch das Erfassungsmittel gewährleistet sein kann.

Vorzugsweise kann bei einer erfindungsgemäßen Heizmatte vorgesehen sein, dass die Basiseinheit ein zweites Trägerelement aufweist, an welchem das Erfassungsmittel angeordnet ist, insbesondere wobei das Heizmittel und/oder das Erfassungsmittel zwischen dem ersten und dem zweiten Trägerelement angeordnet ist. Dadurch können das Heizmittel und das Erfassungsmittel voneinander unabhängig und/oder getrennt voneinander angeordnet sein. Durch die Anordnung des Heizmittels und/oder des Erfassungsmittels zwischen dem ersten und zweiten Trägerelement ist das Heizmittel und/oder das Erfassungsmittel zumindest teilweise durch das erste und zweite Trägerelement geschützt. Somit kann durch die Trägerelemente zum einen jeweils eine Basis geschaffen sein, auf welche das Heizmittel und das Erfassungsmittel aufgebracht, vorzugsweise aufgedruckt, sein können. Zum anderen kann dadurch gleichzeitig ein Schutz gegenüber Umwelteinflüssen gewährleistet sein. Vorzugsweise ist das Erfassungsmittel auf einer zweiten Grundseite des zweiten Trägerelementes angeordnet, wobei die zweite Grundseite des zweiten Trägerelementes und die erste Grundseite des ersten Trägerelementes einander zugewandt sind. Dadurch können das Heizmittel und das Erfassungsmittel zwischen dem ersten und zweiten Trägerelement angeordnet sein.

Im Rahmen der Erfindung kann ferner vorgesehen sein, dass zwischen dem ersten und zweiten Trägerelement ein Zwischenelement angeordnet ist, durch welches das erste Trägerelement vom zweiten Trägerelement zumindest abschnittsweise, vorzugsweise vollständig, beabstandet ist. Durch das Zwischenelement kann das Heizmittel vom Erfassungsmittel gegeneinander elektrisch isoliert und/oder voneinander räumlich getrennt sein. Weiterhin können Störgrößen zwischen Heizmittel und Erfassungsmittel reduziert sein oder vermieden werden. Insbesondere kann somit die Genauigkeit der Erfassung des Ereignisses durch das Erfassungsmittel verbessert sein, wenn das Heizmittel vom Erfassungsmittel beabstandet ist. Vorzugsweise ist das Zwischenelement als Schalldämpfungsschicht ausgebildet. Dadurch kann das Zwischenelement mehrere Funktionen übernehmen. Zum einen kann ein Trittschall durch das Zwischenelement abgedämpft werden. Zum anderen kann der Abstand zwischen Heizmittel und Erfassungsmittel durch das Zwischenelement realisiert sein. Vorzugsweise kann zwischen dem Zwischenelement und dem ersten Trägerelement und/oder zwischen dem Zwischenelement und dem zweiten Trägerelement eine Klebeschicht angeordnet sein. Weiterhin ist es denkbar, dass das Zwischenelement als Dämmschicht zur Wärmedämmung ausgebildet ist.

Es ist ferner denkbar, dass bei einer erfindungsgemäßen Heizmatte das Erfassungsmittel stoffschlüssig mit dem ersten und/oder zweiten Trägerelement verbunden ist, insbesondere wobei das Erfassungsmittel auf das erste und/oder zweite Trägerelement, vorzugsweise durch einen Siebdruck, aufgedruckt ist. Somit kann auch bei Vorhandensein des Erfassungsmittels eine Serienfertigung der Heizmatte bei erhöhter Funktionalität begünstigt sein. Gleichzeitig bietet eine stoffschlüssige Verbindung von erstem und/oder zweitem Trägerelement und Erfassungsmittel eine einfache Möglichkeit, eine sichere Verbindung zu gewährleisten. Alternativ zu einem Aufdruck kann das Erfassungsmittel ferner auf das erste und/oder zweite Trägerelement geschweißt, geklebt, oder dergleichen sein, um das Erfassungsmittel stoffschlüssig mit dem ersten und/oder zweiten Trägerelement zu verbinden. Zusätzlich oder alternativ zu einer stoffschlüssigen Verbindung ist es ferner denkbar, dass das Erfassungsmittel form- und/oder kraftschlüssig auf dem ersten und/oder zweiten Trägerelement befestigt wird, wobei beispielsweise ein Draht des Erfassungsmittels mit dem ersten und/oder zweiten Trägerelement verwebt sein kann oder das Erfassungsmittel mit dem ersten und/oder zweiten Trägerelement vernietet sein kann.

Vorteilhafterweise kann bei einer erfindungsgemäßen Heizmatte vorgesehen sein, dass das Erfassungsmittel zumindest zwei, vorzugsweise vier, Sensorelemente mit jeweils einem Erfassungsbereich aufweist. Insbesondere können sich die Erfassungsbereiche zumindest bereichsweise unterscheiden. Ferner ist es denkbar, dass das Erfassungsmittel weitere Sensorelemente mit weiteren Erfassungsbereichen aufweist. Durch die zumindest Erfassungsbereiche ist es möglich, die Genauigkeit der Detektion des Ereignisses und/oder die Spanne der möglichen erfassbaren Ereignisse zu vergrößern. So ist es denkbar, dass das Ereignis eine Änderung in den Erfassungsbereichen zeitlich erfasst, so dass auf eine Bewegung einer Person geschlossen werden kann. Ferner ist es denkbar, dass sich eine Person über der Heizmatte in eine bestimmte Richtung bewegt, was durch die Erfassungsbereiche detektiert werden kann, wenn die Person einen Erfassungsbereich verlässt und in einen anderen Erfassungsbereich eintritt. Zusätzlich oder alternativ können die Erfassungsbereiche dazu genutzt werden, ein Signal der Detektion des Ereignisses gegenseitig zu validieren, um Messfehler zu reduzieren. Weiterhin ist es beispielsweise denkbar, dass in jeweils den Erfassungsbereichen das Ereignis detektiert wird und dadurch auf das tatsächliche Vorhandensein des Ereignisses geschlossen werden kann. Darüber hinaus kann durch die zumindest zwei Sensorelemente sichergestellt sein, dass die Heizmatte beispielsweise zur Anpassung an eine Geometrie des Raumes zuschneidbar sein kann, ohne die Funktion des Erfassungsmittels vollständig zu verlieren. So kann vorgesehen sein, dass eines der Sensorelemente auch dann noch funktioniert, wenn ein anderes Sensorelement von der Heizmatte abgetrennt wird, um beispielsweise eine Ecke eines Raumes oder eine Begrenzung des Raumes zu berücksichtigen. Vier Sensorelemente haben sich als besonders vorteilhaft herausgestellt, da diese in einfacher Art und Weise mit einer zentralen Auswerteeinheit verbunden werden können. Ferner wirkt sich eine Aufteilung in vier Sensorelemente positiv auf die Handhabbarkeit der Heizmatte in Bezug auf die Größe sowie auf die Zuschneidbarkeit aus. Die Sensorelemente können vorzugsweise eine Grundfläche von größer oder gleich 200 mm x 200 mm, vorzugsweise von größer oder gleich 300 x 300 mm aufweisen.

Im Rahmen der Erfindung weist ferner das Erfassungsmittel zumindest eine Elektrode zur kapazitiven Detektion des Ereignisses auf. Somit kann durch das Erfassungsmittel zumindest ein Teil einer Kapazität gebildet sein, insbesondere ein Teil eines Plattenkondensators. Die Elektrode kann dabei zusammen mit einem Körperteil einer Person wirken, wobei das Körperteil der Person die Gegenelektrode zur Herstellung der Kapazität bilden kann. Eine Änderung der Kapazität kann somit auf eine Bewegung der Person schließen lassen. Durch eine kapazitive Detektion des Ereignisses ist es möglich, auf einfache Art und Weise, beispielsweise bei einer Fußbodenheizung durch einen Bodenbelag hindurch die Detektion durchzuführen. Somit kann die Detektion auf Basis eines elektrischen Feldes erfolgen, welches insbesondere durch zumindest ein Bauelement des Gebäudes hindurchwirken kann. Insbesondere ist es ferner denkbar, dass zur bestimmungsgemäßen Verwendung der Heizmatte das elektrische Heizmittel zur Ausbildung der Flächenheizung bodenseitig und das Erfassungsmittel oberhalb des elektrischen Heizmittels anordbar ist. Vorzugsweise kann das elektrische Heizmittel die Wärme durch das Erfassungsmittel hindurch oder am Erfassungsmittel vorbei abgeben, so dass in vorteilhafter Art und Weise beide Funktionalitäten der Heizmatte auch in einem Lagenverbund der Heizmatte gewährleistet werden können. Darüber hinaus kann die kapazitive Detektion eine energiearme Möglichkeit zur Überwachung zumindest eines Teils des Raumes ermöglichen. Jedem Sensorelement ist zumindest eine Elektrode zugeordnet.

Bei einer erfindungsgemäßen Heizmatte kann ferner vorgesehen sein, dass das Erfassungsmittel zumindest zwei Elektrode aufweist, durch welche gemeinsam ein elektrisches Feld, insbesondere zur kapazitiven Detektion des Ereignisses, generierbar ist. Somit ist es beispielsweise nicht notwendig, dass das Körperteil einer Person, welche detektiert werden soll, einen Teil der Kapazität ausbildet. Vielmehr kann bereits ein elektrisches Feld, insbesondere jeweils durch die Sensorelemente, generierbar sein, wobei der Aufenthalt einer Person in dem elektrischen Feld eine Änderung des elektrischen Feldes hervorrufen kann. Dadurch kann die Genauigkeit des Erfassungsmittels zur Detektion weiter gesteigert sein. Ferner kann dadurch das Erfassungsmittel unempfindlicher gegenüber Störwirkungen weiterer Bauelemente des Gebäudes, wie beispielsweise eines Funktionsbelages und/oder eines Sichtbelages des Raumes und/oder eines Fußbodens sein. Insbesondere können jedem Sensorelement zumindest zwei Elektroden zugeordnet sein.

Weiterhin ist es denkbar, dass das Erfassungsmittel eine Elektrode aufweist, die als Schirmelektrode zur Begrenzung eines elektrischen Feldes ausgebildet ist. Insbesondere kann eine der beiden Elektroden, durch welche gemeinsam das elektrische Feld generierbar ist, als Schirmelektrode ausgebildet sein. Durch die Schirmelektrode kann das elektrische Feld nach außen abgeschirmt sein und sich zumindest im Wesentlichen innerhalb der Begrenzung der Schirmelektrode ausbreiten und/oder zumindest im Wesentlichen durch die Begrenzung der Schirmelektrode gegenüber äußeren Einflüssen geschützt sein. Somit kann die Genauigkeit der insbesondere kapazitiven Messung durch das Erfassungsmittel verbessert sein. Vorzugsweise kann die Schirmelektrode an einem Rand des Erfassungsmittels und/oder um mehrere Elektroden, insbesondere um jedes der Sensorelemente, zumindest im Wesentlichen, insbesondere vollständig, umlaufend ausgebildet sein. Dadurch kann eine vorteilhafte Abschirmung des Erfassungsmittels und/oder jedes der Erfassungsbereiche realisiert sein.

Bei einer erfindungsgemäßen Heizmatte kann ferner vorgesehen sein, dass das erste und/oder zweite Trägerelement einen Kunststoff, vorzugsweise einen thermoplastischen Kunststoff, besonders bevorzugt ein Polyester, aufweist oder aus einem Kunststoff, vorzugsweise einem thermoplastischen Kunststoff, besonders bevorzugt einem Polyester, besteht. Wie bereits zuvor beschrieben, bietet ein Kunststoff eine einfache und kostengünstige Möglichkeit, einen stoffschlüssigen Verbund mit dem Widerstandselement des elektrischen Heizmittels bereitzustellen. Insbesondere kann das erste und/oder zweite Trägerelement ein Polyethylenterephthalat (PET) aufweisen oder aus einem Polyethylenterephthalat (PET) bestehen. Somit kann das erste und/oder zweite Trägerelement beispielsweise in einfacher Art und Weise in Form einer Folie hergestellt werden. Dies kann sich wiederum positiv auf eine einfache Serienproduktion auswirken, da das erste und/oder zweite Trägerelement beispielsweise als Bandmaterial hergestellt werden kann und je nach Dimensionierung der Heizmatte zugeschnitten werden kann. Darüber hinaus bietet ein Kunststoff eine gute Beständigkeit gegenüber Umweltbedingungen, insbesondere gegenüber Korrosion oder dergleichen. Somit kann durch die Ausbildung des ersten und/oder zweiten Trägerelementes mittels Kunststoff gleichzeitig eine chemische Resistenz des ersten und/oder zweiten Trägerelementes und somit zumindest teilweise der Basiseinheit gegenüber Baustoffen, zum Beispiel eines Fußbodens des Raumes, gegeben sein. Insbesondere können das erste und zweite Trägerelement materialeinheitlich sein.

Im Rahmen der Erfindung kann ferner vorgesehen sein, dass ein Temperatursensor zum Kalibrieren des elektrischen Heizmittels vorgesehen ist. Vorzugsweise kann der Temperatursensor auf oder neben der Basiseinheit angeordnet sein. Durch den Temperatursensor kann beispielsweise bei Inbetriebnahme der Heizmatte das elektrische Heizmittel kalibriert werden, wobei die Heizleistung an die Umgebungsbedingung angepasst sein kann. Insbesondere kann somit eine Referenztemperatur gesetzt werden, welche das elektrische Heizmittel erreichen soll, um eine bestimmte der Referenztemperatur zugeordnete Raumtemperatur zu erreichen. Ferner kann der Temperatursensor auch im Betrieb der Heizmatte dazu eingesetzt werden, ein Justieren des elektrischen Heizmittels vorzunehmen. So kann beispielsweise je nach aktueller Temperatur vorgesehen sein, dass das elektrische Heizmittel mit mehr oder weniger Leistung versorgt wird. Der Temperatursensor kann vorzugsweise ein Thermocouple oder einen NTC-Widerstand umfassen. Somit kann der Temperatursensor klein ausgebildet sein, um einen Bauraumbedarf der Heizmatte gering zu halten. Ferner ist es denkbar, dass der Temperatursensor in einem Unterputzgerät angeordnet ist, in welchem auch beispielsweise eine Steuereinheit angeordnet sein kann. Somit kann ein zentraler Temperatursensor für die Flächenheizung vorgesehen sein, wobei der Temperatursensor für die Heizmatte, und vorzugsweise für weitere Heizmatten, vorgesehen sein kann. Vorzugsweise kann der Temperatursensor Teil einer dezentralen Auswerteeinheit der Heizmatte sein.

Bei einer erfindungsgemäßen Heizmatte ist es ferner denkbar, dass, insbesondere auf der ersten und/oder zweiten Grundseite des ersten und/oder zweiten Trägerelementes, an der Basiseinheit eine Schalldämpfungsschicht angeordnet ist. Die Schalldämpfungsschicht kann insbesondere dazu dienen, einen Trittschall abzudämpfen. Bei Vorhandensein eines Erfassungsmittels können Schallbrücken der Sensorelemente durch die Schalldämpfungsschicht reduziert oder vermieden werden. Unter einem Trittschall kann ein Schall verstanden werden, welcher durch die Bewegung eines Menschen auf einem Fußboden entstehen kann. Durch die Schalldämpfungsschicht kann insbesondere dieser Schall abgedämpft werden. Die Schalldämpfungsschicht kann eine Faserplatte, einen Schaumstoff und/oder ein Vlies aufweisen. Somit kann mittels der Heizmatte gleichzeitig eine Funktionalität des Fußbodens gewährleistet werden, durch welche zumindest ein Teil eines Fußbodens hinsichtlich eines Schalls entkoppelt wird. Dies kann sich positiv auf die Trittschallwahrnehmung einer Person auf dem Fußboden auswirken. Vorzugsweise kann die Schalldämpfungsschicht dazu auf der Basiseinheit, insbesondere direkt auf der Basiseinheit, angeordnet sein.

Im Rahmen der Erfindung kann ferner vorgesehen sein, dass, insbesondere auf der ersten Grundseite des ersten Trägerelementes und/oder am zweiten Trägerelement, eine Abdichtungsschicht an der Basiseinheit angeordnet ist. Vorzugsweise kann dabei die Abdichtungsschicht zumindest eine Faserschicht aufweisen. Vorzugsweise kann die Abdichtungsschicht sich flächig über die gesamte oder im Wesentlichen über die gesamte Basiseinheit erstrecken. Unter 'im Wesentlichen' kann dabei verstanden werden, dass lediglich einige Randbereiche von der Abdichtungsschicht frei sind, um eine Verbindung, beispielsweise mit weiteren Heizmatten, zu gewährleisten. Die Abdichtungsschicht dient vorzugsweise dazu, dass eine Feuchtigkeit aus dem Raum nicht oder zumindest reduziert zur Basiseinheit gelangt, um die elektrischen Komponenten der Basiseinheit vor der Feuchtigkeit und/oder vor einer möglichen Korrosion zu schützen. Dies kann insbesondere von Vorteil sein, wenn beispielsweise die Heizmatte in einem Feuchtraum, wie einem Badezimmer, verbaut werden soll. Die Abdichtungsschicht und/oder die Schalldämpfungsschicht können ebenfalls vorgefertigt auf der Basiseinheit angeordnet sein und gemeinsam mit der Basiseinheit an einer Baustelle angeliefert werden. Somit kann auf der Baustelle auch hier weiterer Montageaufwand entfallen und/oder eine Serienfertigung, insbesondere abseits der Baustelle, begünstigt sein.

Vorzugsweise kann die Abdichtungsschicht bei einer erfindungsgemäßen Heizmatte einen Vliesstoff aufweisen. Der Vliesstoff kann günstig in der Herstellung sein und gleichzeitig eine hohe Abdichtungsfunktionalität bei guter Kompatibilität mit weiteren umgebenden Werkstoffen aufweisen. Insbesondere kann der Vliesstoff ferner gleichzeitig einen Trittschall abdämpfen, so dass bei einer Verwendung der Heizmatte in einer Fußbodenheizung sich weitere Vorteile ergeben können. Der Vliesstoff kann ferner sowohl baustellenseitig als auch abseits der Baustelle gut verarbeitbar sein.

Im Rahmen der Erfindung ist ferner denkbar, dass die Abdichtungsschicht und/oder die Schalldämpfungsschicht mit einer Klebeschicht an der Basiseinheit befestigt ist. Vorzugsweise können sowohl die Abdichtungsschicht als auch die Schalldämpfungsschicht mit jeweils einer Klebeschicht an der Basiseinheit befestigt sein. Die Klebeschicht kann insbesondere ein doppelseitiges Klebeband umfassen. Durch die Klebeschicht kann in einfacher Art und Weise eine Befestigung der Abdichtungsschicht und/oder der Schalldämpfungsschicht an der Basiseinheit gewährleistet werden, wobei gleichzeitig eine Serienfertigung begünstigt sein kann. Insbesondere in Kombination mit einem doppelseitigen Klebeband ergibt sich somit eine einfache Montagemöglichkeit der Abdichtungsschicht und/oder der Schalldämpfungsschicht an der Basiseinheit. Gleichzeitig kann durch die Klebeschicht beispielsweise in einem Randbereich ermöglicht werden, dass zwei benachbarte Heizmatten bei der Ausgestaltung der Flächenheizung miteinander auf einfache Art und Weise verbunden werden können, ohne dass weitere Hilfsmittel notwendig wären.

Bei einer erfindungsgemäßen Heizmatte ist es ferner denkbar, dass das elektrische Heizmittel zumindest bereichsweise durch eine erste elektrisch isolierende Schutzschicht und/oder das Erfassungsmittel zumindest bereichsweise durch eine zweite elektrisch isolierende Schutzschicht überdeckt ist. Insbesondere kann die erste und/oder zweite elektrisch isolierende Schutzschicht Teil der Basiseinheit sein. Somit ist insbesondere eine einfache Herstellung der Basiseinheit in Serie möglich, wenn beispielsweise das elektrische Heizmittel und/oder das Erfassungsmittel auf das erste Trägerelement aufgedruckt wird und anschließend mit einer elektrisch isolierenden Schutzschicht überzogen wird. Die erste und/oder zweite elektrisch isolierende Schutzschicht kann vorzugsweise ein Polymer, insbesondere einen Fotolack, umfassen. Insbesondere kann die erste und/oder zweite elektrisch isolierende Schutzschicht auf das erste Trägerelement und/oder das Heizmittel und/oder das Erfassungsmittel aufgedruckt sein, um eine Schutzwirkung zu entfalten. Durch eine Verwendung eines Fotolacks für die erste und/oder zweite elektrisch isolierende Schutzschicht kann die Herstellung der Heizmatte beispielsweise insofern vereinfacht sein, dass der Fotolack in flüssiger Form aufgebracht und durch, insbesondere ultraviolette, Belichtung ausgehärtet ist. Insbesondere kann es sich somit um einen Negativlack bei dem Fotolack handeln.

Im Rahmen der Erfindung ist es ferner denkbar, dass die Basiseinheit zumindest einen elektrischen Anschluss, insbesondere zum Anschluss an eine Energiequelle und/oder an eine Steuereinheit, aufweist. Vorzugsweise kann dabei der elektrische Anschluss ein Verbindungsmittel zum reversiblen Verbinden des elektrischen Heizmittels und/oder des Erfassungsmittels mit der Energiequelle und/oder der Steuereinheit aufweisen. Durch den elektrischen Anschluss kann in einfacher Art und Weise eine Schnittstelle zur Verfügung gestellt sein, durch welche die Heizmatte an eine Energiequelle und/oder eine Steuereinheit anbindbar sein kann. Der Anschluss an die Energiequelle und/oder an die Steuereinheit kann dabei mittelbar vorgesehen sein, wobei beispielsweise weitere Heizmatten dazwischenschaltbar sein können. Für eine verbesserte elektrische Kontaktierung kann das Verbindungsmittel vorzugsweise durch einen elektrisch leitfähigen Klebstoff mit der Basiseinheit verbunden sein. Das reversible Verbinden des elektrischen Heizmittels mit der Energiequelle und/oder der Steuereinheit kann die Montage der Heizmatte zur Ausgestaltung der Flächenheizung weiter vereinfachen. So kann der elektrische Anschluss, beispielsweise einen Druckknopf und/oder eine Öse aufweisen, um die reversible Verbindung des elektrischen Heizmittels mit der Energiequelle und/oder der Steuereinheit zu gewährleisten. Insbesondere ist durch die reversible Verbindung gleichzeitig ermöglicht, dass beispielsweise bei einer Fehlmontage ein einfaches Lösen, insbesondere ein zerstörungsfreies Lösen, ermöglicht sein kann, was die Montage der Flächenheizung insgesamt weiter vereinfachen kann. Weiterhin ist es denkbar, dass das Verbindungsmittel einen, insbesondere offenliegenden, elektrischen Kontakt an der Basiseinheit aufweist.

Ferner kann bei einer erfindungsgemäßen Heizmatte vorgesehen sein, dass der elektrische Anschluss eine Verbindungsschnittstelle zum Verbinden des elektrischen Heizmittels und/oder des Erfassungsmittels mit einer Verbindungseinheit zum Verbinden der Verbindungsschnittstelle mit einer Gegenverbindungsschnittstelle aufweist, insbesondere wobei die Verbindungsschnittstelle zumindest ein Ausrichtmittel umfasst, durch welches eine Fehlstellung der Verbindungseinheit verhinderbar ist. Das Ausrichtmittel kann Öffnungen und/oder Vorsprünge umfassen, die mit einer Positionierhilfe der Verbindungseinheit korrespondieren. Die Verbindungseinheit kann insbesondere als eine Zusatzbaugruppe bereitgestellt sein, die erst bei der Montage der Flächenheizung hinzugefügt wird. Durch die Verbindungseinheit kann eine einfache, baustellengerechte Verbindungsmöglichkeit geschaffen sein. Dabei können vorzugsweise mehrere, besonders bevorzugt drei, Öffnungen vorgesehen sein. Durch eine entsprechende Anordnung des Ausrichtmittels kann damit lediglich eine korrekte oder eine korrekte und eine offensichtlich bzw. auffällig falsche Stellung der Verbindungseinheit an der Verbindungsschnittstelle möglich sein. Die Verbindungsschnittstelle kann vorteilhafterweise dazu ausgebildet sein, mit der Verbindungseinheit kraft-, stoff- und/oder formschlüssig verbunden zu werden. Insbesondere kann die Verbindungsschnittstelle für eine magnetische Verbindung mit der Verbindungseinheit ausgebildet sein. Dazu kann die Verbindungsschnittstelle einen Magneten oder ein magnetisierbares Material aufweisen. Dadurch kann eine besonders einfache und insbesondere baustellengerechte Verbindungsmöglichkeit geschaffen sein.

Ferner kann im Rahmen der Erfindung vorgesehen sein, dass die Verbindungsschnittstelle eine Ausnehmung in der Basiseinheit zur Aufnahme der Verbindungseinheit umfasst, insbesondere wobei die Ausnehmung durch das erste und/oder zweite Trägerelement zumindest teilweise begrenzt wird. Die Ausnehmung kann insbesondere einen Ausschnitt aus dem Zwischenelement und dem ersten und/oder zweiten Trägerelement umfassen. Dadurch kann eine einfache Aufnahme für die Verbindungseinheit geschaffen sein. In Ausnehmungen, an welchen keine Verbindungseinheit angebracht werden soll, kann ein Blindstück vorgesehen sein, durch welches die Verbindungsschnittstelle geschützt ist. Wird die Ausnehmung durch das zweite, vorzugsweise das erste, Trägerelement begrenzt, kann am ersten und/oder zweiten Trägerelement ein Verbindungsmittel in Form einer elektrischen Kontaktierung vorgesehen sein, so dass die Verbindungseinheit in einfacher Art und Weise in einen elektrischen Kontakt mit der Heizmatte bringbar ist. Ferner ist es denkbar, dass das erste und/oder zweite Trägerelement in der Verbindungseinheit magnetisch eingeklemmt wird. Dadurch kann ein elektrischer Kontakt und eine Fixierung der Verbindungseinheit an der Heizmatte verbessert sein.

Im Rahmen der Erfindung kann ferner vorgesehen sein, dass der elektrische Anschluss einen Heizanschluss, welcher mit dem elektrischen Heizmittel verbunden ist, und/oder einen Datenanschluss, welcher mit dem Erfassungsmittel verbunden ist, umfasst. Vorzugsweise kann der elektrische Anschluss einen Heizanschluss und einen Datenanschluss umfassen. Es ist jedoch auch denkbar, dass der Heizanschluss und der Datenanschluss räumlich getrennt, insbesondere auf verschiedenen Seiten der Heizmatte angeordnet, sind. Durch den Heizanschluss kann es möglich sein, das elektrische Heizmittel mit Energie zu versorgen. Ferner ist es denkbar, dass das elektrische Heizmittel durch den Heizanschluss auch angesteuert wird. Die Ansteuerung kann beispielsweise durch das Einschalten oder Ausschalten eines Stromes am elektrischen Heizmittel vorgesehen sein. Durch den Datenanschluss kann ferner vorgesehen sein, dass das Erfassungsmittel mit der Steuereinheit kommunizieren kann. Insbesondere kann durch den Datenanschluss ferner gewährleistet sein, dass das Erfassungsmittel mit Energie versorgt wird. Somit kann am Heizanschluss und/oder am Datenanschluss eine Spannung anlegbar sein. Insbesondere können der Heizanschluss und der Datenanschluss gemeinsam am elektrischen Anschluss vorgesehen sein, so dass das Verbinden der Heizmatte mit weiteren Heizmatten und/oder mit einer Steuereinheit und/oder einer Energiequelle in einfacher Art und Weise intuitiv bewerkstelligt werden kann, während sich der Monteur auf den elektrischen Anschluss konzentrieren kann. Dadurch kann insbesondere die Montage insofern vereinfacht sein, dass die Fehlerquote beim Anschluss der Heizmatte gesenkt sein kann.

Bei einer erfindungsgemäßen Heizmatte ist es ferner denkbar, dass der elektrische Anschluss in einem Randbereich der Basiseinheit angeordnet ist, insbesondere wobei das elektrische Heizmittel durch zumindest eine Leiterbahn mit dem elektrischen Anschluss verbunden ist und/oder wobei das elektrische Heizmittel in einem Mittenbereich des ersten Trägerelementes angeordnet ist. Durch die Anordnung des elektrischen Anschlusses im Randbereich der Basiseinheit kann somit ein einfacher Anschluss der Basiseinheit und/oder der Heizmatte ermöglicht sein, ohne die Funktionalität des Heizmittels und/oder des Erfassungsmittels zu beeinträchtigen. Durch die Leiterbahn kann in einfacher Art und Weise eine Verbindung zwischen dem Heizmittel und dem elektrischen Anschluss ausgebildet sein. Durch die Anordnung des elektrischen Heizmittels im Mittenbereich des ersten Trägerelementes kann dieses ferner für eine flächige Funktionalität der Heizleistung ausgebildet sein. Eine Überlappung mehrerer Widerstandselemente beim Anordnen von mehreren Heizmatten nebeneinander nicht notwendig ist, wenn der elektrische Anschluss und das elektrische Heizmittel räumlich getrennt sind. Vorzugsweise können zumindest zwei Leiterbahnen vorgesehen sein, insbesondere durch welche unterschiedliche elektrische Potentiale an das Widerstandselement anlegbar sind.

Im Rahmen der Erfindung kann ferner vorgesehen sein, dass das elektrische Heizmittel ein Heizleitelement aufweist, durch welches das Widerstandselement mit der Leiterbahn verbunden ist. Insbesondere kann dabei das Heizleitelement direkt auf dem ersten Trägerelement angeordnet sein. Das Heizleitelement kann vorzugsweise ein anderes Material aufweisen, als das Widerstandselement. Das Heizleitelement kann vorteilhafterweise ein Edelmetall, bevorzugt ein Silber, aufweisen. Dadurch kann das Heizleitelement einen geringeren Widerstand haben als das Widerstandselement, so dass durch die Kontaktierung bzw. elektrische Verbindung des elektrischen Heizmittels mit der Leiterbahn die Verluste durch elektrischen Widerstand gering gehalten werden können und somit das Widerstandselement den maßgeblichen Teil der Wärmeentwicklung und der Energieaufnahme aufweist. Um einen besonders einfachen Aufbau zu erreichen, kann dabei beispielsweise das Heizleitelement direkt auf dem ersten Trägerelement angeordnet sein und das Widerstandselement direkt auf dem Heizleitelement. Somit kann insbesondere eine stoffschlüssige Verbindung von dem Heizleitelement mit dem ersten Trägerelement und/oder dem Widerstandselement vorgesehen sein. Dadurch kann die Heizmatte insgesamt nur eine geringe Dicke aufweisen und gleichzeitig der Aufbau einfach gehalten werden.

Vorteilhafterweise kann bei einer erfindungsgemäßen Heizmatte die Leiterbahn stoffschlüssig mit dem ersten Trägerelement verbunden sein. Insbesondere kann dabei die Leiterbahn auf das erste Trägerelement aufgedruckt sein. Insbesondere kann die Leiterbahn durch einen Siebdruck auf das erste Trägerelement aufgebracht sein. Dadurch ist eine sichere Verbindung von der Leiterbahn mit dem ersten Trägerelement gewährleistet, während gleichzeitig eine Serienfertigung der Heizmatte vereinfacht sein kann.

Im Rahmen der Erfindung ist es ferner denkbar, dass die Leiterbahn, insbesondere im Randbereich der Basiseinheit, umlaufend am ersten Trägerelement angeordnet ist. Dadurch kann die Heizmatte in einfacher Art und Weise an Geometrien des Raumes durch Zuschneiden angepasst werden, ohne beispielsweise die Funktionalität des Heizmittels vollständig zu zerstören. Somit können beispielsweise einzelne Widerstandselemente abgeschnitten werden, während andere Widerstandselemente noch funktionieren, da diese vorzugsweise mit mehreren Heizleitelementen mit der Leiterbahn verbunden sein können oder an mehreren Punkten mit der umlaufenden Leiterbahn verbunden sein können.

Vorteilhafterweise ist bei einer erfindungsgemäßen Heizmatte vorgesehen, dass mehrere Sensorelemente des Erfassungsmittels in einem regelmäßigen Verteilungsmuster, insbesondere auf der zweiten Grundseite des ersten Trägerelementes und/oder am zweiten Trägerelement, angeordnet sind. Dadurch kann sich eine vorteilhafte Überwachungsfunktionalität des Erfassungsmittels ergeben, wobei zum einen eine Zuordnung der einzelnen Sensorelemente im Raum vereinfacht sein kann, wenn das Verteilungsmuster regelmäßig ausgebildet ist, und zum anderen auch ein Zuschneiden der Heizmatte begünstigt sein kann. Ferner können mehrere Sensorelemente jeweils überlappende oder nebeneinander angeordnete Erfassungsbereiche ausbilden, welche zur Validierung bei der Detektion eines Ereignisses eingesetzt werden können. Somit können durch Verlegen einer einzelnen Heizmatte mehrere Sensorelemente gleichzeitig verlegt werden, so dass die Montage der Flächenheizung insgesamt vereinfacht, insbesondere beschleunigt, sein kann. Zusätzlich oder alternativ kann vorgesehen sein, dass mehrere Widerstandselemente des elektrischen Heizmittels in einem regelmäßigen Verteilungsmuster, insbesondere auf der ersten Grundseite des ersten Trägerelementes und/oder am zweiten Trägerelement, angeordnet sind. Die Widerstandselemente können dadurch eine Zuschneidbarkeit der Heizmatte begünstigen und/oder eine gleichmäßige Wärmeverteilung über eine Fläche der Heizmatte ermöglichen.

Im Rahmen der Erfindung ist ferner denkbar, dass das Erfassungsmittel mit zumindest einer dezentralen Auswerteeinheit, insbesondere zur Verarbeitung von Sensordaten des Erfassungsmittels, verbunden ist. Vorzugsweise ist die dezentrale Auswerteinheit mit elektrisch leitfähigem Klebstoff mit einer Datenleitung der Basiseinheit elektrisch und/oder mechanisch verbunden. Die dezentrale Auswerteeinheit kann somit Teil der Heizmatte sein und vorzugsweise auf der Basiseinheit vormontiert sein. Durch die dezentrale Auswerteeinheit ist es möglich, die Sensordaten nahe an den Sensorelementen oder dem Sensorelement abzugreifen, so dass bei der Übertragung der Sensordaten keine oder nur geringe Verluste entstehen. Insbesondere bei einer kapazitiven Erfassung kann sich dies auf die Genauigkeit und/oder Zuverlässigkeit des Erfassungsmittels positiv auswirken. Die dezentrale Auswerteeinheit kann vorzugsweise einen Analog-Digital-Wandler, insbesondere auf einer Platine, aufweisen. Somit kann beispielsweise vorgesehen sein, dass die dezentrale Auswerteeinheit analoge Sensorsignale in digitale Signale umwandelt und an eine zentrale Steuereinheit weiterleitet. Dadurch kann ein benötigter Bauraum der Auswerteeinheit gering, gleichzeitig jedoch eine erhöhte Genauigkeit und/oder Zuverlässigkeit zur Verfügung gestellt sein. Insbesondere kann jedes der Sensorelemente des Erfassungsmittels mit jeweils einer dezentralen Auswerteeinheit verbunden sein. Dadurch kann in insbesondere unmittelbarer Nähe der Sensorelemente ein jeweiliges Sensorsignal abgreifbar und zumindest teilweise verarbeitbar sein, so dass Verluste bei der Übertragung gering gehalten werden können. Zusätzlich oder alternativ kann die dezentrale Auswerteeinheit mit jedem der Sensorelemente der Heizmatte verbunden sein. Somit kann eine dezentrale Auswerteeinheit pro Heizmatte ausreichend sein, um die Sensordaten aller Sensorelemente der Heizmatte zu verarbeiten. Dadurch wird zum einen der Vorteil erzielt, dass die Leitungen für die insbesondere analogen Sensordaten bis zur dezentralen kurz gehalten werden können und gleichzeitig lediglich eine dezentrale Auswerteeinheit pro Heizmatte verwendet wird. Die dezentrale Auswerteeinheit kann vorzugsweise eine Leiterplatte, einen Prozessor, insbesondere einen Mikroprozessor, und/oder weitere elektronische Bauelemente umfassen. Vorzugsweise kann die dezentrale Auswerteeinheit mit einer Vergussmasse, die insbesondere ein Kunstharz aufweist oder aus einem Kunstharz besteht, übergossen sein. Dadurch können die elektrischen Komponenten der dezentralen Auswerteinheit geschützt sein.

Bei einer erfindungsgemäßen Heizmatte ist es ferner denkbar, dass das Erfassungsmittel und/oder die dezentrale Auswerteeinheit mit einem zentralen Steuergerät verbindbar ist. Insbesondere kann jede dezentrale Auswerteeinheit mit dem zentralen Steuergerät verbindbar sein. Dadurch können in einfacher Art und Weise die Daten von der dezentralen Auswerteeinheit in das zentrale Steuergerät übertragen werden, wobei entsprechend, wie zuvor beschrieben, die dezentrale Auswerteeinheit einfach ausgestaltet sein kann, während beispielsweise komplexe Rechenoperationen durch das zentrale Steuergerät ausführbar sein können. Dadurch kann beispielsweise die Rechenkapazität im zentralen Steuergerät konzentriert sein. Vorzugsweise ist das zentrale Steuergerät Teil einer Steuereinheit, durch welche z.B. auch das elektrische Heizmittel ansteuerbar sein kann.

Vorteilhafterweise kann bei einer erfindungsgemäßen Heizmatte die zentrale Auswerteeinheit auf der ersten Grundseite oder der zweiten Grundseite des ersten Trägerelementes an der Basiseinheit angeordnet sein. Vorzugsweise kann die dezentrale Auswerteeinheit zumindest teilweise in die Schalldämpfungsschicht eingebettet sein. Somit kann die Schalldämpfungsschicht gleichzeitig eine Schutzwirkung für die Auswerteeinheit aufweisen, vorzugsweise so dass bei einer Belastung der Heizmatte im Bereich der dezentralen Auswerteeinheit die Schalldämpfungsschicht etwas nachgeben kann, so dass die Belastung nicht vollständig auf die dezentrale Auswerteeinheit wirken kann. Ferner kann durch die Einbettung der dezentralen Auswerteeinheit in die Schalldämpfungsschicht gewährleistet sein, dass der Bauraum zur Ausgestaltung der Heizmatte effektiv genutzt wird, so dass eine Dicke der Heizmatte begrenzt sein kann.

Im Rahmen der Erfindung ist es ferner denkbar, dass die Basiseinheit zumindest eine Datenleitung aufweist, welche mit dem Erfassungsmittel und/oder mit der dezentralen Auswerteeinheit in Kommunikationsverbindung steht. Die Datenleitung kann insbesondere separat zu der Leiterbahn vorgesehen sein, und eine Verbindung des Erfassungsmittels zum Datenanschluss ermöglichen. Dadurch kann in einfacher Art und Weise eine Verbindungsmöglichkeit geschaffen werden, durch welche Daten des Erfassungsmittels zu weiteren Komponenten der Flächenheizung transportiert werden können. Insbesondere kann die Datenleitung am ersten und/oder zweiten Trägerelement angeordnet sein. Dadurch kann sich eine einfache Verbindungsmöglichkeit ergeben, wenn die Verbindungsschnittstelle eine Ausnehmung umfasst. So ist es denkbar, dass die Datenleitung an der ersten Grundseite des ersten Trägerelementes angeordnet ist, so dass eine elektrische Kontaktierung am elektrischen Anschluss für das Heizmittel und das Erfassungsmittel über das erste Trägerelement erfolgen kann.

Weiterhin ist es bei einer erfindungsgemäßen Heizmatte denkbar, dass sich die dezentrale Auswerteinheit zumindest teilweise in eine Aufnahmeöffnung des Zwischenelementes erstreckt. Dadurch kann die dezentrale Auswerteeinheit z.B. in das Zwischenelement eingebettet sein und zumindest teilweise durch das Zwischenelement vor äußeren Einflüssen geschützt sein. Ferner kann eine Dicke der Heizmatte gering gehalten werden, wenn die dezentrale Auswerteeinheit nicht oder nur teilweise aus der Basiseinheit herausragt. Die Aufnahmeöffnung kann beispielsweise in das Zwischenelement eingeschnitten sein. Zusätzlich oder alternativ kann vorgesehen sein, dass durch die dezentrale Auswerteeinheit zumindest ein Sensorelement des Erfassungsmittels mit der Datenleitung verbunden ist. Somit kann durch die dezentrale Auswerteeinheit beispielsweise auch ein Übergang der Sensordaten vom ersten zum zweiten Trägerelement und umgekehrt realisiert sein, insbesondere wenn sich die dezentrale Auswerteeinheit gleichzeitig in das Zwischenelement erstreckt.

Weiterhin ist es bei einer erfindungsgemäßen Heizmatte denkbar, dass die dezentrale Auswerteeinheit und/oder das Heizmittel mit dem elektrischen Anschluss durch einen Anschlussabschnitt elektrisch verbunden ist, insbesondere wobei durch den Anschlussabschnitt eine Datenleitung und/oder zumindest ein Teil einer Leiterbahn ausgebildet ist. Der Anschlussabschnitt kann vorzugsweise auf der ersten Grundseite des ersten Trägerelementes angeordnet, insbesondere auf die erste Grundseite des ersten Trägerelementes aufgedruckt, sein. Dadurch kann in einfacher Art und Weise eine direkte Verbindung der dezentralen Auswerteeinheit mit dem elektrischen Anschluss geschaffen sein. Dabei können Sensordaten über den Anschlussabschnitt an eine Steuereinheit übermittelbar sein. Ferner kann das Heizmittel über den Anschlussabschnitt mit Strom versorgbar bzw. ein Potential an ein Widerstandselement des Heizmittels anlegbar sein.

Vorzugsweise kann bei einer erfindungsgemäßen Heizmatte vorgesehen sein, dass mehrere elektrische Anschlüsse, insbesondere zum Anschluss an eine Energiequelle und/oder an eine Steuereinheit, in einem Randbereich der Basiseinheit angeordnet sind, insbesondere wobei sich mehrere Anschlussabschnitte von der dezentralen Auswerteeinheit, vorzugsweise kreuzartig, zu den elektrischen Anschlüssen erstrecken. Die dezentrale Auswerteeinheit kann vorzugsweise mittig an der Basiseinheit angeordnet sein. Die elektrischen Anschlüsse sind vorzugsweise in einem Randbereich der Basiseinheit angeordnet. Somit kann durch die kreuzartige Ausbildung der Anschlussabschnitte ein kurzer Weg erzielt werden. Insbesondere können die Anschlussabschnitte über die dezentrale Auswerteeinheit oder zumindest teilweise direkt miteinander verbunden sein. Insbesondere kann das Heizleitelement Anschlussabschnitte aufweisen, die umlaufend miteinander verbunden sind. Dadurch kann die Zuschneidbarkeit der Heizmatte verbessert sein, wenn ein Schnitt durch einen der Anschlussabschnitte nicht unmittelbar zu einem Abschneiden der Stromversorgung für die Widerstandselemente führt. Die Datenleitung kann vorzugsweise separate Anschlussabschnitte aufweisen.

Im Rahmen der Erfindung kann vorgesehen sein, dass sich ein Durchgangselement aufweist zur Verbindung des Erfassungsmittels mit der dezentralen Auswerteinheit zumindest teilweise durch das erste Trägerelement hindurch erstreckt. Das Durchgangselement kann vorzugsweise einen Niet umfassen, welcher bei der Herstellung der Basiseinheit in das erste Trägerelement eingebracht wird. Dabei sind jedoch auch ferner andere Möglichkeiten der Verbindung der beiden Grundseiten des ersten Trägerelementes denkbar. Vorzugsweise kann das Durchgangselement elektrisch leitend ausgebildet sein. Dadurch kann, ermöglicht sein, dass das Erfassungsmittel, welches vorzugsweise auf der zweiten Grundseite des ersten Trägerelementes angeordnet ist, mit einem elektrischen Bauteil auf der gegenüberliegenden, insbesondere auf der ersten Grundseite, des ersten Trägerelementes verbunden ist. Somit kann auf der dem Erfassungsmittel gegenüberliegenden Seite des ersten Trägerelementes beispielsweise eine dezentrale Auswerteeinheit angeordnet sein, welche durch das Durchgangselement mit dem Erfassungsmittel elektrisch verbindbar sein kann. Somit kann die Kontaktierung durch das erste Trägerelement hindurch erreicht werden, ohne beispielsweise eine Leitung an der Außenseite der Basiseinheit entlang zu legen und zumindest teilweise um die Basiseinheit herumzuwickeln, um die andere Seite zu erreichen. Gleichzeitig kann die durch das Durchgangselement zurückgelegte Wegstrecke gering sein, so dass auch der elektrische Widerstand und damit mögliche Signalverluste gering sein können. Auch eine einfache Fertigung wird durch das Durchgangselement begünstigt, insbesondere wenn dieses beispielsweise als Niet ausgestaltet ist.

Im Rahmen der Erfindung kann ferner vorgesehen sein, dass die Datenleitung einen zumindest teilweise, vorzugsweise vollständig, um einen Mittenbereich der Basiseinheit umlaufenden Ringabschnitt aufweist. Vorzugsweise kann dabei die Datenleitung einen Versorgungsabschnitt aufweisen, welcher zumindest teilweise in dem Mittenbereich angeordnet ist. Unter dem Ringabschnitt kann vorzugsweise ein Abschnitt der Datenleitung verstanden werden, welcher sich entlang des Randbereiches der Basiseinheit erstreckt. Der Ringabschnitt kann rund ausgebildet sein oder an eine eckige Form der Heizmatte angepasst sein. Durch den Ringabschnitt ist es möglich, eine Verbindung des Erfassungsmittels mit einem Datenanschluss zu erhalten, auch dann, wenn die Heizmatte beispielsweise zur Anpassung an eine Geometrie eines Raumes zugeschnitten wird. Die Versorgungsabschnitte verbinden dabei insbesondere den Ringabschnitt mit dem Erfassungsmittel und/oder den dezentralen Auswerteeinheiten, welche sich vorzugsweise im Mittenbereich der Basiseinheit befinden.

Vorteilhafterweise kann die Datenleitung mit einem Datenanschluss verbunden sein, welcher von außerhalb der Basiseinheit zugänglich ist. Vorzugsweise kann dabei die Datenleitung durch den Datenanschluss mit dem zentralen Steuergerät verbindbar sein. Somit kann durch den Datenanschluss gewährleistet sein, dass das Erfassungsmittel und/oder die dezentrale Auswerteeinheit an das zentrale Steuergerät angebunden werden kann. Dies kann beispielsweise mittelbar dadurch erfolgen, dass mehrere Heizmatten miteinander über unterschiedliche Datenanschlüsse verbunden werden und zumindest eine der Heizmatten schließlich mit dem zentralen Steuergerät verbunden wird.

Vorzugsweise kann bei einer erfindungsgemäßen Heizmatte die Datenleitung über den Ringabschnitt mit mehreren Datenanschlüssen verbunden sein, welche in einem Randbereich der Basiseinheit angeordnet sind. Insbesondere können die Datenanschlüsse Teil von elektrischen Anschlüssen im Randbereich der Basiseinheit sein. Dadurch, dass die Datenleitung über den Ringabschnitt mit mehreren Datenanschlüssen verbunden ist, ist ferner eine Zuschneidmöglichkeit der Heizmatte weiter begünstigt. Insbesondere können somit auch Bereiche, in welchen ein Anschluss vorgesehen ist, abgeschnitten werden, ohne die Funktionalität des Erfassungsmittels wesentlich zu beeinträchtigen. Somit kann es beispielsweise lediglich notwendig sein, einen Datenanschluss übrig zu lassen, wenn die Heizmatte an eine Geometrie des Raumes durch Zuschneiden angepasst wird.

Es ist bei einer erfindungsgemäßen Heizmatte ferner denkbar, dass das elektrische Heizmittel und/oder die Leiterbahn und/oder die Datenleitung und/oder das Erfassungsmittel ein Edelmetall, insbesondere Silber, aufweist. So ist es beispielsweise denkbar, dass ein Heizleitelement des elektrischen Heizmittels und/oder ein Sensorelement des Erfassungsmittels das Edelmetall, insbesondere Silber, aufweist. Durch das Edelmetall kann ein geringer Widerstand der jeweiligen Komponente gewährleistet sein, so dass die elektrische Leistung nicht oder zumindest reduziert in Form von Wärme ungewollt abgegeben wird. Insbesondere im Bereich des Erfassungsmittels kann dabei ferner ein Messergebnis der Detektion des Ereignisses in seiner Genauigkeit und/oder Zuverlässigkeit verbessert sein. Ferner ist beispielsweise ein Silber in einfacher Art und Weise in einem Druckverfahren verarbeitbar, so dass eine einfache Herstellung der Heizmatte beispielsweise durch Aufdrucken einzelner Komponenten verbessert sein kann.

Es ist ferner denkbar, dass bei einer erfindungsgemäßen Heizmatte zumindest eine Soll-Schnittlinie vorgesehen ist, entlang welcher ein Zuschneiden der Heizmatte zur Anpassung an eine Geometrie des Raumes möglich ist, ohne die Funktion des Heizmittels und/oder des Erfassungsmittels vollständig zu zerstören, insbesondere wobei ein Teil des Heizmittels und/oder Erfassungsmittels beim Zuschneiden entlang der Soll-Schnittlinie abtrennbar ist. Unter der Soll-Schnittlinie kann ein Bereich verstanden werden, entlang welchem eine vorteilhafte Schnittmöglichkeit geschaffen ist, so dass die Funktion des Heizmittels und/oder des Erfassungsmittels nicht vollständig zerstört wird. Vorzugsweise kann die Soll-Schnittlinie vorgezeichnet und/oder vorperforiert sein, so dass ein Monteur die Soll-Schnittlinie schnell erkennen kann. Ferner können mehrere Soll-Schnittlinien vorgesehen sein. Dadurch kann die Flexibilität der Montagemöglichkeit weiter verbessert sein. Weiterhin ist es denkbar, dass sich die Soll-Schnittlinien beispielsweise aus der Anordnung der Sensorelemente des Erfassungsmittels und/oder der Widerstandselemente des Heizmittels ergeben können, insbesondere wenn die Sensorelemente und/oder die Widerstandselemente in einem regelmäßigen Muster angeordnet sind.

Gemäß einem weiteren Aspekt der Erfindung ist eine Flächenheizung zum Heizen eines Raumes eines Gebäudes beansprucht. Dabei ist zumindest eine erfindungsgemäße Heizmatte flächig auf einem Bauelement des Gebäudes verlegt.

Damit bringt eine erfindungsgemäße Flächenheizung die gleichen Vorteile mit sich, wie sie bereits ausführlich mit Bezug auf eine erfindungsgemäße Heizmatte beschrieben worden sind. Unter dem Bauelement des Gebäudes kann vorzugsweise ein Rohbauteil, insbesondere ein Rohbaufußboden, verstanden werden. So ist es beispielsweise denkbar, dass auf das Bauelement die erfindungsgemäße Heizmatte aufgelegt wird und anschließend mit einem Funktions- und/oder Sichtbelag des herzustellenden Fußbodens verdeckt wird. Insbesondere kann die Flächenheizung mehrere erfindungsgemäße Heizmatten aufweisen, welche miteinander verbunden sind. Die Flächenheizung kann ferner als Fußbodenheizung ausgestaltet sein. Dabei ist die Flächenheizung in einfacher Art und Weise verlegbar und kann gleichzeitig bei nur geringer Dicke auch entsprechend einen geringen Bauraum innerhalb des Gebäudes beanspruchen, so dass weitere Komponenten des Gebäudes nicht oder nur geringfügig durch die Heizmatte bzw. die Flächenheizung beeinflusst werden. Vorzugsweise kann die Flächenheizung ferner ein zentrales Steuergerät aufweisen, durch welches die Heizmatte und/oder die Heizmatten ansteuerbar sind. Das zentrale Steuergerät kann beispielsweise in einer Unterputzdose angeordnet sein.

Gemäß einem weiteren Aspekt der Erfindung ist ein Verfahren zur Herstellung einer erfindungsgemäßen Heizmatte für eine Flächenheizung, insbesondere zum Heizen eines Gebäudes, beansprucht. Vorzugsweise kann die Flächenheizung eine erfindungsgemäße Flächenheizung sein. Das Verfahren umfasst ferner folgende Schritte:
- Bereitstellen eines ersten Trägerelementes, welches eine flächige Erstreckung mit einer ersten Grundseite und einer zweiten Grundseite aufweist,
- Erstellen einer flexiblen Basiseinheit, wobei ein Aufbringen eines elektrischen Heizmittels auf der ersten Grundseite, insbesondere auf die erste Grundseite, des ersten Trägerelementes erfolgt, so dass zumindest die Basiseinheit zur Ausgestaltung der Flächenheizung flächig verlegbar ist.

Vorzugsweise kann es sich bei der Flächenheizung um eine erfindungsgemäße Flächenheizung handeln. Insbesondere bringt das erfindungsgemäße Verfahren damit die gleichen Vorteile mit sich, wie sie bereits ausführlich mit Bezug auf eine erfindungsgemäße Heizmatte beschrieben worden sind. Das Bereitstellen des ersten Trägerelementes kann vorzugsweise ein Herstellen einer Folie, insbesondere einer PET-Folie umfassen. Beim Aufbringen des elektrischen Heizmittels auf der ersten Grundseite kann das elektrische Heizmittel vorzugsweise direkt auf die erste Grundseite des ersten Trägerelementes angeordnet werden oder mittelbar auf der ersten Grundseite des ersten Trägerelementes angeordnet werden. Vorzugsweise kann das Aufbringen des elektrischen Heizmittels auf der ersten Grundseite des ersten Trägerelementes eine stoffschlüssige Verbindung des elektrischen Heizmittels mit dem ersten Trägerelement herstellen. Es ist jedoch ferner ebenfalls denkbar, dass das elektrische Heizmittel auf andere Art und Weise auf dem ersten Trägerelement oder einer weiteren Komponente der Basiseinheit befestigt wird.

Somit ist in einfacher Art und Weise eine Heizmatte herstellbar, welche in ebenfalls einfacher Art und Weise zur Ausgestaltung einer Flächenheizung in einem Raum eines Gebäudes montiert werden kann. Beispielsweise können das Bereitstellen des ersten Trägerelementes und das Erstellen der flexiblen Basiseinheit an einem von der Baustelle des Gebäudes separaten Produktionsort durchgeführt werden, während die Montage schließlich in dem Raum selbst erfolgt, wobei lediglich die Heizmatte oder mehrere Heizmatten ausgelegt werden.

Es ist im Rahmen der Erfindung ferner denkbar, dass das Aufbringen des elektrischen Heizmittels auf der ersten Grundseite des ersten Trägerelementes folgende Schritte umfasst:
- Aufbringen eines Leitermaterials des elektrischen Heizmittels in zumindest teilweise flüssiger Form auf der ersten Grundseite des ersten Trägerelementes,
- Aushärten des Leitermaterials.

Das Aufbringen des Leitermaterials kann vorzugsweise ein Aufdrucken des elektrischen Heizmittels umfassen. So kann das Leitermaterial vorzugsweise zerstäubt auf die zu bedruckenden Bereiche aufgebracht werden und eine stoffschlüssige Verbindung, insbesondere mit dem ersten Trägerelement, herstellen. Das Aushärten des Leitermaterials kann vorzugsweise durch UV-Strahlung oder einen Temperatureintrag erfolgen. Dadurch kann das Aushärten des Leitermaterials in flüssiger Form beschleunigt werden. Das Leitermaterial kann vorzugsweise einen Kohlenstoff und/oder einen Füllstoff aufweisen. Dabei kann das Leitermaterial vorgemischt sein oder der Kohlenstoff und der Füllstoff können erst beim Aufbringen des Leitermaterials vermischt werden. Dadurch kann eine Serienfertigung der Heizmatte begünstigt sein, insbesondere da das Leitermaterial in flüssiger Form in reproduzierbarer Art und Weise vorteilhaft aufgebracht werden kann.

Weiterhin ist es bei einem erfindungsgemäßen Verfahren denkbar, dass das Verfahren folgende Schritte umfasst:
- Bereitstellen eines zweiten Trägerelementes, welches eine flächige Erstreckung mit einer ersten Grundseite und einer zweiten Grundseite aufweist,
- Befestigen des ersten und zweiten Trägerelementes miteinander.

Vorzugsweise können das erste und zweite Trägerelement derart miteinander befestigt werden, dass die erste Grundseite des ersten Trägerelementes und die zweite Grundseite des zweiten Trägerelementes einander zugewandt sind. Das erste und zweite Trägerelement können kraft-, form- und/oder stoffschlüssig miteinander befestigt werden. Dadurch kann in einfacher Art und Weise die Basiseinheit geschaffen werden. Durch das zweite Trägerelement kann ferner eine weitere Schutzwirkung für das Heizmittel gewährleistet werden.

Vorteilhafterweise kann bei einem erfindungsgemäßen Verfahren vorgesehen sein, dass das Befestigen des ersten und zweiten Trägerelementes miteinander das Anordnen eines Zwischenelementes zwischen dem ersten und zweiten Trägerelement umfasst, insbesondere wobei zwischen dem Zwischenelement und dem ersten Trägerelement und/oder zwischen dem Zwischenelement und dem zweiten Trägerelement eine Klebeschicht angeordnet wird. Durch das Zwischenelement wird in einfacher Art und Weise ein Abstand zwischen den Trägerelementen erzielt. Wenn z.B. das Heizmittel auf dem ersten Trägerelement und das Erfassungsmittel auf dem zweiten Trägerelement angeordnet ist, kann dadurch eine gegenseitige Beeinflussung des Erfassungsmittels und des Heizmittels reduziert werden. Die Klebeschicht kann, insbesondere in Form eines doppelseitigen Klebebandes, auf das Zwischenelement und/oder das erste und/oder zweite Trägerelement laminiert werden. Somit ergibt sich eine einfache Befestigungsmöglichkeit des Zwischenelementes. Das Zwischenelement kann vorteilhafterweise als Schalldämpfungsschicht und/oder selbst als Klebeschicht ausgebildet sein.

Im Rahmen der Erfindung kann ferner vorgesehen sein, dass vor dem Aufbringen des elektrischen Heizmittels folgender Schritt durchgeführt wird:
- Vortemperieren des ersten und/oder zweiten Trägerelementes.

Durch das Vortemperieren des ersten und/oder zweiten Trägerelementes kann insbesondere ein Schrumpf beim Aufdrucken des Leitermaterials abgefangen werden. Beim Aufbringen des elektrischen Heizmittels kann, insbesondere wenn dies durch ein Druckverfahren realisiert wird, das erste und/oder zweite Trägerelement lokal erwärmt werden, so dass thermische Spannungen auftreten und das erste und/oder zweite Trägerelement zumindest teilweise verformen. Beim Abkühlen kann diese Verformung schließlich rückläufig sein, so dass gegebenenfalls eine Beschädigung des Heizmittels auftreten kann. Durch das Vortemperieren des ersten und/oder zweiten Trägerelementes kann dem entgegengewirkt werden.

Bei einem erfindungsgemäßen Verfahren kann vorteilhafterweise das Erstellen der Basiseinheit folgenden Schritt umfassen:
- Aufbringen eines Erfassungsmittels zum Detektieren eines Ereignisses auf der zweiten Grundseite, insbesondere auf die zweite Grundseite, des ersten Trägerelementes und/oder an dem zweiten Trägerelement (11), so dass zumindest die Basiseinheit zur Ausgestaltung einer Flächensensorik flächig verlegbar ist.

Somit kann die Funktionalität der Heizmatte um die Funktionalität des Erfassungsmittels ergänzt werden. Um die Notwendigkeit einer elektrischen Isolierung gering zu halten, kann das Erfassungsmittel dabei vorzugsweise auf der dem elektrischen Heizmittel gegenüberliegenden Grundseite des ersten Trägerelementes angeordnet werden. Zusätzlich oder alternativ kann das Erfassungsmittel auf dem zweiten Trägerelement, insbesondere an einer ersten und/oder zweiten Grundseite des zweiten Trägerelementes, angeordnet werden. Das Ereignis kann vorzugsweise eine Aktivität einer Person umfassen, wobei die Aktivität beispielsweise einen Aufenthalt der Person im Raum umfassen kann. Die Flächensensorik kann dabei eine Vorrichtung bzw. ein System sein, das zum Erfassen des Ereignisses bzw. mehrerer Ereignisse über eine Fläche des Raumes verteilt geeignet ist.

Im Rahmen der Erfindung kann ferner vorgesehen sein, dass das Erstellen der Basiseinheit zumindest einen der folgenden Schritte umfasst:
- Aufbringen einer ersten Schutzschicht auf das elektrische Heizmittel, insbesondere durch Lackieren, und/oder
- Aufbringen einer zweiten Schutzschicht auf das Erfassungsmittel, insbesondere durch Lackieren.

Vorzugsweise können das elektrische Heizmittel und das Erfassungsmittel jeweils mit der ersten bzw. zweiten Schutzschicht überdeckt werden. Durch die erste bzw. zweite Schutzschicht kann eine elektrische Isolierung vorgesehen werden, so dass sowohl die Funktionalität des elektrischen Heizmittels bzw. des Erfassungsmittels gegenüber äußeren Einflüssen geschützt sein kann als auch die Umwelt gegenüber Strom vom elektrischen Heizmittel und/oder vom Erfassungsmittel geschützt sein kann. Das Lackieren kann dabei eine einfache Möglichkeit bereitstellen, die Heizmatte in Serienfertigung zu produzieren. Dadurch können insbesondere die Kosten der Herstellung reduziert sein.

Es ist ferner denkbar, dass bei einem erfindungsgemäßen Verfahren das Aufbringen des Erfassungsmittels folgende Schritte umfasst:
- Aufbringen eines Sensormaterials des Erfassungsmittels in zumindest teilweise flüssiger Form auf der zweiten Grundseite des ersten und/oder zweiten Trägerelementes,
- Aushärten des Sensormaterials.

Wie bereits zum Aufbringen des elektrischen Heizmittels beschrieben, kann auch das Sensormaterial vorzugsweise durch ein Druckverfahren auf das erste und/oder zweite Trägerelement aufgebracht werden. Dadurch kann eine stoffschlüssige Verbindung in einfacher Art und Weise kostengünstig hergestellt werden. Gleichzeitig bietet das Aufbringen des Sensormaterials in zumindest teilweise flüssiger Form die Möglichkeit, in reproduzierbarer Art und Weise das Erfassungsmittel präzise herzustellen.

Vorteilhafterweise kann vorgesehen sein, dass bei einem erfindungsgemäßen Verfahren das Verfahren ferner zumindest einen der folgenden Schritte umfasst:
- Erstellen zumindest einer Verbindungsschnittstelle durch Aufpressen eines Verbindungsmittels und/oder einer Gegenverbindungsschnittstelle durch Aufpressen eines Gegenverbindungsmittels, insbesondere wobei das Verbindungsmittel und das Gegenverbindungsmittel gleichzeitig aufgepresst werden und/oder
- Erstellen einer Verbindungsschnittstelle durch Schneiden einer Ausnehmung, in welche eine Verbindungseinheit einsetzbar ist, in die Basiseinheit, insbesondere so dass das erste und/oder zweite Trägerelement die Ausnehmung zumindest teilweise begrenzt.

Insbesondere kann die Verbindungsschnittstelle eine Verbindungsschnittstelle zum reversiblen Verbinden des Verbindungsmittels mit einem Gegenverbindungsmittel sein. Das Verbindungsmittel kann vorzugsweise ein Druckknopf sein, während das Gegenverbindungsmittel vorzugsweise eine Öse sein kann. Somit kann in einfacher Art und Weise eine reversible Verbindungsmöglichkeit für die Heizmatte hergestellt werden. Zusätzlich oder alternativ kann die Verbindungsschnittstelle beispielsweise dadurch hergestellt werden, dass ein Stanzen und/oder Bohren vorgesehen ist, durch welches ein Kontakt in die Basiseinheit eingebracht werden kann und/oder auf der Basiseinheit freigelegt werden kann. Insbesondere kann die Verbindungsschnittstelle ferner dadurch ausgebildet werden, dass beim Aufbringen der ersten und/oder zweiten Schutzschicht auf das elektrische Heizmittel bzw. das Erfassungsmittel ein Bereich des elektrischen Heizmittels bzw. des Erfassungsmittels überdeckt wird, so dass die erste oder zweite Schutzschicht in diesem Bereich nicht entsteht. Somit kann in diesem Bereich das elektrische Heizmittel bzw. das Erfassungsmittel freiliegen und damit einen Kontakt ermöglichen. Das Pressenwerkzeug kann vorzugsweise dazu ausgebildet sein, sowohl das Verbindungsmittel, als auch das Gegenverbindungsmittel aufzupressen. Dazu kann das Pressenwerkzeug zur Aufnahme der Basiseinheit ausgebildet sein und unterschiedliche Stempel an den jeweiligen Positionen aufweisen, um gleichzeitig das Gegenverbindungsmittel und das Verbindungsmittel aufzupressen. Ferner können auch Kontaktierungen für das Heizmittel, das Erfassungsmittel und/oder die dezentralen Auswerteeinheiten gleichzeitig mit dem Verbindungsmittel und dem Gegenverbindungsmittel aufgepresst werden. Vorzugsweise kann dabei vorgesehen sein, dass ein elektrisch leitfähiger Kleber aufgetragen wird, um das Verbindungsmittel und/oder das Gegenverbindungsmittel mit der Basiseinheit zu verbinden. Um die Verklebung zu beschleunigen kann der elektrisch leitfähige Kleber z. B. thermisch und/oder mittels UV-Strahlung ausgehärtet werden. Durch die Verbindungsschnittstelle kann ferner eine einfache Aufnahme für die Verbindungseinheit geschaffen werden. In Ausnehmungen, an welchen keine Verbindungseinheit angebracht werden soll, kann ein Blindstück eingesetzt werden, durch welches die Verbindungsschnittstelle geschützt ist. Wird die Ausnehmung durch das zweite, vorzugsweise das erste, Trägerelement begrenzt, kann am ersten und/oder zweiten Trägerelement ein Verbindungsmittel in Form einer elektrischen Kontaktierung vorgesehen sein, so dass die Verbindungseinheit in einfacher Art und Weise in einen elektrischen Kontakt mit der Heizmatte gebracht werden kann.

Im Rahmen der Erfindung kann ferner vorgesehen sein, dass das Verfahren folgende Schritte umfasst:
- Aufbringen einer Klebeschicht auf eine Abdichtungsschicht und/oder auf eine Schalldämpfungsschicht und/oder auf die Basiseinheit,
- Befestigen der Abdichtungsschicht und/oder der Schalldämpfungsschicht auf der Basiseinheit durch die Klebeschicht.

Das Aufbringen der Klebeschicht kann dabei vorzugsweise ein Laminieren der Klebeschicht auf die Abdichtungsschicht bzw. die Schalldämpfungsschicht bzw. die Basiseinheit umfassen. Vorzugsweise kann die Klebeschicht als doppelseitiges Klebeband ausgebildet sein. Somit können die Abdichtungsschicht und/oder die Schalldämpfungsschicht als vorgefertigte Komponenten angeliefert werden und bei der Produktion der Heizmatte mittels der Klebeschicht in einfacher Art und Weise auf der Basiseinheit befestigt werden. Dies kann eine Serienfertigung der Heizmatte begünstigen und/oder die Produktion vereinfachen. Insbesondere kann dadurch die Produktion der Abdichtungsschicht und/oder der Schalldämpfungsschicht ausgelagert sein.

Im Rahmen der Erfindung kann ferner vorgesehen sein, dass die Klebeschicht ein Klebeband umfasst, wobei ferner folgender Schritt vorgesehen ist:
- Einritzen des Klebebandes, so dass zwei getrennt verwendbare Klebebereiche entstehen, wobei ein erster Klebebereich zum Befestigen der Abdichtungsschicht und/oder der Schalldämpfungsschicht auf der Basiseinheit verwendbar ist und ein zweiter Klebebereich zum externen Befestigen der Heizmatte verwendbar ist.

Durch das Klebeband kann somit gleichzeitig eine Verbindungsmöglichkeit der Basiseinheit mit der Abdichtungsschicht und/oder der Schalldämpfungsschicht und zweier Heizmatten, welche nebeneinander angeordnet werden sollen, um die Flächenheizung auszubilden, begünstigen. Durch das Einritzen des Klebebandes kann zunächst die Basiseinheit vollständig mit dem Klebeband laminiert werden und anschließend können je nach Geometrie des Raumes und/oder der Verwendung der Heizmatte die Klebebereiche, insbesondere an den jeweiligen Anwendungsbereich, angepasst werden. Das Einsetzen des Klebebandes kann beispielsweise auf der Baustelle durchgeführt werden, während weitere Schritte in einem separaten Produktionsbereich der Heizmatte durchgeführt werden können. Insbesondere kann jedoch durch Einritzen des Klebebandes in der separaten Produktionsumgebung bereits eine standardisierte Vorgabe existieren, welche auf der Baustelle noch immer verändert und/oder ignoriert werden kann.

Ferner kann bei einem erfindungsgemäßen Verfahren das Verfahren den folgenden Schritt umfassen:
- Zuschneiden zumindest des ersten Trägerelementes, des zweiten Trägerelementes und/oder des Zwischenelementes, insbesondere wobei das Zuschneiden gleichzeitig mit dem Aufpressen des Verbindungsmittels und/oder des Gegenverbindungsmittels durchgeführt wird.

Dadurch kann beispielsweise bei einer Serienproduktion die äußere Form der Heizmatte vorgegeben werden, insbesondere noch bevor weitere Komponenten auf das erste und/oder zweite Trägerelement aufgebracht werden. Vorzugsweise kann die vollständige Basiseinheit, besonders bevorzugt zusammen mit der Abdichtungsschicht und/oder der Schalldämpfungsschicht zugeschnitten werden. Somit kann beispielsweise eine an den Anwendungsfall angepasste Geometrie erzeugt werden, während die vorgelagerte Produktion beispielsweise mittels eines Bandmaterials, insbesondere als Endlosbahn, durchgeführt werden kann. Ferner ist es denkbar, dass das Zuschneiden der Basiseinheit im gleichen Pressenwerkzeug wie das Aufpressen des Verbindungsmittels und des Gegenverbindungsmittels durchgeführt wird. So ist es denkbar, dass der äußere Rand des Pressenwerkzeugs als Stanzwerkzeug ausgeführt wird und im inneren Bereich Pressstempel vorgesehen sind. Dadurch können in einem einzelnen Arbeitsschritt, insbesondere in einem einzelnen Hub, verschiedene Herstellungsschritte kombiniert werden.

Weiterhin kann bei einem erfindungsgemäßen Verfahren vorgesehen sein, dass das Verfahren ferner folgenden Schritt umfasst:
- Anordnen zumindest einer dezentralen Auswerteeinheit, insbesondere zur Verarbeitung von Sensordaten des Erfassungsmittels, an der Basiseinheit, vorzugsweise wobei für eine elektrische Kontaktierung der dezentralen Auswerteeinheit mit einer Datenleitung der Basiseinheit ein elektrisch leitfähiger Klebstoff verwendet wird

Insbesondere kann das Zwischenelement eine Öffnung aufweisen oder eine Öffnung in das Zwischenelement eingeschnitten werden, in welche die dezentrale Auswerteeinheit eingesetzt wird. Die dezentrale Auswerteeinheit kann vorteilhafterweise mittig der Basiseinheit angeordnet werden. Durch den elektrisch leitfähigen Klebstoff kann einerseits eine Befestigung der Auswerteinheit erzielt werden und die elektrische Kontaktierung der Auswerteeinheit kann mit der Basiseinheit, insbesondere mit Anschlussabschnitten zu elektrischen Anschlüssen, realisiert werden.

Im Rahmen der Erfindung kann ferner vorgesehen sein, dass das Verfahren ferner folgenden Schritt umfasst:
- Gießen einer Vergussmasse zumindest teilweise über die Basiseinheit und/oder die dezentrale Auswerteeinheit.

Die Vergussmasse kann vorzugsweise elektrisch isolierend ausgebildet sein. Dadurch, dass die Basiseinheit und/oder die dezentrale Auswerteinheit zumindest teilweise mit der Vergussmasse übergossen wird, kann sichergestellt werden, dass keine unerwünschten elektrischen Kontakte offen bleiben, die eine Funktionstüchtigkeit der Heizmatte im Einsatz beeinträchtigen könnten. Vorzugsweise kann die Vergussmasse ein Kunstharz aufweisen oder aus einem Kunstharz bestehen.

Im Rahmen der Erfindung kann ferner vorgesehen sein, dass eine Qualitätskontrolle des Heizmittels durchgeführt wird. Insbesondere kann die Qualitätskontrolle des Heizmittels folgende Schritte umfassen:
- Auflegen der Heizmatte auf ein Fördermittel, insbesondere ein Förderband,
- Anfahren zumindest einer Verbindungsschnittstelle und/oder zumindest einer Gegenverbindungsschnittstelle mit einem Tastkopf,
- Prüfen einer elektrischen Kenngröße, insbesondere des elektrischen Widerstands,
- Anlegen einer Spannung an das Heizmittel und Auswerten eines Thermobildes, insbesondere eines Infrarotbildes, in Hinblick auf eine erreichte Temperatur,
- Vergleichen der elektrischen Kenngröße und/oder der erreichten Temperatur mit einem Sollwert.

Ferner ist es denkbar, dass bei einem erfindungsgemäßen Verfahren eine Qualitätskontrolle des Erfassungsmittels durchgeführt wird. Insbesondere kann die Qualitätskontrolle des Erfassungsmittels folgende Schritte umfassen:
- Auflegen der Heizmatte auf ein Fördermittel oder Weiterbefördern der Heizmatte auf dem Fördermittel,
- Anfahren zumindest eines Sensorelementes und/oder einer dezentralen Auswerteeinheit mit einem Tastkopf,
- Positionieren eines Testkörpers an zumindest einem Sensorelement und Speichern eines Erfassungssignals,
- Vergleichen des Erfassungssignals mit einem Referenzsignal.

Vorzugsweise kann es sich bei dem Fördermittel der Qualitätskontrolle des Erfassungsmittels und des Heizmittels um dasselbe Fördermittel handeln, so dass die insbesondere vollständige Qualitätskontrolle am gleichen Fördermittel durchgeführt werden kann. Durch die Qualitätskontrolle kann die Zuverlässigkeit des Verfahrens zur Herstellung der Heizmatte gesteigert werden, so dass fehlerhafte Produkte bereits vor dem Einbau auf der Baustelle identifiziert und aussortiert werden können.

Weitere, die Erfindung verbessernde Maßnahmen ergeben sich aus der nachfolgenden Beschreibung zu einigen Ausführungsbeispielen der Erfindung, welche in den Figuren schematisch dargestellt sind. Sämtliche aus den Ansprüchen, der Beschreibung oder den Zeichnungen hervorgehende Merkmale und/oder Vorteile, einschließlich konstruktiver Einzelheiten, räumlicher Anordnungen und Verfahrensschritte können sowohl für sich als auch in den verschiedensten Kombinationen erfindungswesentlich sein. Dabei ist zu beachten, dass die Figuren nur beschreibenden Charakter haben und nicht dazu gedacht sind, die Erfindung in irgendeiner Form einzuschränken. Es zeigen:
- Figur 1: einen schematischen Aufbau einer erfindungsgemäßen Heizmatte gemäß einem ersten Ausführungsbeispiel in schematischer geschnittener Ansicht,
- Figur 2: eine Draufsicht auf eine erste Grundseite einer Basiseinheit der erfindungsgemäßen Heizmatte des ersten Ausführungsbeispiels,
- Figur 3: eine schematische Darstellung eines Erfassungsmittels der erfindungsgemäßen Heizmatte des ersten Ausführungsbeispiels,
- Figur 4: eine mögliche Erfassung eines Ereignisses in zeitlicher Abfolge mit der Heizmatte des ersten Ausführungsbeispiels,
- Figur 5: die erfindungsgemäße Heizmatte des ersten Ausführungsbeispiels in einer weiteren schematischen geschnittenen Ansicht,
- Figur 6: eine weitere geschnittene schematische Ansicht der erfindungsgemäßen Heizmatte des ersten Ausführungsbeispiels im Randbereich,
- Figur 7: eine mögliche Biegung der Heizmatte des ersten Ausführungsbeispiels in schematischer Ansicht,
- Figur 8: eine Flächenheizung mit einer Heizmatte gemäß dem ersten Ausführungsbeispiel,
- Figur 9: ein Raum eines Gebäudes mit einer erfindungsgemäßen Flächenheizung in einem weiteren Ausführungsbeispiel,
- Figur 10: Verfahrensschritte eines erfindungsgemäßen Verfahrens zur Herstellung einer Heizmatte in einem weiteren Ausführungsbeispiel,
- Figur 11a-i: die Verfahrensschritte des erfindungsgemäßen Verfahrens des Ausführungsbeispiels der Figur 10 in einer weiteren schematischen Darstellung,
- Figur 12: einen schematischen Aufbau einer erfindungsgemäßen Heizmatte gemäß einem weiteren Ausführungsbeispiel in schematischer geschnittener Ansicht,
- Figur 13: eine Draufsicht auf ein Heizmittel der erfindungsgemäßen Heizmatte gemäß Figur 12,
- Figur 14: eine schematische Darstellung eines Erfassungsmittels der erfindungsgemäßen Heizmatte gemäß Figur 12,
- Figur 15: die erfindungsgemäße Heizmatte gemäß Figur 12 in einer weiteren schematischen geschnittenen Ansicht,
- Figur 16a-c: die erfindungsgemäße Heizmatte gemäß Figur 12 mit einer Verbindungseinheit,
- Figur 17: Verfahrensschritte eines erfindungsgemäßen Verfahrens zur Herstellung einer Heizmatte in einem weiteren Ausführungsbeispiel,
- Figur 18a-k: die Verfahrensschritte des erfindungsgemäßen Verfahrens des Ausführungsbeispiels der Figur 17 in einer weiteren schematischen Darstellung.

In den nachfolgenden Figuren werden für die gleichen technischen Merkmale auch von unterschiedlichen Ausführungsbeispielen die identischen Bezugszeichen verwendet.

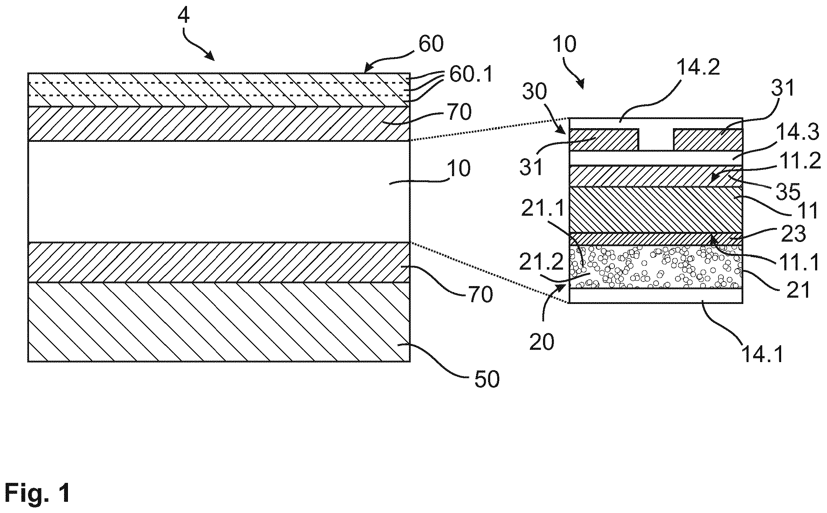

Figur 1 zeigt einen schematischen Aufbau einer erfindungsgemäßen Heizmatte 4 mit einer Detailansicht einer Basiseinheit 10 der Heizmatte 4. Die Basiseinheit 10 bildet dabei insbesondere einen Kern der Heizmatte 4. Die Basiseinheit 10 umfasst ein erstes Trägerelement 11, welches eine flächige Erstreckung mit einer ersten und einer zweiten Grundseite 11.1, 11.2 aufweist. Damit ist das erste Trägerelement 11 zum Verlegen der Heizmatte 4, beispielsweise als Teil eines Begrenzungselementes 110 des Raumes 101, insbesondere eines Fußbodens, eines Gebäudes 100 geeignet. Die erste Grundseite 11.1 bildet vorzugsweise eine Unterseite des ersten Trägerelementes 11, wenn die Heizmatte 4 im Gebäude 100 als Fußbodenheizung verbaut wird. In diesem Fall bildet entsprechend vorzugsweise die zweite Grundseite 11.2 die Oberseite des ersten Trägerelementes 11. Auf der ersten Grundseite 11.1 ist ein elektrisches Heizmittel 20 zur Abgabe von Wärme vorgesehen. Das elektrische Heizmittel 20 weist ein Widerstandselement 21 auf, welches sich auf der ersten Grundseite 11.1 des ersten Trägerelementes 11 erstreckt und vorzugsweise flächig, insbesondere plattenartig, ausgestaltet ist. Ferner weist das elektrische Heizmittel 20 ein Heizleitelement 23 auf, durch welches das Widerstandselement 21 mit einem elektrischen Anschluss 40 der Heizmatte 4 verbunden ist. Das Heizleitelement 23 und/oder das Widerstandselement 21 können auf das erste Trägerelement 11 aufgedruckt sein. Vorzugsweise ist dabei zunächst das Heizleitelement 23 direkt auf das erste Trägerelement 11 und das Widerstandselement 21 zumindest bereichsweise auf das Heizleitelement 23 und/oder zumindest bereichsweise auf das erste Trägerelement 11 aufgedruckt. Somit kann das Widerstandselement 21, welches vorzugsweise plattenartig ausgestaltet sein kann, sich über das Heizleitelement 23 erstrecken. Dabei kann das Heizleitelement 23 beispielsweise als schmaler Streifen vorgesehen sein, so dass das Widerstandselement 21 zum Teil auf das Heizleitelement 23 direkt aufgebracht ist und zum Teil auf das erste Trägerelement 11 direkt aufgebracht ist. Insbesondere sind das Heizleitelement 23 und das Widerstandselement 21 stoffschlüssig mit dem ersten Trägerelement 11 und/oder untereinander verbunden. Um den elektrischen Widerstand des Heizleitelementes 23 gering zu halten, weist das Heizleitelement 23 insbesondere ein Edelmetall, vorzugsweise Silber, auf. Das Widerstandselement 21 ist dazu ausgebildet, Wärme abzugeben, wenn es bestromt wird. Die abgegebene Wärme resultiert dabei insbesondere aus dem Widerstand des Widerstandselementes 21. Insbesondere weist das Widerstandselement 21 dazu eine Karbonpaste auf, welche Kohlenstoff 21.1 und/oder einen Füllstoff 21.2 aufweist. Der Kohlenstoff 21.1 kann vorzugsweise in gemahlener Form vorliegen. Der Füllstoff 21.2 dient ferner dazu, die Leitfähigkeit des Widerstandselementes 21 einzustellen, wobei die Leitfähigkeit des Widerstandselementes 21 zur Mengenzugabe des Füllstoffes 21.2 der Karbonpaste korrespondiert. Zur elektrischen Isolation zur Außenseite der Basiseinheit 10 ist ferner eine erste Schutzschicht 14.1 vorgesehen, welche das elektrische Heizmittel 20 zumindest bereichsweise überdeckt. Insbesondere kann die erste Schutzschicht 14.1 einen Lack, vorzugsweise einen Fotolack, umfassen.

Auf der zweiten Grundseite 11.2 des ersten Trägerelementes 11 weist die Basiseinheit 10 ein kapazitives Erfassungsmittel 30 zur Detektion eines Ereignisses 3 auf. Das Erfassungsmittel 30 umfasst dabei eine Datenleitung 35, welche insbesondere direkt auf das erste Trägerelement 11 aufgebracht ist. Die Datenleitung 35 kann dabei zur Stromversorgung und/oder Datenkommunikation des Erfassungsmittels 30 dienen. Dazu kann die Datenleitung 35 vorzugsweise mehrere, insbesondere parallel verlaufende, Datenleiter umfassen, durch welche z.B. ein Daten-BUS bereitstellbar sein kann. Die Datenleiter können z.B. als unterschiedliche und voneinander getrennte Schichten vorgesehen sein oder in einer Ebene getrennt voneinander verlaufen. Ferner umfasst das Erfassungsmittel 30 zwei Elektroden 31, zwischen welchen ein elektrisches Feld generierbar ist. Insbesondere können die beiden Elektroden 31 mit der Datenleitung 35 bereichsweise verbunden sein. Zur elektrischen Isolation, insbesondere weiterer Bereiche, kann ferner zwischen den Elektroden 31 und der Datenleitung 35 eine weitere Schutzschicht 14.3 vorgesehen sein. Dadurch kann sichergestellt sein, dass die Elektroden 31 und die Datenleitung 35 lediglich in einigen Kontaktabschnitten miteinander kontaktieren und somit das elektrische Feld nicht oder nur geringfügig durch die Datenleitung 35 beeinflusst wird. Zur elektrischen Isolation des Erfassungsmittels 30 gegenüber der Umwelt ist ferner eine zweite Schutzschicht 14.2 vorgesehen, welche zumindest bereichsweise das Erfassungsmittel 30 überdeckt. Vorzugsweise kann das Erfassungsmittel 30 mittelbar oder unmittelbar auf die zweite Grundseite 11.2 des ersten Trägerelementes 11 aufgebracht sein. Insbesondere können die Elektroden 31 und/oder die Datenleitung 35 durch ein Druckverfahren stoffschlüssig mit dem ersten Trägerelement 11 verbunden sein. Die zweite Schutzschicht 14.2 sowie die weitere Schutzschicht 14.3 können insbesondere lackiert sein und/oder durch ein Druckverfahren, vorzugsweise als Fotolack, aufgebracht sein.

Durch den beschriebenen Aufbau der Basiseinheit 10 ist diese flexibel, so dass sich die Handhabung der Heizmatte 4 von der Handhabung einer starren Platte unterscheiden kann. Dies ist insbesondere bei der Handhabung auf einer Baustelle günstig, da beispielsweise eine Person die Heizmatte 4 tragen kann, die Heizmatte 4 in einem Stapel mit weiteren Heizmatten 4 angeliefert werden kann und/oder eine Bruchgefahr der Heizmatte 4 reduziert sein kann. Insbesondere bildet die Basiseinheit 10 einen folienartigen, vorzugsweise feuchtigkeitsundurchlässigen Verbund. Um die Basiseinheit 10 weiterhin vor Feuchtigkeit zu schützen, ist ferner insbesondere mittelbar auf der zweiten Grundseite 11.2 des ersten Trägerelementes 11 eine Abdichtungsschicht 60 an der Basiseinheit 10 angeordnet. Dazu ist eine Klebeschicht 70 zwischen der Basiseinheit 10 und der Abdichtungsschicht 60 angeordnet, um die Abdichtungsschicht 60 auf der Basiseinheit 10 zu befestigen. Ferner weist die Abdichtungsschicht 60 mehrere Faserschichten 60.1 auf, so dass eine Dichtigkeit der Abdichtungsschicht 60 durch die mehreren Faserschichten 60.1 gesteigert sein kann. Insbesondere kann die Abdichtungsschicht 60 ein Vlies aufweisen. Auf der ersten Grundseite 11.1 des ersten Trägerelementes 11 ist ferner eine Schalldämpfungsschicht 50 auf der Basiseinheit 10 befestigt. Dazu ist zwischen der Schalldämpfungsschicht 50 und der Basiseinheit 10 ferner ebenfalls eine Klebeschicht 70 vorgesehen, um eine stoffschlüssige Verbindung der Basiseinheit 10 und der Schalldämpfungsschicht 50 zu gewährleisten. Die Schalldämpfungsschicht 50 wirkt sich insbesondere bei Verwendung der Heizmatte 4 als Fußbodenheizung positiv auf die Schallübertragung aus, so dass ein Trittschall reduziert wird. Durch die Ausbildung der Basiseinheit 10 mit dem Erfassungsmittel 30 in einem schichtartigen Verbund kann die Basiseinheit 10 zur Ausgestaltung einer Flächensensorik 1.2 flächig verlegt werden. Durch das elektrische Heizmittel 20 kann die Basiseinheit 10 zur Ausgestaltung einer Flächenheizung 1.1 flächig verlegt werden. Insbesondere ist somit eine Doppelfunktionalität der Heizmatte 4 gegeben, so dass bei einer Verlegung der Heizmatte 4 zum einen die Flächenheizung 1.1 ausgestaltet werden kann und zum anderen die Flächensensorik 1.2. Somit ist insbesondere lediglich eine Montage der Heizmatte 4 notwendig, um zum einen eine Sensorfunktionalität und zum anderen eine Heizfunktionalität innerhalb eines Raumes 101 des Gebäudes 100 zu realisieren. Insbesondere umfasst die Darstellung der Figur 1 lediglich schematisch einen Bereich der Heizmatte 4 in geschnittener Ansicht, wobei der Schichtaufbau z.B. eine Bedruckungsreihenfolge während der Herstellung der Heizmatte 4 abbilden kann. Insbesondere können sich zumindest die Schalldämpfungsschicht 50 und/oder die Abdichtungsschicht 60 und/oder die Schutzschichten 14.1, 14.2, 14.3 vollflächig oder abschnittsweise vollflächig über die flächige Erstreckung der Heizmatte 4 erstrecken.

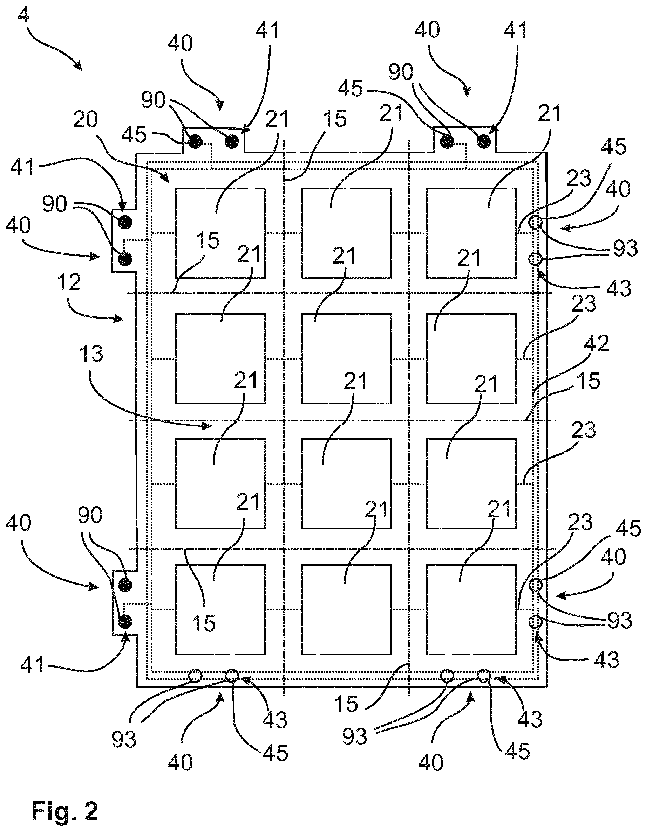

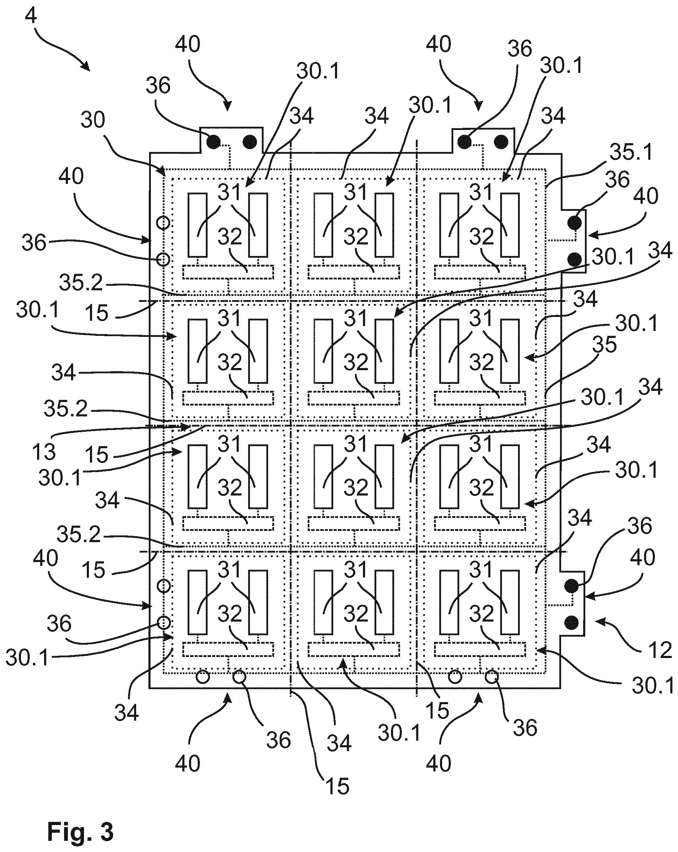

Figur 2 zeigt eine schematische Draufsicht auf die Basiseinheit 10 der Heizmatte 4 des ersten Ausführungsbeispiels auf die erste Grundseite 11.1 des ersten Trägerelementes 11. Dabei ist gezeigt, dass die Heizmatte 4 mehrere flächig, insbesondere plattenartig, ausgestaltete Widerstandselemente 21 in einem regelmäßigen Verteilungsmuster aufweist. Die Widerstandselemente 21 sind dabei über Heizleitelemente 23 mit zumindest einer in einem Randbereich 12 der Basiseinheit 10 verlaufenden Leiterbahn 42, vorzugsweise mehreren Leiterbahnen 42, verbunden. Durch die Leiterbahn 42 sind dabei die Widerstandselemente 21 mit Heizanschlüssen 45 verbunden, welche Teil von elektrischen Anschlüssen 40 sein können, die im Randbereich 12 der Basiseinheit 10 angeordnet sind. Die Widerstandselemente 21 befinden sich in einem Mittenbereich 13 der Basiseinheit 10. Die Leiterbahn 42 ist ferner umlaufend in dem Randbereich 12 vorgesehen. Dadurch kann die Heizmatte 4 in einfacher Art und Weise an eine spezielle Geometrie eines Raumes 101, wie beispielsweise einen Erker, angepasst werden, indem ein Teilbereich der Basiseinheit 10 abgeschnitten wird. Dadurch, dass mehrere elektrische Anschlüsse 40 vorgesehen sind und die Leiterbahn 42 umlaufend ausgebildet ist, kann somit zumindest ein Teil der Funktionalität des elektrischen Heizmittels 20 erhalten bleiben, wenn einzelne Widerstandselemente 21 und/oder einzelne elektrische Anschlüsse 40 abgeschnitten werden. Für zumindest Teile der übrigen Widerstandselemente 21 bleibt vorzugsweise zumindest ein elektrischer Anschluss 40 und die entsprechende Kontaktierung über die Leiterbahn 42 erhalten. Somit sind insbesondere Soll-Schnittlinien 15 vorgesehen, entlang welcher ein Zuschneiden der Heizmatte 4 zur Anpassung an die Geometrie des Raumes 101 möglich ist. Die Soll-Schnittlinien 15 sind dabei vorgezeichnet oder vorperforiert und/oder ergeben sich aus der Anordnung der Widerstandselemente 21 und/oder von Sensorelementen 30.1, welche in Fig. 3 dargestellt sind. Vorzugsweise ist die Heizmatte 4 als Heizmodul ausgebildet, um mit weiteren Heizmodulen zur Flächenheizung 1.1 und/oder zur Flächensensorik 1.2 verbunden zu werden. Um eine einfache Möglichkeit der elektrischen Verbindung bereitzustellen, weisen die elektrischen Anschlüsse 40 Verbindungsschnittstellen 41 und/oder Gegenverbindungsschnittstellen 43 auf. Insbesondere können die Verbindungsschnittstellen 41 mit Gegenverbindungsschnittstellen 43 weiterer Heizmatten verbindbar sein. Dazu kann jede Verbindungsschnittstelle zumindest ein, bevorzugt mehrere, Verbindungsmittel 90 aufweisen und jede Gegenverbindungsschnittstelle ein, bevorzugt mehrere, Gegenverbindungsmittel 93. Vorzugsweise kann die Verbindungsschnittstelle 41 und/oder die Gegenverbindungsschnittstelle 43 zur reversiblen mechanischen Befestigung ausgebildet sein. Insbesondere kann somit das Verbindungsmittel als Druckknopf ausgebildet sein und/oder das Gegenverbindungsmittel 93 als Öse. Dadurch kann eine elektrische Verbindung der Heizmatte 4 mit einer Energiequelle 2 und/oder einer Steuereinheit 22 schnell und zuverlässig verbindbar sein. Das Verbindungsmittel 90 und/oder das Gegenverbindungsmittel 93 kann vorzugsweise mit der Basiseinheit 10 durch einen elektrisch leitfähigen Klebstoff verklebt sein.

Insbesondere ist jedem Widerstandselement 21 des elektrischen Heizmittels 20 ein Sensorelement 30.1 zugeordnet. Dadurch kann ferner die Zuschneidbarkeit der Heizmatte 4 weiter vereinfacht sein, so dass eine Zuschneidung entsprechend genauso viele Sensorelemente 30.1 abtrennt, wie Widerstandselemente 21. Das Erfassungsmittel 30 ist schematisch in einer Draufsicht auf die zweite Grundseite 11.2 des ersten Trägerelementes 11 in Figur 3 dargestellt. Das Erfassungsmittel 30 weist dabei die Sensorelemente 30.1 auf, welche jeweils eine zwei Elektroden 31 aufweisen, um ein elektrisches Feld generieren zu können. Jedes Sensorelement 30.1 ist mit einer dezentralen Auswerteeinheit 32 verbunden. Die dezentrale Auswerteeinheit 32 ist ferner in der Nähe der jeweiligen Sensorelemente 30.1 angeordnet, so dass eine Verbindungsstrecke zwischen den Sensorelementen 30.1 und der jeweiligen Auswerteeinheit 32 gering gehalten werden kann. Insbesondere ist die dezentrale Auswerteeinheit 32 dazu ausgebildet, analoge Messsignale der Sensorelemente 30.1 in digitale Signale umzuwandeln. Ferner sind die dezentralen Auswerteeinheiten 32 mit einer Datenleitung 35 verbunden. Die Datenleitung 35 weist ferner einen Versorgungsabschnitt 35.2 und einen Ringabschnitt 35.1 auf. Der Ringabschnitt 35.1 ist dabei insbesondere zumindest teilweise parallel zur Leiterbahn 42, umlaufend in dem Randbereich 12 der Basiseinheit 10 angeordnet. Der Versorgungsabschnitt 35.2 ist insbesondere parallel zum Heizleitelement 23, zumindest teilweise im Mittenbereich 13 der Basiseinheit 10 angeordnet. Somit können die Auswerteeinheiten 32 über den Versorgungsabschnitt 35.2 mit dem Ringabschnitt 35.1 verbunden sein. Vorzugsweise kann jeder Versorgungsabschnitt 35.2 den Ringabschnitt 35.1 mehrfach kontaktieren. Somit ergibt sich ebenfalls eine vorteilhafte Zuschneidbarkeit der Heizmatte 4, so dass beispielsweise auch beim Abschneiden eines oberen Bereiches der Heizmatte 4 die Funktionalität von verbleibenden Sensorelementen 30.1 erhalten bleiben kann. Der Ringabschnitt 35.1 ist dazu ferner mit mehreren Datenanschlüssen 36 verbunden, welche Teil der elektrischen Anschlüsse 40 für das elektrische Heizmittel 20 sein können oder separate elektrische Anschlüsse 40 bilden können. Insbesondere kann die Datenleitung 35 mehrere Datenleitungen aufweisen, welche parallel verlaufen, um beispielsweise unterschiedliche Daten übertragen zu können und/oder einen Bus zur Verfügung zu stellen. Ferner sind in gestrichelter Darstellung Erfassungsbereiche 34 des Erfassungsmittels 30 der Heizmatte 4 dargestellt, welche durch die Sensorelemente 30.1 überwachbar sind.

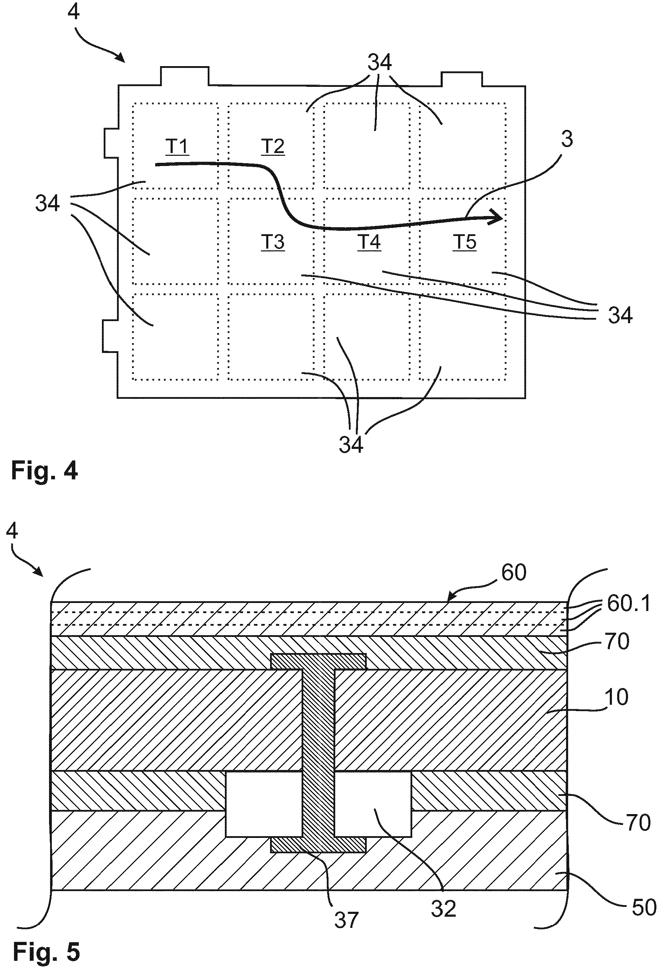

Figur 4 zeigt schematisch mehrere Erfassungsbereiche 34, welche jeweils durch die Sensorelemente 30.1 generierbar sein können. Um beispielsweise ein Verhalten einer Person oder eine Anwesenheit einer Person als Ereignis 3 detektieren zu können, kann vorgesehen sein, die Erfassungsbereiche 34 einzeln zu überwachen und insbesondere zu unterschiedlichen Zeitpunkten T1 bis T5 auszuwerten. Somit kann beispielsweise ein Ereignis 3 in Form einer Bewegung einer Person verfolgt werden, so dass sich der Einsatz der Flächensensorik 1.2 der Heizmatte 4 insbesondere auch für gewerbliche Anwendungen derart eignet, dass Besucherströme in ihrem Verhalten analysiert werden können. Dadurch kann beispielsweise eine Erkenntnis gewonnen werden, ob ein Produkt besonders interessant auf Besucher wirkt oder dergleichen.

Figur 5 zeigt ferner eine mögliche Verbindung der dezentralen Auswerteeinheit 32 mit den Sensorelementen 30.1 des Erfassungsmittels 30. Insbesondere kann die dezentrale Auswerteeinheit 32 dabei auf der ersten Grundseite 11.1 des ersten Trägerelementes 11 vorgesehen sein, auf welche auch das elektrische Heizmittel 20 angeordnet ist. Eine Verbindung der Sensorelemente 30.1 mit der dezentralen Auswerteeinheit 32 durch das erste Trägerelement 11 hindurch kann dabei in besonders einfacher Form durch jeweils ein Durchgangselement 37 gewährleistet werden, welches insbesondere als Niet ausgestaltet sein kann. Dies kann die Serienfertigung der Heizmatte 4 weiter begünstigen. Dabei kann gleichzeitig eine Befestigung der dezentralen Auswerteeinheit 32 mit der Basiseinheit 10 erfolgen. Insbesondere kann ferner die Auswerteeinheit 32 vorteilhafterweise in die Schalldämpfungsschicht 50 eingebettet sein, welche besonders nachgiebig ausgebildet sein kann und somit einen elastischen Schutz bei Belastung der Heizmatte 4, beispielsweise durch die Bewegung einer Person, bieten kann.

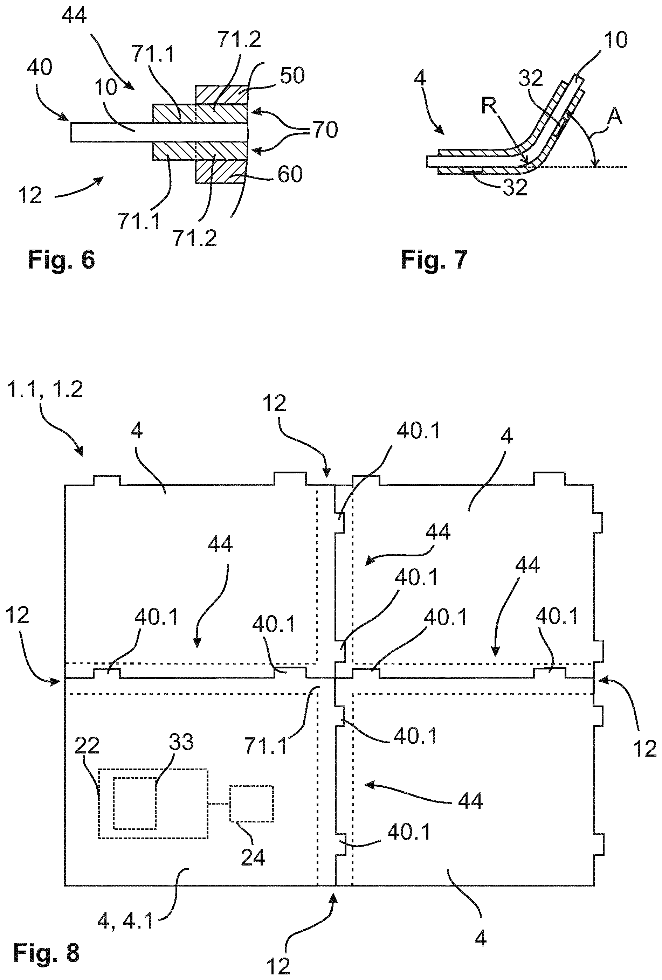

Figur 6 zeigt ferner einen Randbereich 12 der Heizmatte 4 des ersten Ausführungsbeispiels in schematischer Darstellung. Dabei ist die Basiseinheit 10 mit einem der elektrischen Anschlüsse 40 gezeigt. Ferner ist in dem Randbereich ein Teil der Klebeschichten 70 angeordnet. Zumindest eine der Klebeschichten 70 weist dabei einen ersten Klebebereich 71.1 als Befestigungsschnittstelle 44 zum Verbinden der Heizmatte 4 mit weiteren Heizmatten und/oder weiteren Komponenten der Flächenheizung 1.1 auf. Ferner ist ein zweiter Klebebereich 71.2 vorgesehen, durch welchen die Basiseinheit 10 mit der Abdichtungsschicht 60 und/oder der Schalldämpfungsschicht 50 verbunden ist. Somit lassen sich in einfacher Art und Weise mehrere Funktionen durch die jeweilige Klebeschicht erfüllen.

Figur 7 zeigt die erfindungsgemäße Heizmatte 4 des ersten Ausführungsbeispiels mit einer möglichen Biegung. Dabei ist die Heizmatte 4 um einen Biegewinkel A biegbar. Dies ist insbesondere deshalb möglich, weil die Basiseinheit 10 flexibel ausgestaltet ist. Vorzugsweise kann der erreichbare Biegewinkel A größer oder gleich 10°, vorzugweise größer oder gleich 45°, besonders bevorzugt größer oder gleich 90° sein. Der erreichbare Biegewinkel kann sich insbesondere auf eine Horizontale beziehen, wenn die Heizmatte 4 zumindest bereichsweise, z.B. auf einem Fußboden, aufliegt. Dabei kann jedoch ferner ein Biegeradius R vorgesehen sein, welcher verdeutlicht, dass der Biegewinkel A von einem Knick zu unterscheiden ist. Insbesondere können ferner die dezentralen Auswerteeinheiten 32 starr ausgebildet sein, so dass eine Biegung zwischen den dezentralen Auswerteeinheiten 32 möglich ist.

Figur 8 zeigt ferner eine Verbindung mehrerer Heizmatten 4. Die Heizmatten 4 bilden dabei die Flächenheizung 1.1 beziehungsweise die Flächensensorik 1.2. Untereinander sind die Heizmatten 4 durch elektrische Anschlüsse 40 verbunden, durch welche jeweils eine elektrische Verbindung 40.1 hergestellt sein kann. Die elektrische Verbindung 40.1 kann dabei eine Energieversorgung und/oder eine Datenverbindung zur Verfügung stellen. Eine der Heizmatten 4 ist dabei vorzugsweise als Masterelement 4.1 ausgebildet, welche direkt mit der Steuereinheit 22 in Kommunikationsverbindung stehen kann. Insbesondere kann das Masterelement 4.1 einen Temperatursensor 24 zum Kalibrieren und/oder Justieren der Flächenheizung 1.1 aufweisen. Ferner ist dargestellt, dass die Heizmatten 4 in ihren Randbereichen 12 überlappen. Insbesondere können die Randbereiche 12 jeweils erste Klebebereiche 71.1 aufweisen, welche eine Befestigungsschnittstelle 44 bilden können. Durch die Befestigungsschnittstellen 44 sind die Heizmatten 4.1, 4.2 insbesondere untereinander befestigbar. Die Steuereinheit 22, welche mit dem Masterelement 4.1 in Verbindung steht, kann ferner ein zentrales Steuergerät 33 aufweisen, durch welches vorzugsweise eine Heizleistung der Heizmatten 4 und eine Detektion von Ereignissen 3 der Heizmatten 4 steuerbar bzw. auswertbar sein können. Vorzugsweise kann das zentrale Steuergerät 33 in einer Unterputzdose eines Raumes 101 eines Gebäudes 100 vorgesehen sein.

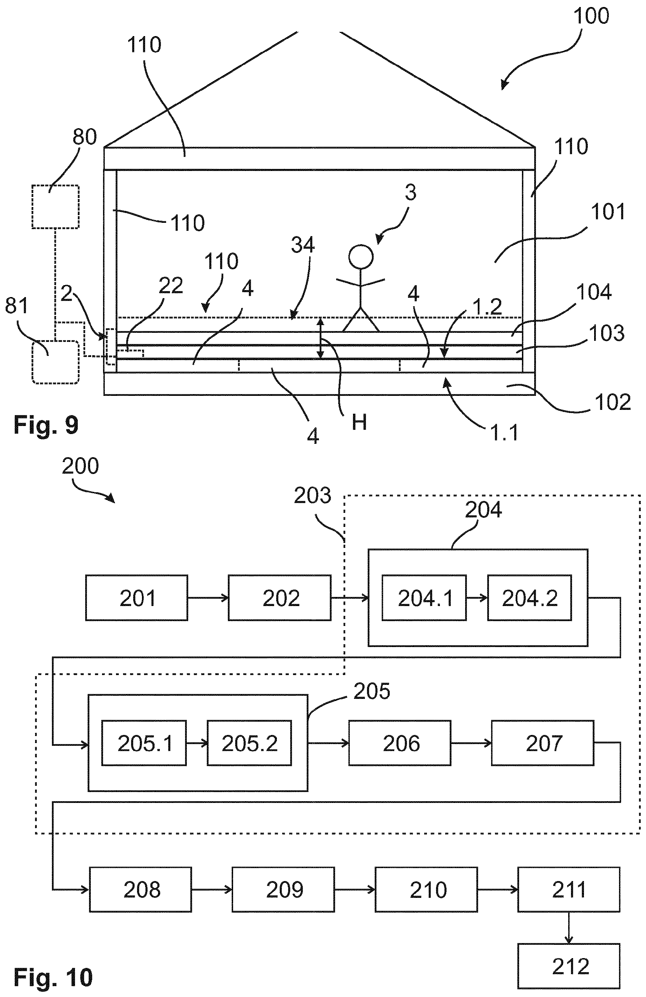

Figur 9 zeigt ferner ein Gebäude 100 mit einem Raum 101, welcher durch eine Flächenheizung 1.1 beheizbar ist und durch eine Flächensensorik 1.2 zumindest bereichsweise überwachbar ist. Das Überwachen des Raumes 101 kann dabei eine Detektion eines Ereignisses 3 umfassen, wobei das Ereignis 3 vorzugsweise eine Aktivität einer Person umfassen kann. Insbesondere kann die Aktivität der Person ein Aufenthalt der Person sein. Insbesondere kann ferner die Flächensensorik 1.2 zur kapazitiven Detektion des Ereignisses 3 ausgebildet sein. Die Flächenheizung 1.1 und die Flächensensorik 1.2 sind dabei durch erfindungsgemäße Heizmatten 4 ausgebildet, vorzugsweise durch einen Verbund mehrerer Heizmatten 4 gemäß des ersten Ausführungsbeispiels. Dazu sind die Heizmatten 4 auf einem Bauelement 102 eines Begrenzungselementes 110 des Raumes 101 angeordnet. Das Bauelement 102 kann vorzugsweise ein Fußbodenrohbauteil sein. Auf den Heizmatten 4 ist ferner ein Funktionsbelag 103, welcher vorzugsweise ein Estrich sein kann, sowie ein Sichtbelag 104, welcher beispielsweise Fliesen und/oder Teppich und/oder Laminat und/oder dergleichen umfassen kann, angeordnet. Die Flächensensorik 1.2 und/oder die Flächenheizung 1.1 können dabei mit einer externen Recheneinheit 80 und/oder einem mobilen Endgerät 81 verbunden und/oder verbindbar sein. Dadurch kann beispielsweise eine Fernsteuerung der Flächenheizung 1.1 und/oder eine Fernüberwachung der Flächensensorik 1.2 durch einen Benutzer auch außerhalb des Gebäudes 100 und/oder in einem anderen Raum des Gebäudes 100 durchgeführt werden. Vorzugsweise können Erfassungsbereiche 34 zur Detektion des Ereignisses 3 vorgesehen sein, welche ausgehend von Sensorelementen 30.1 der Heizmatten 4 eine Höhe H von größer oder gleich 10 mm, vorzugsweise von größer oder gleich 25mm, besonders bevorzugt von größer oder gleich 40 mm, aufweisen, um eine zuverlässige Detektion des Ereignisses 3 außerhalb des Begrenzungselementes 110 zu ermöglichen.

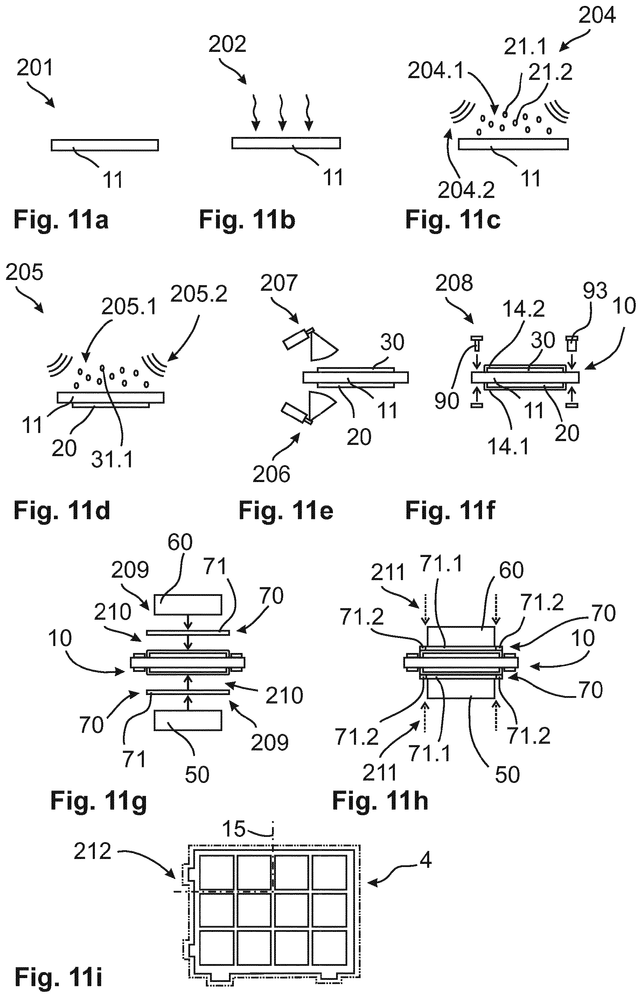

Die Figuren 10 und 11a bis 11i zeigen ferner Verfahrensschritte 201 bis 212 eines erfindungsgemäßen Verfahrens 200 zur Herstellung einer Heizmatte 4 in einem weiteren Ausführungsbeispiel. Vorzugsweise kann dadurch eine Heizmatte des ersten Ausführungsbeispiels herstellbar sein. Das Verfahren 200 umfasst ein Bereitstellen 201 eines ersten Trägerelementes 11, welches eine flächige Erstreckung mit einer ersten Grundseite 11.1 und einer zweiten Grundseite 11.2 aufweist. Das Bereitstellen 201 des ersten Trägerelementes 11 kann vorzugsweise ein Herstellen einer Folie umfassen. Ferner ist ein Vortemperieren 202 des ersten Trägerelementes 11 vorgesehen, um bei späteren Verfahrensschritten einen Schrumpf des ersten Trägerelementes 11 zu reduzieren. Dabei wird das erste Trägerelement 11 vorzugsweise erwärmt und/oder abgekühlt. Ferner umfasst das Verfahren 200 ein Erstellen 203 einer flexiblen Basiseinheit 10. Das Erstellen 203 der flexiblen Basiseinheit 10 umfasst dabei ein Aufbringen 204 eines elektrischen Heizmittels 20 auf der ersten Grundseite 11.1 des ersten Trägerelementes 11. Dabei kann insbesondere ein Aufbringen 201.1 eines Leitermaterials 21.1, 21.2 des elektrischen Heizmittels 20 in zumindest teilweise flüssiger Form auf der ersten Grundseite 11.1 des ersten Trägerelementes 11 vorgesehen sein. Nach dem Aufbringen 204.1 des Leitermaterials 21.1, 21.2 kann ferner ein Aushärten 204.2 des Leitermaterials 21.1, 21.2 vorgesehen sein. Das Aushärten 204.2 kann vorzugsweise durch eine UV-Bestrahlung und/oder eine Wärmebestrahlung beschleunigt werden. Somit kann das Aufbringen 204 des elektrischen Heizmittels 20 insbesondere ein Aufdrucken des elektrischen Heizmittels 20 auf das erste Trägerelement 11 und/oder weitere Komponenten der Basiseinheit 10 umfassen. Ferner umfasst das Erstellen 203 der Basiseinheit 10 ein Aufbringen 205 eines Erfassungsmittels 30 zum Detektieren eines Ereignisses 3 auf der zweiten Grundseite 11.2 des ersten Trägerelementes 11, so dass zumindest die Basiseinheit 10 zur Ausgestaltung einer Flächensensorik 1.2 flächig verlegbar ist. Das Aufbringen 205 des Erfassungsmittels 30 kann dabei vorzugsweise analog zum Aufbringen 204 des elektrischen Heizmittels 20 erfolgen, wobei ein Aufbringen 205 eines Sensormaterials 31.1 des Erfassungsmittels 30 in zumindest teilweise flüssiger Form auf der zweiten Grundseite 11.2 des ersten Trägerelementes 11 und ein Aushärten 205.2 des Sensormaterials 31.1 erfolgt. Somit kann auch das Erfassungsmittel 30 insbesondere auf das erste Trägerelement 11 aufgedruckt werden. Ferner umfasst das Erstellen 203 der Basiseinheit 10 ein Aufbringen 206 einer ersten Schutzschicht 14.1 auf das elektrische Heizmittel 20, insbesondere durch Lackieren, und ein Aufbringen 207 einer zweiten Schutzschicht 14.2 auf das Erfassungsmittel 30, insbesondere ebenfalls durch Lackieren. Dadurch können das Erfassungsmittel 30 und/oder das elektrische Heizmittel 20 zumindest bereichsweise elektrisch isoliert und/oder vor Umgebungsbedingungen geschützt sein. Insbesondere anschließend ist ein Erstellen 208 einer Verbindungsschnittstelle 41 und/oder einer Gegenverbindungsschnittstelle 43 durch Aufpressen eines Verbindungsmittels 90 bzw. eines Gegenverbindungsmittels 93 vorgesehen. Insbesondere können die Verbindungsschnittstelle 41 und/oder die Gegenverbindungsschnittstelle 43 zum Herstellen einer reversiblen mechanischen Verbindung der Heizmatte 4 ausgebildet sein. Somit kann das Gegenverbindungsmittel 93 beispielsweise eine Öse aufweisen und das Verbindungsmittel 90 kann vorzugsweise einen Druckknopf aufweisen, welcher mit einer Öse verbindbar sein kann. Somit können mehrere Heizmatten 4 zusammenschaltbar sein. Vorteilhafterweise umfasst das Verfahren 200 ferner ein Aufbringen 209 einer Klebeschicht 70 auf eine Abdichtungsschicht 60 und/oder auf eine Schalldämpfungsschicht 50 und/oder auf die Basiseinheit 10. Daraufhin erfolgt ein Befestigen 210 der Abdichtungsschicht 60 und/oder der Schalldämpfungsschicht 70 auf der Basiseinheit 10 durch die Klebeschicht 70. Um eine vorteilhafte mechanische Verbindung der Heizmatte 4 mit weiteren Bauelementen zu erreichen, kann ferner die Klebeschicht 70 ein Klebeband 71 umfassen, welches durch Einritzen 211 in zumindest zwei getrennt verwendbare Klebebereiche 71.1, 71.2 unterteilbar sein kann. Ferner kann das Verfahren 200 ein Zuschneiden 212 zumindest des ersten Trägerelementes 11 umfassen. Es ist denkbar, dass der Verbund aus Basiseinheit 10, Abdichtungsschicht 60 und Schalldämpfungsschicht 50 gemeinsam zur Definition der äußeren Form zugeschnitten wird, so dass eine Standardgröße und/oder eine an den Raum 101 Form der Heizmatte 4 4 entsteht. Alternativ kann das Zuschneiden 212 bereits vorher im Verfahren 200, insbesondere vor nach dem Aufbringen 207 der zweiten Schutzschicht 14.2 auf das Erfassungsmittel 30, durchgeführt werden. Dadurch kann die Form für die weiteren Verfahrensschritte 208-211 bereits vorgegeben sein, so dass beispielsweise Abmessungen aus diesen Verfahrensschritten 208-211 an der Form orientiert werden können. Dadurch ergibt sich ein einfaches Herstellverfahren für die Heizmatte 4, insbesondere wobei das Herstellverfahren für die Heizmatte 4 zentral an einem von der Baustelle separaten Produktionsort, insbesondere in Serie und/oder teilautomatisiert, durchgeführt werden kann.

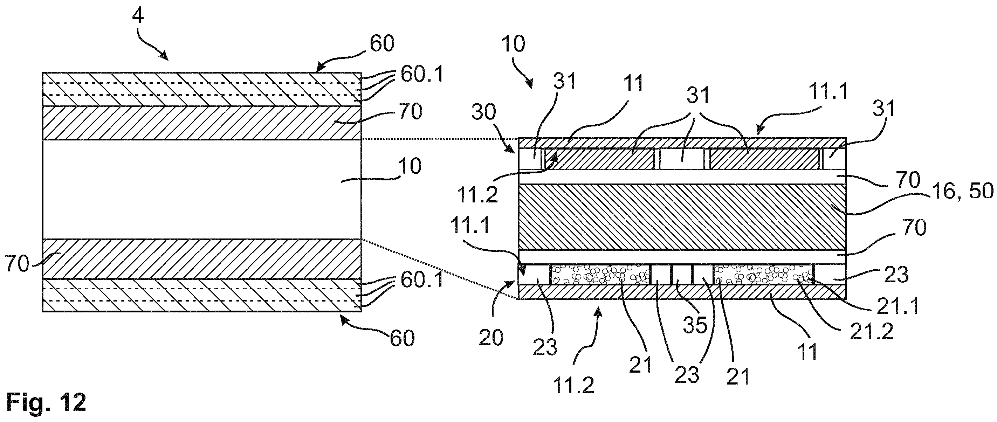

Figur 12 zeigt einen schematischen Aufbau einer erfindungsgemäßen Heizmatte 4 mit einer Detailansicht einer Basiseinheit 10 der Heizmatte 4. Die Basiseinheit 10 bildet dabei insbesondere einen Kern der Heizmatte 4 mit einer quadratischen Grundfläche. Die Basiseinheit 10 umfasst ein erstes und ein zweites Trägerelement 11, welche jeweils eine flächige Erstreckung mit einer ersten und einer zweiten Grundseite 11.1, 11.2 aufweisen. Vorzugsweise ist an der Basiseinheit 10 zumindest eine Abdichtungsschicht 60 angeordnet, insbesondere durch eine Klebeschicht 70 befestigt. Dabei kann die Abdichtungsschicht 60 mit der Klebeschicht 70 am ersten und/oder zweiten Trägerelement 11 angeordnet sein. Zusätzlich oder alternativ kann eine Schalldämpfungsschicht 50, wie im ersten Ausführungsbeispiel dargestellt, an der Basiseinheit 10 angeordnet sein. Damit sind das erste und zweite Trägerelement 11 zum Verlegen der Heizmatte 4, beispielsweise als Teil eines Begrenzungselementes 110 des Raumes 101, insbesondere eines Fußbodens, eines Gebäudes 100 geeignet. Dabei wird insbesondere auf die Darstellung in Figur 9 Bezug genommen. Die erste Grundseite 11.1 des ersten Trägerelementes 11 bildet vorzugsweise eine Oberseite des ersten Trägerelementes 11, wenn die Heizmatte 4 im Gebäude 100 als Fußbodenheizung verbaut wird. In diesem Fall bildet entsprechend die zweite Grundseite 11.2 des ersten Trägerelementes 11 die Unterseite des ersten Trägerelementes 11 und/oder der Basiseinheit 10. Auf der ersten Grundseite 11.1 des ersten Trägerelementes 11 ist ein elektrisches Heizmittel 20 zur Abgabe von Wärme vorgesehen. Die erste Grundseite 11.1 des zweiten Trägerelementes 11 bildet vorzugsweise eine Oberseite des zweiten Trägerelementes 11 und/oder der Basiseinheit 10, wenn die Heizmatte 4 im Gebäude 100 als Fußbodenheizung verbaut wird. In diesem Fall bildet entsprechend vorzugsweise die zweite Grundseite 11.2 die Unterseite des zweiten Trägerelementes 11. Damit sind die erste Grundseite 11.1 des ersten Trägerelementes 11 und die zweite Grundseite 11.2 des zweiten Trägerelementes 11 einander zugewandt. Auf der zweiten Grundseite 11.2 des zweiten Trägerelementes 11 ist ein Erfassungsmittel 30 zur Detektion eines Ereignisses 3 vorgesehen. Das Heizmittel 20 und das Erfassungsmittel 30 sind somit zwischen dem ersten und zweiten Trägerelement 11 angeordnet und damit zumindest teilweise geschützt. Zwischen dem ersten und zweiten Trägerelement 11 ist ferner ein Zwischenelement 16 angeordnet, das vorzugsweise als Schalldämpfungsschicht 50 ausgebildet ist. Damit ist durch das Zwischenelement 16 ein räumlicher Abstand und/oder eine elektrische Isolation zwischen dem ersten und zweiten Trägerelement 11 gewährleistet. Gleichzeitig kann ein Trittschall durch das Zwischenelement 16 reduziert sein.

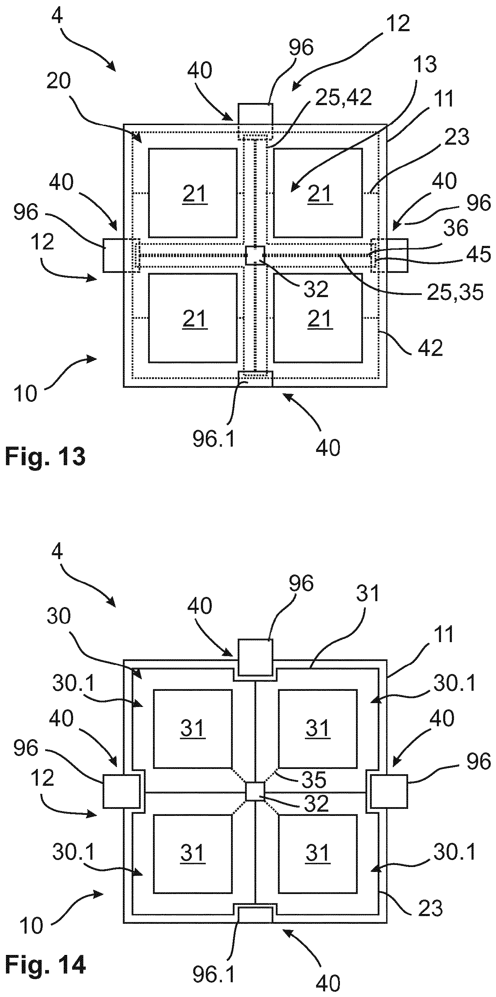

Figur 13 zeigt eine Draufsicht auf das erste Trägerelement 11 der Basiseinheit 10 mit dem elektrischen Heizmittel 20. Das elektrische Heizmittel 20 weist zumindest ein Widerstandselement 21 auf, welches sich auf der ersten Grundseite 11.1 des ersten Trägerelementes 11 erstreckt und vorzugsweise flächig, insbesondere plattenartig, ausgestaltet ist. Ferner weist das elektrische Heizmittel 20 zumindest zwei Leiterbahnen 42 auf, durch welche das Widerstandselement 21 mit einem elektrischen Anschluss 40 der Heizmatte 4 verbunden ist. Die Leiterbahnen 42 und/oder das Widerstandselement 21 können auf das erste Trägerelement 11 aufgedruckt sein. Vorzugsweise sind dabei zunächst die Leiterbahnen 42 direkt auf das erste Trägerelement 11 und das Widerstandselement 21 zumindest bereichsweise auf mit den Leiterbahnen 42 verbundene Heizleitelemente 23 und/oder zumindest bereichsweise auf das erste Trägerelement 11 aufgedruckt. Insbesondere sind die Leiterbahnen 42, die Heizleitelemente 23 und das Widerstandselement 21 stoffschlüssig mit dem ersten Trägerelement 11 und/oder untereinander verbunden. Um den elektrischen Widerstand der Heizleitelemente 23 und der Leiterbahnen 42 gering zu halten, weisen die Heizleitelemente 23 und die Leiterbahnen 42 insbesondere ein Edelmetall, vorzugsweise Silber, auf. Das Widerstandselement 21 ist dazu ausgebildet, Wärme abzugeben, wenn es bestromt wird. Die abgegebene Wärme resultiert dabei insbesondere aus dem Widerstand des Widerstandselementes 21. Insbesondere weist das Widerstandselement 21 dazu eine Karbonpaste auf, welche Kohlenstoff 21.1 und/oder einen Füllstoff 21.2 aufweist. Zur elektrischen Isolation des Heizmittels 20 kann ferner, wie im ersten Ausführungsbeispiel, eine erste Schutzschicht 14.1 vorgesehen sein, welche das elektrische Heizmittel 20 zumindest bereichsweise überdeckt. Insbesondere weist das Heizmittel 20 mehrere Widerstandselemente 21 in einem regelmäßigen Muster auf. Eine der Leiterbahnen 42 ist als kreuzartig umlaufender Anschlussabschnitt 25 ausgebildet. Dadurch können elektrische Anschlüsse 40, die in einem Randbereich 12 der Basiseinheit 10 angeordnet sind auch dann noch zur Energieversorgung eines der Widerstandselemente 21 eingesetzt werden, wenn die Heizmatte 4 zur Anpassung an eine Geometrie des Raumes 101 zugeschnitten wird. Eine der Leiterbahnen 42 weist ferner einen in einem Randbereich 12 der Basiseinheit 10 umlaufend verlaufenden Abschnitt auf, durch welchen die Zuschneidbarkeit der Heizmatte 4 verbessert ist.

Das Erfassungsmittel 30 kann vorzugsweise zur kapazitiven Detektion des Ereignisses 3 ausgebildet sein. Die Basiseinheit 10 umfasst dabei zumindest eine Datenleitung 35, welche insbesondere direkt auf das erste und/oder zweite Trägerelement 11 aufgebracht ist. Gemäß Figur 13 umfasst die Datenleitung 35 dabei Anschlussabschnitte 25, die sich kreuzartig von einer mittig an der Basiseinheit 10 angeordneten dezentralen Auswerteeinheit 32 zu den elektrischen Anschlüssen 40 erstrecken. Die Datenleitung 35 kann dabei zur Stromversorgung und/oder Datenkommunikation des Erfassungsmittels 30 dienen. Dazu kann die Datenleitung 35 vorzugsweise mehrere, insbesondere parallel verlaufende, Datenleiter umfassen, durch welche z.B. ein Daten-BUS bereitstellbar sein kann. Figur 14 zeigt eine Draufsicht auf das zweite Trägerelement 11 der Basiseinheit 10 mit dem Erfassungsmittel 30. Ferner umfasst das Erfassungsmittel 30 zwei Elektroden 31, durch welche gemeinsam ein elektrisches Feld generierbar ist. Eine der Elektroden 31 ist als Schirmelektrode zur Begrenzung des elektrischen Feldes und im Randbereich 12 der Basiseinheit 10 umlaufend ausgebildet. Zur elektrischen Isolation des Erfassungsmittels 30 gegenüber der Umwelt kann ferner eine zweite Schutzschicht 14.2, wie im Ausführungsbeispiel gemäß Figur 1 dargestellt, vorgesehen sein, wobei die zweite Schutzschicht 14.2 vorzugsweise zumindest bereichsweise das Erfassungsmittel 30 überdeckt. Insbesondere ist das Erfassungsmittel 30 mittelbar oder unmittelbar auf die zweite Grundseite 11.2 des zweiten Trägerelementes 11 aufgebracht. Ferner können die Elektroden 31 und/oder die Datenleitung 35 durch ein Druckverfahren stoffschlüssig mit dem zweiten Trägerelement 11 verbunden sein. Das Erfassungsmittel 30 weist für die Detektion des Ereignisses 3 vier Sensorelemente 30.1 auf, welche jeweils durch eine Elektrode 31 und die umlaufende Elektrode 31 in Form der Schirmelektrode gebildet sind. Dadurch sind insbesondere vier Erfassungsbereiche 34 zur Detektion des Ereignisses 3 geschaffen.

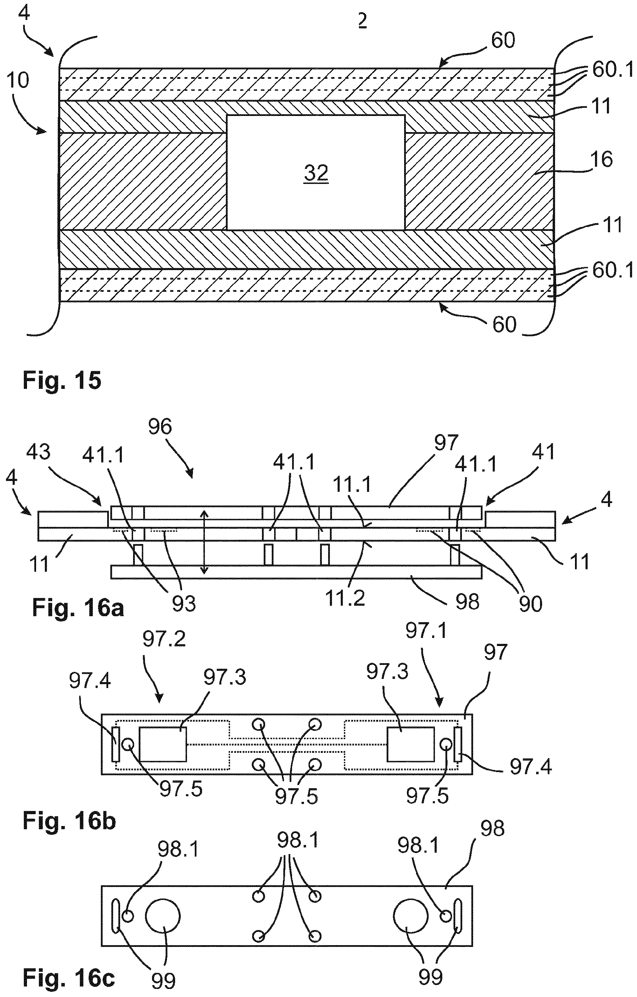

Die dezentrale Auswerteeinheit 32 ist mit jedem der Sensorelemente 30.1 der Heizmatte 4 verbunden. Die dezentrale Auswerteeinheit 32 ist durch die mittige Anordnung ferner in der Nähe der jeweiligen Sensorelemente 30.1 angeordnet, so dass eine Verbindungsstrecke zwischen den Sensorelementen 30.1 und der jeweiligen Auswerteeinheit 32 gering gehalten werden kann. Insbesondere ist die dezentrale Auswerteeinheit 32 dazu ausgebildet, analoge Messsignale der Sensorelemente 30.1 in digitale Signale umzuwandeln. Weiterhin kann eine Vorauswertung der Messsignale durch die dezentrale Auswerteeinheit 32 durchgeführt werden. Figur 15 zeigt ferner die Anordnung der dezentralen Auswerteeinheit 32 in der Basiseinheit 10 in geschnittener Ansicht. Die dezentrale Auswerteinheit 32 erstreckt sich zumindest teilweise in eine Aufnahmeöffnung des Zwischenelementes 16. Dadurch ist durch die dezentrale Auswerteinheit 32 auch eine elektrische Verbindung zwischen Komponenten des ersten und zweiten Trägerelementes 11 ermöglicht. Insbesondere können dadurch die Anschlussabschnitte 25 der Datenleitung 35 über die dezentrale Auswerteinheit 32 mit dem Erfassungsmittel 30 verbunden sein.

Die elektrischen Anschlüsse 40 weisen, wie in Figur 16a dargestellt, jeweils eine Verbindungsschnittstelle 41 zum Verbinden des elektrischen Heizmittels 20 und des Erfassungsmittels 30 mit einer Verbindungseinheit 96 auf. Durch die Verbindungseinheit 96 kann eine elektrische Verbindung der Verbindungsschnittstelle 41 mit einer Gegenverbindungsschnittstelle 43 gewährleistet werden, so dass über den elektrischen Anschluss 40 zumindest mittelbar ein Anschluss der Heizmatte 4 an eine Energiequelle 2 und/oder eine Steuereinheit 22 möglich ist. Insbesondere kann die Heizmatte 4 zum Anschluss an die Energiequelle 2 und/oder die Steuereinheit 22 mit einer weiteren Heizmatte 4 und/oder ein Netzwerk aus weiteren Heizmatten 4 verbunden sein. Dementsprechend kann die Gegenverbindungsschnittstelle 43 Teil der weiteren Heizmatte 4 sein. Nicht benötigte elektrische Anschlüsse 40 können vorzugsweise durch ein Blindstück 96.1 verschließbar sein. Die Verbindungseinheit 96 weist ferner einen flächigen Verbindungskörper 97, wie in Figur 16b dargestellt, und einen flächigen Befestigungskörper 98, wie in Figur 16c dargestellt, auf. Für die elektrische Verbindung der Verbindungsschnittstelle 41 und der Gegenverbindungsschnittstelle 43 kann der Verbindungskörper 97 in einer Ausnehmung 46 der Basiseinheit 10 der Heizmatte 4 angeordnet werden. Dabei weist der Verbindungskörper 97 einen ersten und einen zweiten Kontaktabschnitt 97.1, 97.2 auf, die miteinander elektrisch verbunden sind. Um eine separate Kontaktierung des Erfassungsmittels 30 und des Heizmittels 20 zu gewährleisten, weisen der erste und zweite Kontaktabschnitt 97.1, 97.2 jeweils zumindest ein erstes Kontaktelement 97.3 und ein zweites Kontaktelement 97.4 auf, wobei die ersten Kontaktelemente 97.3 und zweiten Kontaktelemente 97.4 jeweils separat miteinander verbunden sind. Die Verbindungsschnittstelle 41 weist ferner zwei Verbindungsmittel 90 in Form elektrischer Kontakte auf der ersten Grundseite 11.1 des ersten Trägerelementes 11 auf. Die Gegenverbindungsschnittstelle 43 weist zwei analog ausgestaltete Gegenverbindungsmittel 93 in Form elektrischer Kontakte auf. Somit können durch die Verbindungseinheit 96 zwei gleichartige Schnittstellen 41, 43 in einfacher Art und Weise baustellengerecht verbunden werden. Um die Befestigung der Verbindungseinheit 96 zu vereinfachen ist ferner der Befestigungskörper 98 vorgesehen. Dieser kann auf einer dem Verbindungskörper 97 gegenüberliegenden Seite des ersten Trägerelementes 11 angeordnet werden. Ferner umfasst der Befestigungskörper 98 Magneten 99, die mit den Kontaktelementen 97.3 in Wirkverbindung bringbar sind. Insbesondere sind die Kontaktelemente 97.3 dazu magnetisierbar. Werden somit der Befestigungskörper 98 und der Verbindungskörper 97 derart angeordnet, dass das erste Trägerelement 11 zwischen dem Befestigungskörper 98 und dem Verbindungskörper 97 angeordnet ist, wird das erste Trägerelement 11 durch die Verbindungseinheit 96 eingeklemmt. Gleichzeitig bewirken die Magneten 99 eine Magnetkraft auf die Kontaktelemente 97.3, so dass die Kontaktelemente 97.3 gegen die Verbindungsmittel 90 bzw. die Gegenverbindungsmittel 93 gepresst werden. Dadurch ergibt sich zum einen eine kraftschlüssige Befestigung der Verbindungseinheit 96 an der Heizmatte 4 und zum anderen eine zuverlässige Kontaktierung. Für eine formschlüssige Verbindung und eine korrekte Positionierung der Verbindungseinheit 96 weist der Befestigungskörper 98 ferner zumindest eine Positionierhilfe 98.1 in Form von Vorsprüngen, der Verbindungskörper 97 zumindest eine Gegenpositionierhilfe 97.5 und die Verbindungsschnittstelle 41 zumindest ein Ausrichtmittel 41.1 auf. Bei der Befestigung der Verbindungseinheit 96 an der Verbindungsschnittstelle wirkt die Positionierhilfe 98.1 mit der Gegenpositionierhilfe 97.5 und dem Ausrichtmittel 41.1, so dass eine formschlüssige Verbindung entsteht. Weiterhin wird durch die geschickte Anordnung und Ausgestaltung der Positionierhilfe 98.2, der Gegenpositionierhilfe 97.5 und des Ausrichtmittels 41.1 eine Fehlpositionierung der Verbindungseinheit 96 verhindert.

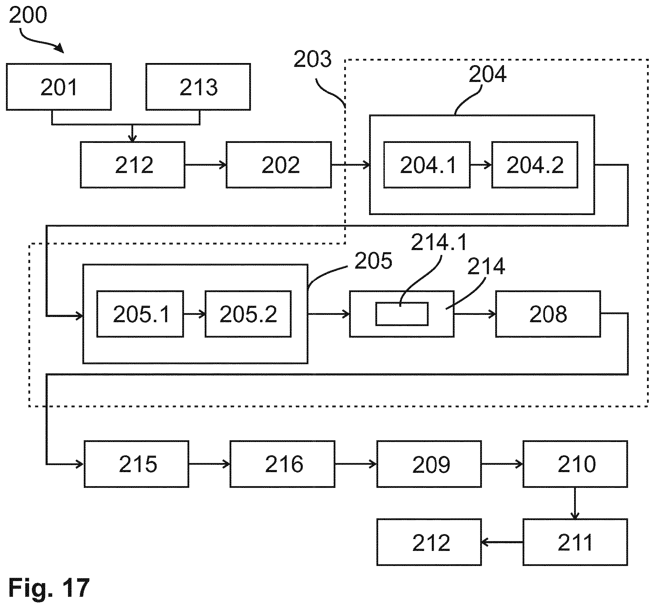

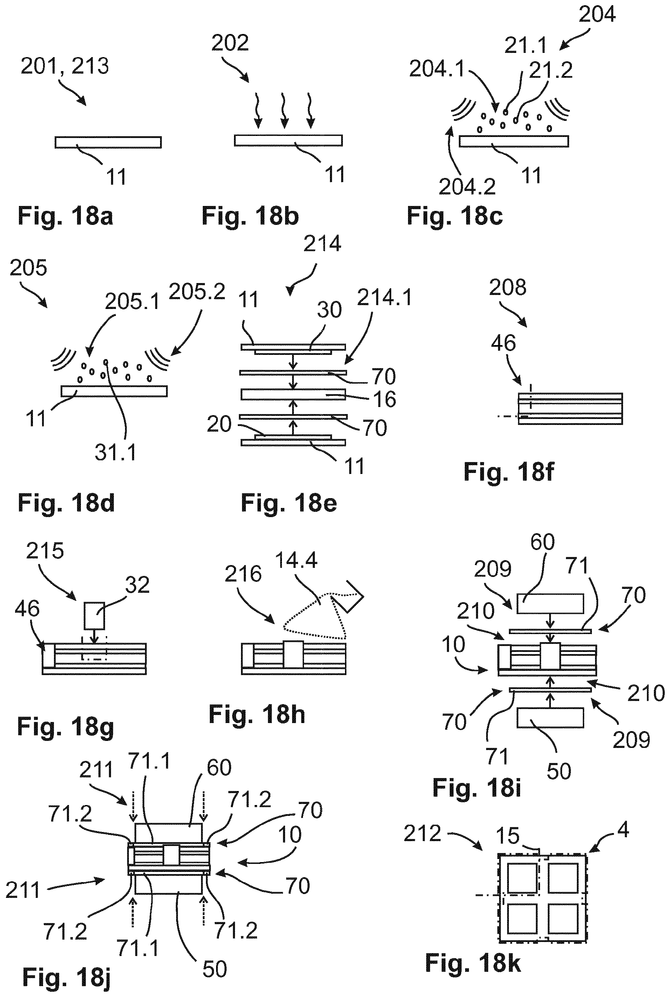

Die Figuren 17 und 18a bis 11k zeigen ferner Verfahrensschritte eines erfindungsgemäßen Verfahrens 200 zur Herstellung einer Heizmatte 4 in einem weiteren Ausführungsbeispiel. Vorzugsweise kann dadurch eine Heizmatte des Ausführungsbeispiels gemäß den Figuren 12 bis 16 herstellbar sein. Das Verfahren 200 umfasst ein Bereitstellen 201 eines ersten Trägerelementes 11 und ein Bereitstellen 213 eines zweiten Trägerelementes 11, welche jeweils eine flächige Erstreckung mit einer ersten Grundseite 11.1 und einer zweiten Grundseite 11.2 aufweisen. Das Bereitstellen 201, 213 der Trägerelemente 11 kann vorzugsweise jeweils ein Herstellen einer Folie umfassen. Vorzugsweise kann ein Zuschneiden 212 bereits nach dem Bereitstellen des ersten und zweiten Trägerelementes 11 erfolgen. Dadurch kann die Form für die weiteren Verfahrensschritte bereits vorgegeben sein, so dass beispielsweise Abmessungen aus diesen Verfahrensschritten an der Form orientiert werden können. Dadurch ergibt sich ein einfaches Herstellverfahren für die Heizmatte 4, insbesondere wobei das Herstellverfahren für die Heizmatte 4 zentral an einem von der Baustelle separaten Produktionsort, insbesondere in Serie und/oder teilautomatisiert, durchgeführt werden kann. Weiterhin ist ein Vortemperieren 202 des ersten und zweiten Trägerelementes 11 vorgesehen, um bei späteren Verfahrensschritten einen Schrumpf der Trägerelemente 11 zu reduzieren. Dabei werden die Trägerelemente 11 vorzugsweise erwärmt und/oder abgekühlt.

Ferner umfasst das Verfahren 200 ein Erstellen 203 einer flexiblen Basiseinheit 10. Das Erstellen 203 der flexiblen Basiseinheit 10 umfasst dabei ein Aufbringen 204 eines elektrischen Heizmittels 20 auf der ersten Grundseite 11.1 des ersten Trägerelementes 11. Dabei kann insbesondere ein Aufbringen 204.1 eines Leitermaterials 21.1, 21.2 des elektrischen Heizmittels 20 in zumindest teilweise flüssiger Form auf der ersten Grundseite 11.1 des ersten Trägerelementes 11 vorgesehen sein. Nach dem Aufbringen 204.1 des Leitermaterials 21.1, 21.2 kann ferner ein Aushärten 204.2 des Leitermaterials 21.1, 21.2 vorgesehen sein. Das Aushärten 204.2 kann vorzugsweise durch eine UV-Bestrahlung und/oder eine Wärmebestrahlung beschleunigt werden. Somit kann das Aufbringen 204 des elektrischen Heizmittels 20 insbesondere ein Aufdrucken des elektrischen Heizmittels 20 auf das erste Trägerelement 11 und/oder weitere Komponenten der Basiseinheit 10 umfassen. Ferner umfasst das Erstellen 203 der Basiseinheit 10 ein Aufbringen 205 eines Erfassungsmittels 30 zum Detektieren eines Ereignisses 3 auf der zweiten Grundseite 11.2 des zweiten Trägerelementes 11, so dass zumindest die Basiseinheit 10 zur Ausgestaltung einer Flächensensorik 1.2 flächig verlegbar ist. Das Aufbringen 205 des Erfassungsmittels 30 kann dabei vorzugsweise analog zum Aufbringen 204 des elektrischen Heizmittels 20 erfolgen, wobei ein Aufbringen 205.1 eines Sensormaterials 31.1 des Erfassungsmittels 30 in zumindest teilweise flüssiger Form auf der zweiten Grundseite 11.2 des zweiten Trägerelementes 11 und ein Aushärten 205.2 des Sensormaterials 31.1 erfolgt. Somit kann das Erfassungsmittel 30 insbesondere auf das zweite Trägerelement 11 aufgedruckt werden. Ferner kann das Erstellen 203 der Basiseinheit 10 ein Aufbringen 206 einer ersten Schutzschicht 14.1 auf das elektrische Heizmittel 20 und ein Aufbringen 207 einer zweiten Schutzschicht 14.2 auf das Erfassungsmittel 30, wie in den Figuren 10 und 11e dargestellt, umfassen, um zumindest bereichsweise eine elektrische Isolation und/oder einen Schutz vor Umgebungsbedingungen zu gewährleisten. Weiterhin erfolgt ein Befestigen 214 des ersten und zweiten Trägerelementes 11 miteinander, indem ein Anordnen 214.1 eines Zwischenelementes 16 zwischen dem ersten und zweiten Trägerelement 11 erfolgt und das Zwischenelement 16 jeweils durch eine Klebeschicht 70, die vorzugsweise als doppelseitiges Klebeband 71 ausgestaltet sein kann, mit den Trägerelementen 11 befestigt wird. Weiterhin umfasst das Verfahren 200 ist ein Erstellen 208 einer Verbindungsschnittstelle 41 durch Schneiden einer Ausnehmung 46, in welche eine Verbindungseinheit 96 einsetzbar ist, in die Basiseinheit 10. Dabei ist die Ausnehmung 46 durch das erste Trägerelement 11 zumindest teilweise begrenzt, wie z.B. in Figur 16a dargestellt. Insbesondere kann die Verbindungsschnittstelle 41 zum Herstellen einer reversiblen mechanischen Verbindung der Heizmatte 4 mit der Verbindungseinheit 96 ausgebildet sein.

Weiterhin umfasst das Verfahren 200 ein Anordnen 215 zumindest einer dezentralen Auswerteeinheit 32 an der Basiseinheit 10 zur Verarbeitung von Sensordaten des Erfassungsmittels 30. Dazu wird die dezentrale Auswerteeinheit 32 mit einer Datenleitung 35 der Basiseinheit 10 durch einen elektrisch leitfähigen Klebstoff elektrisch und mechanisch verbunden. Vorteilhafterweise kann anschließend ein Gießen 216 einer Vergussmasse 14.4 zumindest teilweise über die Basiseinheit 10 und/oder die dezentrale Auswerteeinheit 32 erfolgen, um noch ggf. vorhandene, offene Kontakte elektrisch zu isolieren. Vorzugsweise umfasst das Verfahren 200 ferner ein Aufbringen 209 einer Klebeschicht 70 auf eine Abdichtungsschicht 60 und/oder auf eine Schalldämpfungsschicht 50 und/oder auf die Basiseinheit 10. Daraufhin erfolgt ein Befestigen 210 der Abdichtungsschicht 60 und/oder der Schalldämpfungsschicht 70 auf der Basiseinheit 10 durch die Klebeschicht 70. Um eine vorteilhafte mechanische Verbindung der Heizmatte 4 mit weiteren Bauelementen zu erreichen, kann ferner die Klebeschicht 70 ein Klebeband 71 umfassen, welches durch Einritzen 211 in zumindest zwei getrennt verwendbare Klebebereiche 71.1, 71.2 unterteilbar sein kann. Ferner kann das Verfahren 200 ein Zuschneiden 212 zumindest des ersten und/oder zweiten Trägerelementes 11 umfassen. Es ist denkbar, dass der Verbund aus Basiseinheit 10, Abdichtungsschicht 60 und Schalldämpfungsschicht 50 gemeinsam zur Definition der äußeren Form zugeschnitten wird, so dass eine Standardgröße und/oder eine an den Raum 101 Form der Heizmatte 4 entsteht. Zusätzlich oder alternativ kann das Zwischenelement 16 als Schalldämpfungsschicht 50 ausgebildet sein.

Die voranstehende Erläuterung der Ausführungsformen schreibt die vorliegende Erfindung ausschließlich im Rahmen von Beispielen.

### Bezugszeichenliste

- 1.1: Flächenheizung
- 1.2: Flächensensorik
- 2: Energiequelle
- 3: Ereignis
- 4: Heizmatte
- 4.1: Masterelement

- 10: Basiseinheit
- 11: Trägerelement
- 11.1: erste Grundseite
- 11.2: zweite Grundseite
- 12: Randbereich
- 13: Mittenbereich
- 14.1: erste Schutzschicht
- 14.2: zweite Schutzschicht
- 14.3: weitere Schutzschicht
- 14.4: Vergussmasse
- 15: Soll-Schnittlinie
- 16: Zwischenelement

- 20: elektrisches Heizmittel
- 21: Widerstandselement
- 21.1: Kohlenstoff
- 21.2: Füllstoff
- 22: Steuereinheit
- 23: Heizleitelement
- 24: Temperatursensor
- 25: Anschlussabschnitt

- 30: Erfassungsmittel
- 30.1: Sensorelement
- 31: Elektrode
- 31.1: Sensormaterial
- 32: dezentrale Auswerteeinheit
- 33: zentrales Steuergerät
- 34: Erfassungsbereich
- 35: Datenleitung
- 35.1: Ringabschnitt
- 35.2: Versorgungsabschnitt
- 36: Datenanschluss
- 37: Durchgangselement

- 40: elektrischer Anschluss
- 40.1: elektrische Verbindung
- 41: Verbindungsschnittstelle
- 41.1: Ausrichtmittel
- 42: Leiterbahn
- 43: Gegenverbindungsschnittstelle
- 44: Befestigungsschnittstelle
- 45: Heizanschluss
- 46: Ausnehmung

- 50: Schalldämpfungsschicht

- 60: Abdichtungsschicht
- 60.1: Faserschicht

- 70: Klebeschicht
- 71: Klebeband
- 71.1: erster Klebebereich
- 71.2: zweiter Klebebereich

- 80: externe Recheneinheit
- 81: mobiles Endgerät

- 90: Verbindungsmittel
- 93: Gegenverbindungsmittel
- 96: Verbindungseinheit
- 97: Verbindungskörper
- 97.1: erster Kontaktabschnitt
- 97.2: zweiter Kontaktabschnitt
- 97.3: erstes Kontaktelement
- 97.4: zweites Kontaktelement
- 97.5: Gegenpositionierhilfe
- 98: Befestigungskörper
- 99: Magnet

- 100: Gebäude
- 101: Raum
- 102: Bauelement
- 103: Funktionsbelag
- 104: Sichtbelag
- 110: Begrenzungselement

- 200: Verfahren zur Herstellung einer Heizmatte

- A: Biegewinkel
- R: Biegeradius
- T1-Tn: Zeitpunkte

## Patentansprüche

1. Heizmatte (4) für eine Flächenheizung (1.1), insbesondere zum Heizen eines Raumes (101) eines Gebäudes (100), aufweisend
eine flexible Basiseinheit (10) mit einem ersten Trägerelement (11), welches eine flächige Erstreckung mit einer ersten Grundseite (11.1) und einer zweiten Grundseite (11.2) aufweist, und zumindest einem elektrischen Heizmittel (20) zur Abgabe von Wärme,
wobei das elektrische Heizmittel (20) auf der ersten Grundseite (11.1) des ersten Trägerelementes (11) derart angeordnet ist, dass die Basiseinheit (10) zur Ausgestaltung der Flächenheizung (1.1) flächig verlegbar ist,
**dadurch gekennzeichnet,**
**dass** die Basiseinheit (10) ein Erfassungsmittel (30) zur Detektion einer Aktivität einer Person aufweist,
wobei das Erfassungsmittel (30) zumindest eine Elektrode (31) zur kapazitiven Detektion der Aktivität der Person aufweist,
wobei mehrere Sensorelemente (30.1) des Erfassungsmittels (30) in einem regelmäßigen Verteilungsmuster angeordnet sind, wobei jedem Sensorelement (30.1) zumindest eine Elektrode (31) zugeordnet ist,
wobei die Heizmatte (4) ein Heizmodul bildet, welches zusammen mit weiteren Heizmodulen zur Ausgestaltung der Flächenheizung (1.1) verbindbar ist.

2. Heizmatte (4) nach Anspruch 1,
**dadurch gekennzeichnet,**
**dass** das elektrische Heizmittel (20) stoffschlüssig mit dem ersten Trägerelement (11) verbunden ist, insbesondere wobei das elektrische Heizmittel (20) direkt oder indirekt auf das erste Trägerelement (11), vorzugsweise durch einen Siebdruck, aufgedruckt ist, und/oder dass das elektrische Heizmittel (20) zumindest ein Widerstandselement (21) aufweist, welches sich auf der ersten Grundseite (11.1) des ersten Trägerelementes (11) erstreckt, insbesondere wobei das Widerstandselement (21) flächig, vorzugsweise plattenartig, ausgestaltet ist insbesondere wobei das Widerstandselement (21) eine ausgehärtete Karbonpaste aufweist, insbesondere wobei die Karbonpaste einen Kohlenstoff (21.1) und/oder einen Füllstoff (21.2) aufweist.

3. Heizmatte (4) nach einem der vorhergehenden Ansprüche,
**dadurch gekennzeichnet,**
**dass** die Basiseinheit (10) biegbar ist, wobei ein erreichbarer Biegewinkel (A) der Basiseinheit (10) größer oder gleich 10°, vorzugsweise größer oder gleich 45°, besonders bevorzugt größer oder gleich 90°, ist.

4. Heizmatte (4) nach einem der vorhergehenden Ansprüche,
**dadurch gekennzeichnet,**
**dass** die Basiseinheit (10) ein zweites Trägerelement (11) aufweist, an welchem das Erfassungsmittel (30) angeordnet ist, insbesondere wobei das Heizmittel (20) und/oder das Erfassungsmittel (30) zwischen dem ersten und dem zweiten Trägerelement (11) angeordnet ist und/oder zwischen dem ersten und zweiten Trägerelement (11) ein Zwischenelement (16) angeordnet ist, durch welches das erste Trägerelement (11) vom zweiten Trägerelement (11) zumindest abschnittsweise, vorzugsweise vollständig, beabstandet ist, insbesondere wobei das Zwischenelement (16) als Schalldämpfungsschicht (50) ausgebildet ist.

5. Heizmatte (4) nach einem der vorhergehenden Ansprüche,
**dadurch gekennzeichnet,**
**dass** das Erfassungsmittel (30) stoffschlüssig mit dem ersten und/oder zweiten Trägerelement (11) verbunden ist, insbesondere wobei das Erfassungsmittel (30) auf das erste und/oder zweite Trägerelement (11), vorzugsweise durch einen Siebdruck, aufgedruckt ist, und/oder dass das Erfassungsmittel (30) zumindest zwei, vorzugsweise vier, Sensorelemente (30.1) mit jeweils einem Erfassungsbereich (34) aufweist.

6. Heizmatte (4) nach einem der vorhergehenden Ansprüche,
**dadurch gekennzeichnet,**
**dass** das Erfassungsmittel (30) zumindest zwei Elektroden (31) aufweist, durch welche gemeinsam ein elektrisches Feld zur kapazitiven Detektion der Aktivität der Person generierbar ist, und/oder dass das Erfassungsmittel (30) eine Elektrode (31) aufweist, die als Schirmelektrode zur Begrenzung eines elektrischen Feldes ausgebildet ist, und/oder dass das erste und/oder zweite Trägerelement (11) einen Kunststoff, vorzugsweise einen thermoplastischen Kunststoff, besonders bevorzugt ein Polyester, aufweist oder aus einem Kunststoff, vorzugsweise einem thermoplastischen Kunststoff, besonders bevorzugt einem Polyester, besteht.

7. Heizmatte (4) nach einem der vorhergehenden Ansprüche,
**dadurch gekennzeichnet,**
**dass**, insbesondere auf der ersten und/oder zweiten Grundseite (11.1, 11.2) des ersten und/oder zweiten Trägerelementes (11), an der Basiseinheit (10) eine Schalldämpfungsschicht (50) angeordnet ist, und/oder dass, insbesondere auf der ersten Grundseite (11.1) des ersten Trägerelementes (11) und/oder am zweiten Trägerelement (11), eine Abdichtungsschicht (60) an der Basiseinheit (10) angeordnet ist, insbesondere wobei die Abdichtungsschicht (60) zumindest eine Faserschicht (60.1) und/oder einen Vliesstoff aufweist.

8. Heizmatte (4) nach einem der vorhergehenden Ansprüche,
**dadurch gekennzeichnet,**
**dass** die Abdichtungsschicht (60) und/oder die Schalldämpfungsschicht (50) mit einer Klebeschicht (70) an der Basiseinheit (10) befestigt ist.

9. Heizmatte (4) nach einem der vorhergehenden Ansprüche,
**dadurch gekennzeichnet,**
**dass** das elektrische Heizmittel (20) zumindest bereichsweise durch eine erste elektrisch isolierende Schutzschicht (14.1) und/oder das Erfassungsmittel (30) zumindest bereichsweise durch eine zweite elektrisch isolierende Schutzschicht (14.2) überdeckt ist, insbesondere wobei die erste und/oder die zweite elektrisch isolierende Schutzschicht (14.1, 14.2) einen Fotolack aufweist.

10. Heizmatte (4) nach einem der vorhergehenden Ansprüche,
**dadurch gekennzeichnet,**
**dass** die Basiseinheit (10) zumindest einen elektrischen Anschluss (40), insbesondere zum Anschluss an eine Energiequelle (2) und/oder an eine Steuereinheit (22), aufweist, insbesondere wobei der elektrische Anschluss (40) ein Verbindungsmittel (90) zum reversiblen Verbinden des elektrischen Heizmittels (20) und/oder des Erfassungsmittels (30) mit der Energiequelle (2) und/oder der Steuereinheit (22) aufweist.

11. Heizmatte (4) nach einem der vorhergehenden Ansprüche,
**dadurch gekennzeichnet,**
**dass** der elektrische Anschluss (40) eine Verbindungsschnittstelle (41) zum Verbinden des elektrischen Heizmittels (20) und/oder des Erfassungsmittels (30) mit einer Verbindungseinheit (96) zum Verbinden der Verbindungsschnittstelle (41) mit einer Gegenverbindungsschnittstelle (43) aufweist, insbesondere wobei die Verbindungsschnittstelle (41) zumindest ein Ausrichtmittel (41.1) umfasst, durch welches eine Fehlstellung der Verbindungseinheit (96) verhinderbar ist.

12. Heizmatte (4) nach einem der vorhergehenden Ansprüche,
**dadurch gekennzeichnet,**
**dass** die Verbindungsschnittstelle (41) eine Ausnehmung (46) in der Basiseinheit (10) zur Aufnahme der Verbindungseinheit (96) umfasst, insbesondere wobei die Ausnehmung (46) durch das erste und/oder zweite Trägerelement (11) zumindest teilweise begrenzt wird, und/oder dass der elektrische Anschluss (40) einen Heizanschluss (45), welcher mit dem elektrischen Heizmittel (20) verbunden ist, und/oder einen Datenanschluss (36), welcher mit dem Erfassungsmittel (30) verbunden ist, umfasst, und/oder dass der elektrische Anschluss (40) in einem Randbereich (12) der Basiseinheit (10) angeordnet ist, insbesondere wobei das elektrische Heizmittel (20) durch zumindest eine Leiterbahn (42) mit dem elektrischen Anschluss (40) verbunden ist und/oder wobei das elektrische Heizmittel (20) in einem Mittenbereich (13) des ersten Trägerelementes (11) angeordnet ist.

13. Heizmatte (4) nach einem der vorhergehenden Ansprüche,
**dadurch gekennzeichnet,**
**dass** das elektrische Heizmittel (20) ein Heizleitelement (23) aufweist, durch welches das Widerstandselement (21) mit der Leiterbahn (42) verbunden ist, insbesondere wobei das Heizleitelement (23) direkt auf dem ersten Trägerelement (11) angeordnet ist, und/oder dass die Leiterbahn (42) stoffschlüssig mit dem ersten Trägerelement (11) verbunden ist, insbesondere wobei die Leiterbahn (42) auf das erste Trägerelement (11) aufgedruckt ist.

14. Heizmatte (4) nach einem der vorhergehenden Ansprüche,
**dadurch gekennzeichnet,**
**dass** die Leiterbahn (42), insbesondere im Randbereich (12) der Basiseinheit (10), umlaufend am ersten Trägerelement (11) angeordnet ist.

15. Heizmatte (4) nach einem der vorhergehenden Ansprüche,
**dadurch gekennzeichnet,**
**dass** die Sensorelemente (30.1) des Erfassungsmittels (30) in dem regelmäßigen Verteilungsmuster auf der zweiten Grundseite (11.2) des ersten Trägerelementes (11) und/oder am zweiten Trägerelement (11) angeordnet sind, und/oder dass mehrere Widerstandselemente (21) des elektrischen Heizmittels (20) in einem regelmäßigen Verteilungsmuster, insbesondere auf der ersten Grundseite (11.1) des ersten Trägerelementes (11) und/oder am zweiten Trägerelement (11), angeordnet sind.

16. Heizmatte (4) nach einem der vorhergehenden Ansprüche,
**dadurch gekennzeichnet,**
**dass** das Erfassungsmittel (30) mit zumindest einer dezentralen Auswerteeinheit (32), insbesondere zur Verarbeitung von Sensordaten des Erfassungsmittels (30), verbunden ist, insbesondere wobei jedes der Sensorelemente (30.1) mit jeweils einer dezentralen Auswerteeinheit (32) verbunden ist oder wobei die dezentrale Auswerteeinheit (32) mit jedem der Sensorelemente (30.1) der Heizmatte (4) verbunden ist.

17. Heizmatte (4) nach einem der vorhergehenden Ansprüche,
**dadurch gekennzeichnet,**
**dass** das Erfassungsmittel (30) und/oder die dezentrale Auswerteeinheit (30) mit einem zentralen Steuergerät (33) verbindbar ist.

18. Heizmatte (4) nach einem der vorhergehenden Ansprüche,
**dadurch gekennzeichnet,**
**dass** die dezentrale Auswerteeinheit (32) auf der ersten Grundseite (11.1) oder der zweiten Grundseite (11.2) des ersten Trägerelementes (11) an der Basiseinheit (10) angeordnet ist, insbesondere wobei die dezentrale Auswerteinheit (32) zumindest teilweise in die Schalldämpfungsschicht (50) eingebettet ist, und/oder dass die Basiseinheit (10) zumindest eine Datenleitung (35) aufweist, welche mit dem Erfassungsmittel (30) und/oder mit der dezentralen Auswerteeinheit (32) in Kommunikationsverbindung steht, insbesondere wobei die Datenleitung (35) an dem ersten und/oder zweiten Trägerelement (11) angeordnet ist.

19. Heizmatte (4) nach einem der vorhergehenden Ansprüche,
**dadurch gekennzeichnet,**
**dass** sich die dezentrale Auswerteinheit (32) zumindest teilweise in eine Aufnahmeöffnung des Zwischenelementes (16) erstreckt und/oder dass durch die dezentrale Auswerteeinheit (32) zumindest ein Sensorelement (30.1) des Erfassungsmittels (30) mit der Datenleitung (35) verbunden ist.

20. Heizmatte (4) nach einem der vorhergehenden Ansprüche,
**dadurch gekennzeichnet,**
**dass** die dezentrale Auswerteeinheit (32) und/oder das Heizmittel (20) mit dem elektrischen Anschluss (40) durch einen Anschlussabschnitt (25) elektrisch verbunden ist, insbesondere wobei durch den Anschlussabschnitt (25) zumindest eine Datenleitung (35) und/oder zumindest ein Teil einer Leiterbahn (42) ausgebildet ist.

21. Heizmatte (4) nach einem der vorhergehenden Ansprüche,
**dadurch gekennzeichnet,**
**dass** mehrere elektrische Anschlüsse (40), insbesondere zum Anschluss an eine Energiequelle (2) und/oder an eine Steuereinheit (22), in einem Randbereich (12) der Basiseinheit (10) angeordnet sind, insbesondere wobei sich mehrere Anschlussabschnitte (25) von der dezentralen Auswerteeinheit (32), vorzugsweise kreuzartig, zu den elektrischen Anschlüssen (40) erstrecken.

22. Heizmatte (4) nach einem der vorhergehenden Ansprüche,
**dadurch gekennzeichnet,**
**dass** die Datenleitung (35) einen zumindest teilweise um einen Mittenbereich (13) der Basiseinheit (10) umlaufenden Ringabschnitt (35.1) aufweist, insbesondere wobei die Datenleitung (35) einen Versorgungsabschnitt (35.2) aufweist, welcher zumindest teilweise in dem Mittenbereich (13) angeordnet ist, und/oder dass die Datenleitung (35) mit einem Datenanschluss (36) verbunden ist, welcher von außerhalb der Basiseinheit (10) zugänglich ist, insbesondere wobei die Datenleitung (35) durch den Datenanschluss (36) mit dem zentralen Steuergerät (33) verbindbar sind.

23. Heizmatte (4) nach einem der vorhergehenden Ansprüche,
**dadurch gekennzeichnet,**
**dass** die Datenleitung (35) über den Ringabschnitt (35.1) mit mehreren Datenanschlüssen (36) verbunden ist, welche in einem Randbereich (12) der Basiseinheit (10) angeordnet sind, und/oder dass das elektrische Heizmittel (20) und/oder die Leiterbahn (42) und/oder die Datenleitung (35) und/oder das Erfassungsmittel (30) ein Edelmetall, insbesondere Silber, aufweist.

24. Flächenheizung (1.1) zum Heizen eines Raumes (101) eines Gebäudes (100),
**dadurch gekennzeichnet,**
**dass** zumindest eine Heizmatte (4) nach einem der vorhergehenden Ansprüche flächig auf einem Bauelement (102) des Gebäudes (100) verlegt ist.

25. Verfahren (200) zur Herstellung einer Heizmatte (4) nach einem der Ansprüche 1 bis 23 für eine Flächenheizung (1.1), insbesondere zum Heizen eines Raumes (101) eines Gebäudes (100), umfassend folgende Schritte:
- Bereitstellen (201) eines ersten Trägerelementes (11), welches eine flächige Erstreckung mit einer ersten Grundseite (11.1) und einer zweiten Grundseite (11.2) aufweist,
- Erstellen (203) einer flexiblen Basiseinheit (10), wobei ein Aufbringen (204) eines elektrischen Heizmittels (20) auf der ersten Grundseite (11.1) des ersten Trägerelementes (11) erfolgt, so dass zumindest die Basiseinheit (10) zur Ausgestaltung der Flächenheizung (1.1) flächig verlegbar ist.

## Claims

1. Heating mat (4) for a surface heating system (1.1), in particular for heating a room (101) of a building (100), comprising
a flexible base unit (10) with a first carrier element (11), which has a planar extension with a first base side (11.1) and a second base side (11.2), and at least one electrical heating means (20) for emitting heat,
wherein the electrical heating means (20) is arranged on the first base side (11.1) of the first carrier element (11) in such a way that the base unit (10) can be laid flat to form the surface heating system (1.1),
**characterized in that**
the base unit (10) has a detection means (30) for detecting a person's activity,
wherein the detection means (30) comprises at least one electrode (31) for capacitive detection of the activity of the person,
wherein a plurality of sensor elements (30.1) of the detection means (30) are arranged in a regular distribution pattern, wherein at least one electrode (31) is assigned to each sensor element (30.1),
wherein the heating mat (4) forms a heating module which can be connected together with further heating modules to form the surface heating system (1.1).

2. Heating mat (4) according to claim 1,
**characterized in that**
the electrical heating means (20) is connected to the first carrier element (11) by material bond, in particular wherein the electrical heating means (20) is printed directly or indirectly onto the first carrier element (11), preferably by screen printing, and/or **in that** the electrical heating means (20) has at least one resistance element (21) which extends on the first base side (11.1) of the first carrier element (11), in particular wherein the resistance element (21) is designed to be flat, preferably plate-like, in particular wherein the resistance element (21) comprises a hardened carbon paste, in particular wherein the carbon paste comprises a carbon (21.1) and/or a filler (21.2).

3. Heating mat (4) according to one of the preceding claims,
**characterized in that**
the base unit (10) is bendable, wherein an achievable bending angle (A) of the base unit (10) is greater than or equal to 10°, preferably greater than or equal to 45°, particularly preferably greater than or equal to 90°.

4. Heating mat (4) according to one of the preceding claims,
**characterized in that**
the base unit (10) has a second carrier element (11) on which the detection means (30) is arranged, in particular wherein the heating means (20) and/or the detection means (30) is arranged between the first and the second carrier element (11) and/or an intermediate element (16) is arranged between the first and the second carrier element (11), by means of which the first carrier element (11) is spaced apart from the second carrier element (11) at least in sections, preferably completely, in particular wherein the intermediate element (16) is designed as a sound-absorbing layer (50).

5. Heating mat (4) according to one of the preceding claims,
**characterized in that**
the detection means (30) is connected to the first and/or second carrier element (11) by a material bond, in particular wherein the detection means (30) is printed on the first and/or second carrier element (11), preferably by screen printing, and/or **in that** the detection means (30) has at least two, preferably four, sensor elements (30.1), each with a detection area (34).

6. Heating mat (4) according to one of the preceding claims,
**characterized in that**
the detection means (30) has at least two electrodes (31) by means of which an electric field can be generated jointly for capacitive detection of the activity of the person, and/or in that the detection means (30) has an electrode (31) which is designed as a shield electrode for limiting an electric field, and/or **in that** the first and/or second carrier element (11) has a plastic, preferably a thermoplastic, particularly preferably a polyester, or consists of a plastic, preferably a thermoplastic, particularly preferably a polyester.

7. Heating mat (4) according to one of the preceding claims,
**characterized in that,**
in particular on the first and/or second base side (11.1, 11.2) of the first and/or second carrier element (11), a sound-absorbing layer (50) is arranged on the base unit (10), and/or **in that**, in particular on the first base side (11.1) of the first carrier element (11) and/or on the second carrier element (11), a sealing layer (60) is arranged on the base unit (10), in particular wherein the sealing layer (60) has at least one fiber layer (60.1) and/or a nonwoven material.

8. Heating mat (4) according to one of the preceding claims,
**characterized in that**
the sealing layer (60) and/or the sound-absorbing layer (50) is attached to the base unit (10) by means of an adhesive layer (70).

9. Heating mat (4) according to one of the preceding claims,
**characterized in that**
the electrical heating means (20) is covered at least in some areas by a first electrically insulating protective layer (14.1) and/or the detection means (30) is covered at least in some areas by a second electrically insulating protective layer (14.2), in particular wherein the first and/or the second electrically insulating protective layer (14.1, 14.2) comprises a photoresist.

10. Heating mat (4) according to one of the preceding claims,
**characterized in that**
the base unit (10) has at least one electrical connection (40), in particular for connection to an energy source (2) and/or to a control unit (22), in particular wherein the electrical connection (40) has a connection means (90) for reversibly connecting the electrical heating means (20) and/or the detection means (30) to the energy source (2) and/or the control unit (22).

11. Heating mat (4) according to one of the preceding claims,
**characterized in that**
the electrical connection (40) has a connection interface (41) for connecting the electrical heating means (20) and/or the detection means (30) to a connection unit (96) for connecting the connection interface (41) to a mating connection interface (43), in particular wherein the connection interface (41) comprises at least one alignment means (41.1), by means of which a misalignment of the connection unit (96) can be prevented.

12. Heating mat (4) according to one of the preceding claims,
**characterized in that**
the connection interface (41) comprises a recess (46) in the base unit (10) for receiving the connection unit (96), in particular wherein the recess (46) is at least partially delimited by the first and/or second carrier element (11), and/or **in that** the electrical connection (40) comprises a heating connection (45), which is connected to the electrical heating means (20), and/or a data connection (36) which is connected to the detection means (30), and/or **in that** the electrical connection (40) is arranged in an edge region (12) of the base unit (10), in particular wherein the electrical heating means (20) is connected to the electrical connection (40) by at least one conductor track (42) and/or wherein the electrical heating means (20) is arranged in a center region (13) of the first carrier element (11).

13. Heating mat (4) according to one of the preceding claims,
**characterized in that**
the electrical heating means (20) has a conductive heating element (23), by means of which the resistance element (21) is connected to the conductor track (42), in particular wherein the conductive heating element (23) is arranged directly on the first carrier element (11), and/or **in that** the conductor track (42) is connected to the first carrier element (11) in a materially bonded manner, in particular wherein the conductor track (42) is printed on the first carrier element (11).

14. Heating mat (4) according to one of the preceding claims,
**characterized in that**
the conductor track (42), in particular in the edge region (12) of the base unit (10), is arranged circumferentially on the first carrier element (11).

15. Heating mat (4) according to one of the preceding claims,
**characterized in that**
the sensor elements (30.1) of the detection means (30) are arranged in the regular distribution pattern on the second base side (11.2) of the first carrier element (11) and/or on the second carrier element (11), and/or **in that** a plurality of resistance elements (21) of the electrical heating means (20) are arranged in a regular distribution pattern, in particular on the first base side (11.1) of the first carrier element (11) and/or on the second carrier element (11).

16. Heating mat (4) according to one of the preceding claims,
**characterized in that**
the detection means (30) is connected to at least one decentralized evaluation unit (32), in particular for processing sensor data of the detection means (30), in particular wherein each of the sensor elements (30.1) is connected to a respective decentralized evaluation unit (32) or wherein the decentralized evaluation unit (32) is connected to each of the sensor elements (30.1) of the heating mat (4).

17. Heating mat (4) according to one of the preceding claims,
**characterized in that**
the detection means (30) and/or the decentralized evaluation unit (32) can be connected to a central control unit (33).

18. Heating mat (4) according to one of the preceding claims,
**characterized in that**
the decentralized evaluation unit (32) is arranged on the first base side (11.1) or the second base side (11.2) of the first carrier element (11) on the base unit (10), in particular wherein the decentralized evaluation unit (32) is at least partially embedded in the sound-absorbing layer (50), and/or **in that** the base unit (10) has at least one data line (35) which is in communication with the detection means (30) and/or with the decentralized evaluation unit (32), in particular wherein the data line (35) is arranged on the first and/or second carrier element (11).

19. Heating mat (4) according to one of the preceding claims,
**characterized in that**
the decentralized evaluation unit (32) extends at least partially into a receiving opening of the intermediate element (16) and/or **in that** at least one sensor element (30.1) of the detection means (30) is connected to the data line (35) by the decentralized evaluation unit (32).

20. Heating mat (4) according to one of the preceding claims,
**characterized in that**
the decentralized evaluation unit (32) and/or the heating means (20) is electrically connected to the electrical connection (40) by a connection section (25), in particular at least one data line (35) and/or at least part of a conductor track (42) being formed by the connection section (25).

21. Heating mat (4) according to one of the preceding claims,
**characterized in that**
a plurality of electrical connections (40), in particular for connection to an energy source (2) and/or to a control unit (22), are arranged in an edge region (12) of the base unit (10), in particular wherein a plurality of connection sections (25) extend from the decentralized evaluation unit (32), preferably in a cross-like manner, to the electrical connections (40).

22. Heating mat (4) according to one of the preceding claims,
**characterized in that**
the data line (35) has a ring section (35.1) running at least partially around a central region (13) of the base unit (10), in particular wherein the data line (35) has a supply section (35.2) which is arranged at least partially in the central region (13), and/or **in that** the data line (35) is connected to a data connection (36) which is accessible from outside the base unit (10), in particular wherein the data line (35) can be connected to the central control unit (33) through the data connection (36).

23. Heating mat (4) according to one of the preceding claims,
**characterized in that**
the data line (35) is connected via the ring section (35.1) to a plurality of data connections (36), which are arranged in an edge region (12) of the base unit (10), and/or in that the electrical heating means (20) and/or the conductor track (42) and/or the data line (35) and/or the detection means (30) has a precious metal, in particular silver.

24. Surface heating system (1.1) for heating a room (101) of a building (100),
**characterized in that**
at least one heating mat (4) according to one of the preceding claims is laid flat on a structural element (102) of the building (100).

25. Method (200) for manufacturing a heating mat (4) according to one of claims 1 to 23 for a surface heating system (1.1), in particular for heating a room (101) of a building (100), comprising the following steps:
- provision (201) of a first carrier element (11), which has a planar extension with a first base side (11.1) and a second base side (11.2),
- creation (203) of a flexible base unit (10), wherein an electrical heating means (20) is applied (204) to the first base side (11.1) of the first carrier element (11), so that at least the base unit (10) can be laid over a large area to form the surface heating system (1.1).

## Revendications

1. Tapis chauffant (4) pour un chauffage de surface (1.1), en particulier pour le chauffage d'une pièce (101) d'un bâtiment (100), présentant
une unité de base flexible (10) avec un premier élément de support (11), qui présente une extension plane avec un premier côté de base (11.1) et un deuxième côté de base (11.2), et au moins un moyen de chauffage électrique (20) pour dégager de la chaleur,
le moyen de chauffage électrique (20) étant disposé sur le premier côté de base (11.1) du premier élément de support (11) de telle sorte que l'unité de base (10) puisse être posée à plat pour configurer le chauffage de surface (1.1),
**caractérisé en ce que**
l'unité de base (10) présente un moyen de détection (30) pour la détection d'une activité d'une personne,
où le moyen de détection (30) comprend au moins une électrode (31) pour la détection capacitive de l'activité de la personne,
où plusieurs éléments de détection (30.1) du moyen de détection (30) étant disposés selon un modèle de répartition régulier, au moins une électrode (31) étant associée à chaque élément de détection (30.1),
le tapis chauffante (4) formant un module de chauffage qui peut être relié ensemble avec d'autres modules de chauffage pour la configuration du chauffage de surface (1.1).

2. Tapis chauffant (4) selon la revendication 1,
**caractérisé en ce que**
le moyen de chauffage électrique (20) est relié au premier élément de support (11) par une liaison par la matière, en particulier le moyen de chauffage électrique (20) étant imprimé directement ou indirectement sur le premier élément de support (11), de préférence par sérigraphie, et/ou **en ce que** le moyen de chauffage électrique (20) présente au moins un élément de résistance (21) qui s'étend sur le premier côté de base (11.1) du premier élément de support (11), en particulier dans lequel l'élément de résistance (21) est conçu de manière plane, de préférence en forme de plaque, en particulier dans lequel l'élément de résistance (21) présente une pâte de carbone durcie, en particulier dans lequel la pâte de carbone présente un carbone (21.1) et/ou une charge (21.2).

3. Tapis chauffant (4) selon l'une des revendications précédentes,
**caractérisé en ce que**
l'unité de base (10) peut être pliée, un angle de pliage (A) réalisable de l'unité de base (10) étant supérieur ou égal à 10°, de préférence supérieur ou égal à 45°, de manière particulièrement préférée supérieur ou égal à 90°.

4. Tapis chauffant (4) selon l'une des revendications précédentes,
**caractérisé en ce que**
l'unité de base (10) présente un deuxième élément de support (11) sur lequel est disposé le moyen de détection (30), en particulier le moyen de chauffage (20) et/ou le moyen de détection (30) étant disposés entre le premier et le deuxième élément de support (11) et/ou un élément intermédiaire (16) étant disposé entre le premier et le deuxième élément de support (11), par lequel le premier élément de support (11) est espacé du deuxième élément de support (11) au moins par sections, de préférence complètement, en particulier l'élément intermédiaire (16) étant conçu comme une couche d'insonorisation (50).

5. Tapis chauffant (4) selon l'une des revendications précédentes,
**caractérisé en ce que**
le moyen de détection (30) est relié par liaison de matière au premier et/ou au deuxième élément de support (11), en particulier le moyen de détection (30) étant imprimé sur le premier et/ou le deuxième élément de support (11), de préférence par sérigraphie, et/ou en ce que le moyen de détection (30) présente au moins deux, de préférence quatre, éléments de détection (30.1) avec chacun une zone de détection (34).

6. Tapis chauffant (4) selon l'une des revendications précédentes,
**caractérisé en ce que**
le moyen de détection (30) présente au moins deux électrodes (31) par lesquelles un champ électrique peut être généré en commun pour la détection capacitive de l'activité de la personne, et/ou que le moyen de détection (30) présente une électrode (31) qui est conçue comme une électrode-écran pour limiter un champ électrique, et/ou que le premier et/ou le deuxième élément de support (11) présente une matière plastique, de préférence une matière thermoplastique, de préférence un polyester, ou est constitué d'une matière plastique, de préférence une matière thermoplastique, de préférence un polyester.

7. Tapis chauffant (4) selon l'une des revendications précédentes,
**caractérisé en ce que,**
en particulier sur le premier et/ou le deuxième côté de base (11.1, 11.2) du premier et/ou du deuxième élément de support (11), une couche d'insonorisation (50) est disposée sur l'unité de base (10), et/ou **en ce que**, en particulier sur le premier côté de base (11.1) du premier élément de support (11) et/ou sur le deuxième élément de support (11), une couche d'étanchéité (60) est disposée sur l'unité de base (10), en particulier la couche d'étanchéité (60) présentant au moins une couche de fibres (60.1) et/ou un non-tissé.

8. Tapis chauffant (4) selon l'une des revendications précédentes,
**caractérisé en ce que**
la couche d'étanchéité (60) et/ou la couche d'insonorisation (50) est fixée à l'unité de base (10) par une couche adhésive (70).

9. Tapis chauffant (4) selon l'une des revendications précédentes,
**caractérisé en ce que**
le moyen de chauffage électrique (20) est recouvert au moins par zones par une première couche de protection électriquement isolante (14.1) et/ou le moyen de détection (30) est recouvert au moins par zones par une deuxième couche de protection électriquement isolante (14.2), en particulier la première et/ou la deuxième couche de protection électriquement isolante (14.1, 14.2) présentant un vernis photosensible.

10. Tapis chauffant (4) selon l'une des revendications précédentes,
**caractérisé en ce que**
l'unité de base (10) présente au moins un raccordement électrique (40), en particulier pour le raccordement à une source d'énergie (2) et/ou à une unité de commande (22), en particulier le raccordement électrique (40) présentant un moyen de liaison (90) pour la liaison réversible du moyen de chauffage électrique (20) et/ou du moyen de détection (30) avec la source d'énergie (2) et/ou l'unité de commande (22).

11. Tapis chauffant (4) selon l'une des revendications précédentes,
**caractérisé en ce que**
le raccordement électrique (40) présente une interface de liaison (41) pour relier le moyen de chauffage électrique (20) et/ou le moyen de détection (30) à une unité de liaison (96) pour relier l'interface de liaison (41) à une interface de liaison opposée (43), en particulier l'interface de liaison (41) comprenant au moins un moyen d'alignement (41.1) par lequel une mauvaise position de l'unité de liaison (96) peut être empêchée.

12. Tapis chauffant (4) selon l'une des revendications précédentes,
**caractérisé en ce que**
l'interface de liaison (41) comprend un évidement (46) dans l'unité de base (10) pour recevoir l'unité de liaison (96), en particulier l'évidement (46) étant délimité au moins partiellement par le premier et/ou le deuxième élément de support (11), et/ou **en ce que** le raccordement électrique (40) comprend un raccordement de chauffage (45) qui est relié au moyen de chauffage électrique (20), et/ou un raccordement de données (36), qui est relié au moyen de détection (30), et/ou **en ce que** le raccordement électrique (40) est disposé dans une zone de bordure (12) de l'unité de base (10), en particulier dans lequel le moyen de chauffage électrique (20) est relié au raccordement électrique (40) par au moins une piste conductrice (42) et/ou dans lequel le moyen de chauffage électrique (20) est disposé dans une zone centrale (13) du premier élément de support (11).

13. Tapis chauffant (4) selon l'une des revendications précédentes,
**caractérisé en ce que**
le moyen de chauffage électrique (20) présente un élément conducteur de chauffage (23) par lequel l'élément de résistance (21) est relié à la piste conductrice (42), en particulier l'élément conducteur de chauffage (23) étant disposé directement sur le premier élément de support (11), et/ou **en ce que** la piste conductrice (42) est reliée au premier élément de support (11) par liaison de matière, en particulier la piste conductrice (42) étant imprimée sur le premier élément de support (11).

14. Tapis chauffant (4) selon l'une des revendications précédentes,
**caractérisé en ce que**
la piste conductrice (42), en particulier dans la zone de bordure (12) de l'unité de base (10), est disposée de manière périphérique sur le premier élément de support (11).

15. Tapis chauffant (4) selon l'une des revendications précédentes,
**caractérisé en ce que**
les éléments de détection (30.1) du moyen de détection (30) sont disposés dans le modèle de répartition régulier sur le deuxième côté de base (11.2) du premier élément de support (11) et/ou sur le deuxième élément de support (11), et/ou que plusieurs éléments de résistance (21) du moyen de chauffage électrique (20) sont disposés dans un modèle de répartition régulier, notamment sur le premier côté de base (11.1) du premier élément de support (11) et/ou sur le deuxième élément de support (11).

16. Tapis chauffant (4) selon l'une des revendications précédentes,
**caractérisé en ce que**
le moyen de détection (30) est relié à au moins une unité d'évaluation décentralisée (32), en particulier pour le traitement de données de capteur du moyen de détection (30), en particulier chacun des éléments de détection (30.1) étant relié respectivement à une unité d'évaluation décentralisée (32) ou l'unité d'évaluation décentralisée (32) étant reliée à chacun des éléments de détection (30.1) du tapis chauffant (4).

17. Tapis chauffant (4) selon l'une des revendications précédentes,
**caractérisé en ce que**
le moyen de détection (30) et/ou l'unité d'évaluation décentralisée (30) peut être relié à un appareil de commande central (33).

18. Tapis chauffant (4) selon l'une des revendications précédentes,
**caractérisé en ce que**
l'unité d'évaluation décentralisée (32) est placée sur le premier côté de base (11.1) ou le deuxième côté de base (11.2) du premier élément de support (11) est disposée sur l'unité de base (10), en particulier l'unité d'évaluation décentralisée (32) étant au moins partiellement noyée dans la couche d'insonorisation (50), et/ou **en ce que** l'unité de base (10) présente au moins une ligne de données (35) qui est en liaison de communication avec le moyen de détection (30) et/ou avec l'unité d'évaluation décentralisée (32), en particulier la ligne de données (35) étant disposée sur le premier et/ou le deuxième élément de support (11).

19. Tapis chauffant (4) selon l'une des revendications précédentes,
**caractérisé en ce que**
l'unité d'évaluation décentralisée (32) s'étend au moins partiellement dans une ouverture de réception de l'élément intermédiaire (16) et/ou **en ce qu'**au moins un élément de détection (30.1) du moyen de détection (30) est relié à la ligne de données (35) par l'unité d'évaluation décentralisée (32).

20. Tapis chauffant (4) selon l'une des revendications précédentes,
**caractérisé en ce que**
l'unité d'évaluation décentralisée (32) et/ou le moyen de chauffage (20) est relié électriquement au raccordement électrique (40) par un tronçon de raccordement (25), en particulier dans lequel au moins une ligne de données (35) et/ou au moins une partie d'une piste conductrice (42) est formée par le tronçon de raccordement (25).

21. Tapis chauffant (4) selon l'une des revendications précédentes,
**caractérisé en ce que**
plusieurs raccordements électriques (40), en particulier pour le raccordement à une source d'énergie (2) et/ou à une unité de commande (22), sont disposés dans une zone de bordure (12) de l'unité de base (10), en particulier plusieurs tronçons de raccordement (25) s'étendant de l'unité d'évaluation décentralisée (32), de préférence en croix, vers les raccordements électriques (40).

22. Tapis chauffant (4) selon l'une des revendications précédentes,
**caractérisé en ce que**
la ligne de données (35) présente un tronçon annulaire (35.1) s'étendant au moins partiellement autour d'une zone centrale (13) de l'unité de base (10), en particulier la ligne de données (35) présentant un tronçon d'alimentation (35.2) qui est disposé au moins partiellement dans la zone centrale (13), et/ou que la ligne de données (35) est reliée à un raccordement de données (36) qui est accessible de l'extérieur de l'unité de base (10), en particulier la ligne de données (35) pouvant être reliée à l'appareil de commande central (33) par le raccordement de données (36).

23. Tapis chauffant (4) selon l'une des revendications précédentes,
**caractérisé en ce que**
la ligne de données (35) est reliée, par l'intermédiaire du tronçon annulaire (35.1), à plusieurs connexions de données (36) qui sont disposées dans une zone de bordure (12) de l'unité de base (10), et/ou **en ce que** le moyen de chauffage électrique (20) et/ou la piste conductrice (42) et/ou la ligne de données (35) et/ou le moyen de détection (30) présente un métal précieux, en particulier de l'argent.

24. Chauffage de surface (1.1) pour chauffer une pièce (101) d'un bâtiment (100),
**caractérisé en ce qu'**
au moins un tapis chauffant (4) selon l'une des revendications précédentes est posée à plat sur un élément de construction (102) du bâtiment (100).

25. Procédé (200) de fabrication d'un tapis chauffant (4) selon l'une des revendications 1 à 23 pour un chauffage de surface (1.1), en particulier pour chauffer une pièce (101) d'un bâtiment (100), comprenant les étapes suivantes :
- mise à disposition (201) d'un premier élément de support (11) qui présente une extension plane avec un premier côté de base (11.1) et un deuxième côté de base (11.2),
- création (203) d'une unité de base flexible (10), une application (204) d'un moyen de chauffage électrique (20) étant effectuée sur le premier côté de base (11.1) du premier élément de support (11), de sorte qu'au moins l'unité de base (10) peut être posée à plat pour la configuration du chauffage de surface (1.1).
